(19) **Europäisches Patentamt / European Patent Office / Office européen des brevets**

(11) **EP 4 502 470 A1**

(12) **EUROPEAN PATENT APPLICATION**
published in accordance with Art. 153(4) EPC

(43) Date of publication:
05.02.2025 Bulletin 2025/06

(21) Application number: 23774792.8

(22) Date of filing: 17.03.2023

(51) International Patent Classification (IPC):
*F24C 7/04* (2021.01)   *H05B 6/12* (2006.01)

(52) Cooperative Patent Classification (CPC):
F24C 7/04; H05B 6/12

(86) International application number:
PCT/JP2023/010532

(87) International publication number:
WO 2023/182197 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2022 JP 2022048036

(71) Applicant: Sony Group Corporation
Tokyo 108-0075 (JP)

(72) Inventors:
• MURAKAMI, Tadayoshi
Tokyo 108-0075 (JP)

• ODA, Tomohito
Tokyo 108-0075 (JP)
• INOUE, Junki
Tokyo 108-0075 (JP)
• NOMOTO, Tomoko
Tokyo 108-0075 (JP)
• SHIGA, Daizo
Tokyo 108-0075 (JP)
• SHIMIZU, Yuki
Tokyo 108-0075 (JP)

(74) Representative: D Young & Co LLP
3 Noble Street
London EC2V 7BQ (GB)

(54) **INFORMATION PROCESSING DEVICE, INFORMATION PROCESSING METHOD, AND PROGRAM**

(57) The present technology relates to an information processing apparatus, an information processing method, and a program capable of enhancing reproducibility of a finish of a dish.

An information processing apparatus according to one aspect of the present technology performs: holding recipe data including at least information indicating a content of cooking work and information indicating a target state, for each of a plurality of cooking steps in which the target state is individually defined by a value of a target parameter including a parameter based on sensor data measurable at a time of cooking; and controlling the cooking work on the basis of the recipe data until a state of cooking in each of the cooking steps reaches a state defined as the target state. The present technology can be applied to a system that assists cooking in a kitchen.

*FIG. 1*

## Description

TECHNICAL FIELD

The present technology relates to an information processing apparatus, an information processing method, and a program, and more particularly, to an information processing apparatus, an information processing method, and a program capable of enhancing reproducibility of a finish of a dish.

BACKGROUND ART

Recipes referred to by general cooks usually include many ambiguous descriptions and expressions on the premise of implicit knowledge. Therefore, a cooking process changes depending on a difference in skill or interpretation of the cook, a difference in cooking instrument or cooking environment, and the like, which decreases reproducibility of a finish of a dish.

Patent Document 1 discloses a technique for assisting heating control such as heating power setting and a heating time and determination of an amount of ingredients in order to perform heating cooking according to a recipe.

Patent Document 2 discloses an electromagnetic cooker that improves accuracy of temperature management by quantitatively managing a heating temperature, a heating time, and an amount of a material.

CITATION LIST

PATENT DOCUMENT

Patent Document 1: Japanese Patent Application Laid-Open No. 2010-192274
Patent Document 2: Japanese Patent Application Laid-Open No. 2021-64513

SUMMARY OF THE INVENTION

PROBLEMS TO BE SOLVED BY THE INVENTION

For some dishes, high reproducibility cannot be achieved only by mainly managing a heating temperature and a heating time.

The present technology has been made in view of such a situation, and an object thereof is to improve reproducibility of a finish of a dish.

SOLUTIONS TO PROBLEMS

An information processing apparatus according to a first aspect of the present technology includes: a holding unit configured to hold recipe data including at least information indicating a content of cooking work and information indicating a target state, for each of a plurality of cooking steps in which the target state is individually defined by a value of a target parameter including a parameter based on sensor data measurable at a time of cooking; and a control unit configured to control the cooking work on the basis of the recipe data until a state of cooking in each of the cooking steps reaches a state defined as the target state.

An information processing apparatus according to a second aspect of the present technology includes: an information processing unit configured to create, on the basis of time-series data of sensor data measured during first cooking, recipe data including at least information indicating a content of cooking work and information indicating a target state, for each of a plurality of cooking steps in which the target state is individually defined by a value of a target parameter including a parameter based on sensor data measurable during second cooking of reproducing a dish completed by the first cooking.

In the first aspect of the present technology, recipe data is held including at least information indicating a content of cooking work and information indicating a target state, for each of a plurality of cooking steps in which the target state is individually defined by a value of a target parameter including a parameter based on sensor data measurable at a time of cooking, and the cooking work is controlled on the basis of the recipe data until a state of cooking in each of the cooking steps reaches a state defined as the target state.

In the second aspect of the present technology, on the basis of time-series data of sensor data measured during first cooking, recipe data is created including at least information indicating a content of cooking work and information indicating a target state, for each of a plurality of cooking steps in which the target state is individually defined by a value of a target parameter including a parameter based on sensor data measurable during second cooking of reproducing a dish completed by the first cooking.

BRIEF DESCRIPTION OF DRAWINGS

Fig. 1 is a diagram illustrating an overall flow of recording/reproducing processing of a cooking process.
Fig. 2 is a diagram illustrating an example of cooking based on recipe data.
Fig. 3 is a diagram illustrating a specific configuration example of a cooking assistance system.
Fig. 4 is a block diagram illustrating a general logical configuration example of the cooking assistance system.
Fig. 5 is a diagram illustrating a correspondence of configurations.
Fig. 6 is a block diagram illustrating a functional configuration example of the cooking assistance system.

Fig. 7 is a block diagram illustrating a functional configuration example of the cooking assistance system.

Fig. 8 is a view illustrating an example of information included in recipe data.

Fig. 9 is a table illustrating a specific example of information elements of recipe data.

Fig. 10 is a table illustrating a specific example of information elements of recipe data.

Fig. 11 is a flowchart for explaining a series of processing of recording cooking.

Fig. 12 is a flowchart for explaining a series of processing of recipe data creation.

Fig. 13 is a table illustrating an example of a cooking step.

Fig. 14 is a flowchart for explaining a series of processing of reproduction cooking.

Fig. 15 is a view illustrating an example of a navigation screen.

Fig. 16 is a view illustrating another display example of the navigation screen.

Fig. 17 is a view illustrating another display example of the navigation screen.

Fig. 18 is a diagram illustrating a configuration example of the cooking assistance system.

Fig. 19 is a diagram illustrating a configuration example of the cooking assistance system.

Fig. 20 is a diagram illustrating an example of reproduction cooking performed by a cooking robot.

Fig. 21 is a block diagram illustrating a configuration example of the cooking robot.

Fig. 22 is a view illustrating an example of a temperature profile.

Fig. 23 is a diagram illustrating an example of a software configuration.

Fig. 24 is a sequence diagram illustrating a processing flow in a case where heating control is performed.

Fig. 25 is a sequence diagram illustrating another processing flow in a case where heating control is performed.

Fig. 26 is a sequence diagram illustrating still another processing flow in a case where heating control is performed.

Fig. 27 is a diagram illustrating an example of a graph.

Fig. 28 is a diagram illustrating an example of a graph.

Fig. 29 is a diagram illustrating an example of a graph.

Fig. 30 is a block diagram illustrating another configuration example of the cooking assistance system.

Fig. 31 is a flowchart for explaining processing at a time of recording cooking using a temperature sensor for environment measurement.

Fig. 32 is a flowchart for explaining processing at a time of reproduction cooking using the temperature sensor for environment measurement.

Fig. 33 is a graph illustrating a relationship between an atmospheric pressure and a boiling point of water, and a relationship between an atmospheric pressure and a cooking time.

Fig. 34 is a view illustrating a state in which an IH stove on which a pot is installed is viewed from above.

Fig. 35 is a view illustrating an example of fixing a pot.

Fig. 36 is a view illustrating an example of fixing a pot.

Fig. 37 is a view illustrating a configuration example of a fixing portion.

Fig. 38 is a flowchart for explaining processing at a time of recording cooking using a load sensor.

Fig. 39 is a flowchart for explaining processing at a time of reproduction cooking using a load sensor.

Fig. 40 is a block diagram illustrating a configuration example of a computer.

MODE FOR CARRYING OUT THE INVENTION

The following is a description of modes for carrying out the present technology. The description will be given in the following order.

1. Overview of Present Technology
2. Overall Flow of Recording/Reproducing Processing
3. System Configuration
4. Details of Recording/Reproducing Processing
5. Modification

<<Overview of Present Technology>>

<Assumed Use Scene>

The present technology relates to a cooking assistance system, which is a system to assist cooking in an environment such as a kitchen. The present technology is applicable to a cooking assistance system using a heating cooker such as an IH stove.

A cooking assistance system to which the present technology is applied is provided with various sensor devices that measure a cooking state. On the basis of measurement results obtained by the sensor devices, time-series sensor data indicating a state of an ingredient and the like in a course of cooking is recorded.

Furthermore, on the basis of recipe data created using recorded data including the sensor data, assistance of cooking work is provided to a cook who intends to reproduce a dish. The assistance of cooking work is performed in order to accurately reproduce a finish of the dish.

Cooking for reproducing the finish of the dish is advanced in a state where some operations such as adjustment of heating power of a heating cooker are automated. A cook who is a user of the cooking assistance system performs work such as putting an ingredient and stirring in accordance with navigation by a UI. As will be described later, it is also possible to automate all the work leading to completion of the dish.

Note that the dish means a product completed after cooking. The cooking means a course of making a dish or an action (work) of making a dish.

<Cooking Process>

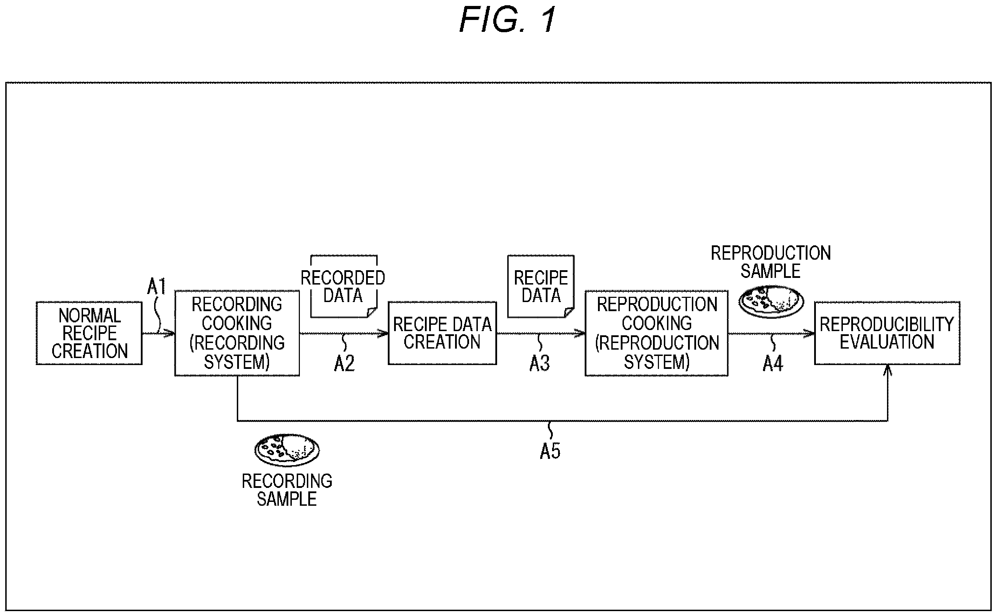

Fig. 1 is a diagram illustrating an overall flow of recording/reproducing processing of a cooking process.

As will be described in detail later, after "normal recipe creation", "recording cooking" is performed as indicated by a point of Arrow A1 in Fig. 1, and sensor data indicating a measurement result in the recording cooking is recorded.

As indicated by a point of Arrow A2, "recipe data creation" is performed on the basis of recorded data including the recorded sensor data, and recipe data is created. The recipe data is data that can be processed by a computer. Information regarding the normal recipe in the preceding stage is also used to create the recipe data.

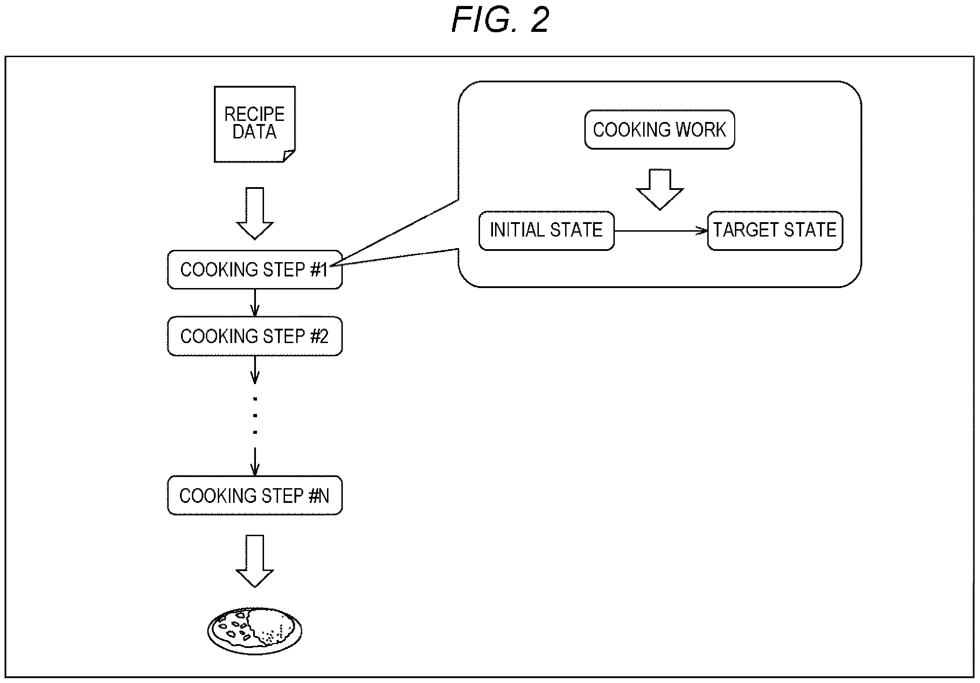

In the recipe data, contents of individual cooking steps up to completion of the dish are described as follows. Usually, one dish is completed through a plurality of cooking steps as illustrated in Fig. 2.

1. The entire cooking process includes a plurality of cooking steps that are continuous in time series
2. For each cooking step, cooking work and a target state are defined as illustrated in a balloon of Fig. 2
3. The cooking work indicates an operation on a cooking device or an ingredient
4. The target state indicates a condition for ending a certain cooking step and moving to the next cooking step

    I. The condition for moving to the next cooking step is defined using, as an index, a numerical value based on data that can be measured by the cooking assistance system
    II. A timing of reaching the condition for moving to the next cooking step is represented to enable unique identification on time-series data detectable by the cooking assistance system

5. The target state is defined by any one of time/temperature/weight (TTW) values that can be measured by the cooking assistance system. The TTW value is a value of a target parameter, which is a parameter defining the target state. The target parameter includes Temperature and Weight, which are sensor data that can be measured by the cooking assistance system, and Time that can be measured by the cooking assistance system.

    I. Time: an elapsed time [sec] from a start time of a cooking step
    II. Temperature: a temperature [°C] of a heating object or a heating medium
    III. Weight: a weight [g] of a heating object

6. An initial state is defined for each ingredient to be used in a cooking step

    I. A temperature [°C] of an ingredient at a time of putting the ingredient into a cooking instrument such as a pot
    II. A weight [g] of an ingredient to be put into a cooking instrument such as a pot

As described above, in the cooking assistance system to which the present technology is applied, for all cooking steps, recipe data is created indicating an initial state and a target state defined using an index that can be interpreted without depending on individual skills. As will be described later, the recipe data holds various types of additional information other than the information indicating the target state and the initial state.

Returning to the description of Fig. 1, as indicated by a point of Arrow A3, "reproduction cooking" for enabling reproduction of a finish of a dish with high accuracy is performed using the recipe data, and the dish is reproduced.

The reproduction cooking is performed according to the following rules.

1. Cooking work is executed at a start timing of each cooking step
2. Next cooking step is started at a timing when a target state condition of each cooking step is reached
3. An initial state at a time of putting each ingredient is matched

In order to uniquely determine a timing at which a condition of the target state of Rule 2 is reached, properties of 4-1 and 4-II described above are particularly important. Even in a case of automating determination of various conditions and cooking work, or in a case of displaying information on a UI device such as a display to leave cooking work to a cook, these rules are applied in common to cooking processes.

As indicated by points of Arrows A4 and A5 in Fig. 1, reproducibility is evaluated using the dish completed by the recording cooking and the dish completed by the reproduction cooking. Since the cooking process is performed as described above, variations in the cooking process due to a difference in skill and interpretation of the cook, a difference in cooking instrument and cooking environment, and the like are suppressed, and a dish with high reproducibility can be stably made.

<<Overall Flow of Recording/Reproducing Processing>>

Each processing in Fig. 1 will be described. The recording/reproducing processing of the cooking process includes processing of each of "normal recipe creation", "recording cooking", "recipe data creation", "reproduction cooking", and "reproducibility evaluation".

1. Normal recipe creation

The normal recipe creation is processing in which a person creates a normal recipe that is a target dish recipe in the recording/reproducing processing. A normal recipe including contents that can be understood by a cook who performs recording cooking is created using an any medium or expression.

2. Recording cooking

The recording cooking is processing in which a cook performs cooking in accordance with the normal recipe, and a recording system records data of a course of the cooking. The recording system is implemented by the cooking assistance system. Time-series data of the TTW values measured by the sensor and the like are recorded as recorded data. The dish completed by the recording cooking is referred to as a "recording sample".

3. Recipe data creation

The recipe data creation is processing in which the cooking assistance system creates recipe data to be used for reproduction cooking on the basis of the recorded data. The creation of recipe data is appropriately performed on the basis of data input by a person. The recipe data is recorded as digital data, and used as an input of a reproduction system at a time of reproduction cooking. Furthermore, the recipe data is also used to present information that can be understood by a person, as necessary.

4. Reproduction cooking

The reproduction cooking is processing in which the reproduction system controls the cooking device and the like in accordance with the recipe data and presents information regarding cooking work to a cook on the basis of the recipe data.
According to the presented information, the cook performs cooking work in the reproduction system. The reproduction system is also implemented by the cooking assistance system. The dish completed by the reproduction cooking is referred to as a "reproduction sample".

5. Reproducibility evaluation

Reproducibility evaluation is processing of evaluating reproducibility of the reproduction sample by comparing the recording sample completed by the recording cooking with the reproduction sample completed by the reproduction cooking.

<<System Configuration>>

<Specific Configuration Example of Cooking Assistance System>

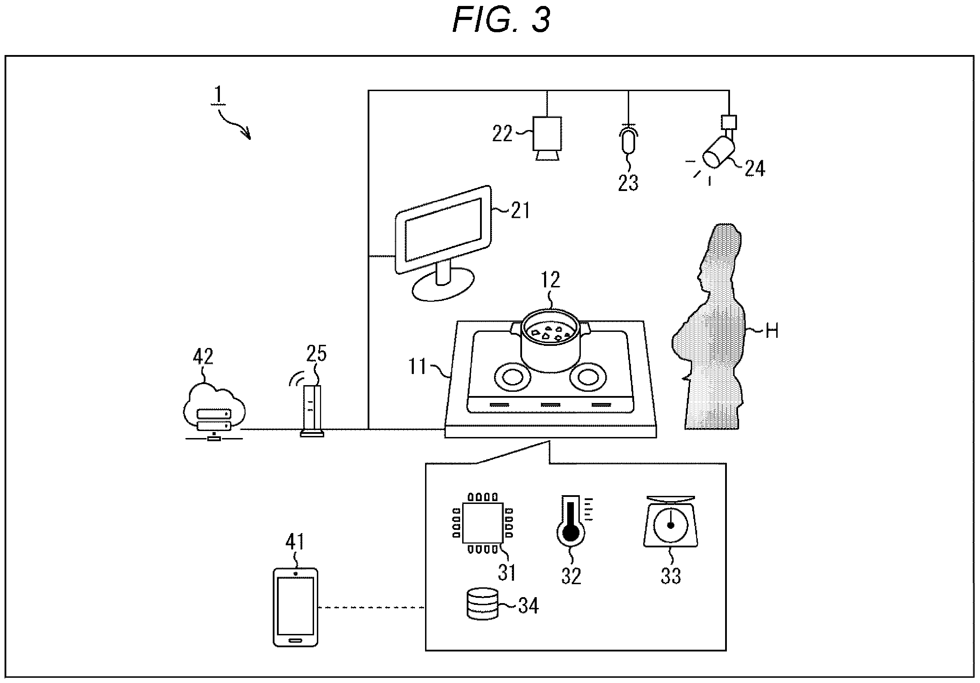

Fig. 3 is a diagram illustrating a specific configuration example of the cooking assistance system.
A cooking assistance system 1 of Fig. 3 is a type of so-called smart cooking device. The cooking assistance system 1 assists heating cooking using cooking instruments such as a pot and a frying pan. Note that the cooking instruments are instruments handled by a cook, such as a pot, a frying pan, and a spatula. The cooking device includes an electrically driven device such as an IH stove in addition to the cooking instruments.
The cooking assistance system 1 is configured by connecting a display 21, a camera 22, a microphone 23, a lighting device 24, and a router 25, to an IH stove 11. Each device is connected to a processor 31 by wired communication or wireless communication such as wireless LAN.
The IH stove 11 is an electromagnetic cooker, and heats a cooking instrument 12 such as a pot or a frying pan. Hereinafter, the description will be made on assumption that the cooking instrument 12 is a pot.
As illustrated in a balloon of Fig. 3, the IH stove 11 incorporates the processor 31, a temperature sensor 32, a weight sensor 33, and a storage 34.
The processor 31 is an arithmetic unit that performs heating control of the cooking instrument 12. Furthermore, the processor 31 controls each device constituting the cooking assistance system 1, and communicates with an external device, a Web server 42, and the like. Communication with the Web server 42 is performed via the router 25.
Moreover, the processor 31 detects an instruction or an action of a cook H input via an input UI such as the microphone 23. The processor 31 also controls image capture conditions of the camera 22 by adjusting brightness of the lighting device 24, and the like.
The temperature sensor 32 measures a temperature of the pot or a temperature of a cooking object in the pot. In this case, the pot is a heating medium, and an ingredient that is the cooking object in the pot is a heating object. As the temperature sensor 32, for example, a radiation thermometer (infrared sensor) having good responsiveness and capable of non-contact measurement is used. Both the temperature of the pot and the temperature of the cooking object may be measured by the temperature sensor 32.

The weight sensor 33 measures a weight of the cooking object in the pot. As the weight sensor 33, for example, a force gauge is used. The weight sensor 33 is provided, for example, under a top plate of the IH stove 11.

The display 21 displays various screens under the control of the processor 31. For example, the display 21 is provided near the IH stove 11. Various types of information are presented to the cook H by using display of the display 21. The display 21 includes an image display device such as a liquid crystal monitor or a projector. A wearable display such as AR glasses may be used as the display 21.

Instead of the display 21 or together with the display 21, an information presentation device for a sensation other than vision, such as a speaker or a haptic device, may be prepared in the cooking assistance system 1 as an output UI device.

The camera 22 captures an image of a state of the cooking object in the pot. For example, the camera 22 is installed above the IH stove 11 with an angle of view facing the pot. A video image captured by the camera 22 is transmitted to the processor 31 in real time. As the camera 22, for example, a normal visible light camera is used. Not only the visible light camera but also a thermographic camera and a hyperspectral camera can be installed as the camera 22.

Note that, as a variation of a physical configuration, a sensor device such as the temperature sensor 32 or the weight sensor 33 may be incorporated in the pot that is the heating medium.

As a device for inputting various types of information to the cooking assistance system 1 as described above, a smartphone 41 is used in addition to the microphone 23. Another portable terminal such as a tablet terminal may be used for input. Information input by the cook H by using the smartphone 41 is acquired by, for example, the processor 31. Control of each device is appropriately performed by the processor 31 according to the input by the cook H.

<General Configuration Example of Cooking Assistance System>

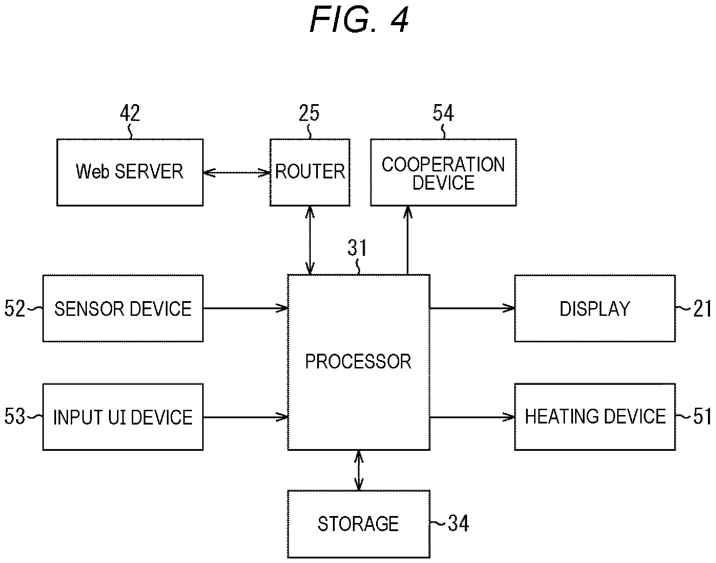

Fig. 4 is a block diagram illustrating a general logical configuration example of the cooking assistance system 1.

Each block illustrated in Fig. 4 indicates a unit of a logical function, and does not indicate a physical configuration. One logical function may be configured by one physical device or may be configured by a plurality of physical devices.

In a case where one logical function is configured by one physical device, the block of the logical function in Fig. 4 is denoted by the same reference numeral as that of the corresponding physical device in Fig. 3. In a case where one logical configuration is configured by a plurality of devices, the individual devices may be located at distant positions and connected via a communication path. The communication path may be a wired communication path or a wireless communication path.

One physical device may be responsible for multiple logical functions. There may be multiple logical functions in the system regardless of a same type or different types. Main logical functions will be described.

A heating device 51 implements a function of heating a cooking object. In the cooking assistance system 1, regardless of whether heating power setting (heat quantity setting) is manual or automatic, the processor 31 always detects intensity of heating.

A sensor device 52 includes all sensor devices that detect a state of a cooking object.

An input UI device 53 includes a user interface (UI) corresponding to an input device among UIs between with the cook H.

A cooperation device 54 is any device constituting the cooking environment. An action of the cooperation device 54 is also controlled by performing communication with the processor 31. As the cooperation device 54, for example, lighting and air conditioning of a kitchen are prepared.

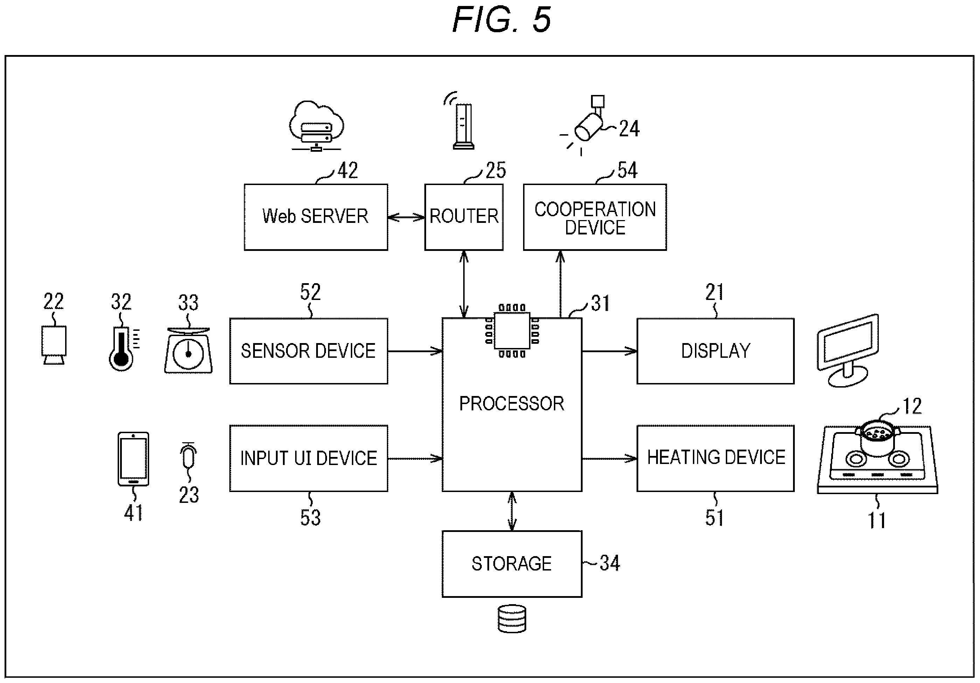

Fig. 5 illustrates a correspondence between the physical components in Fig. 3 and the logical functions in Fig. 4.

<Details of Functional Configuration>

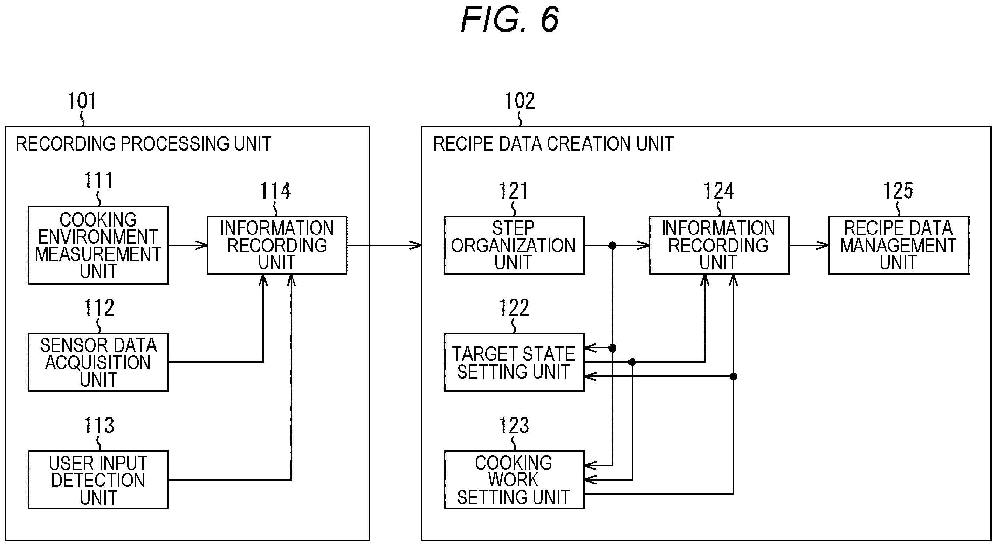

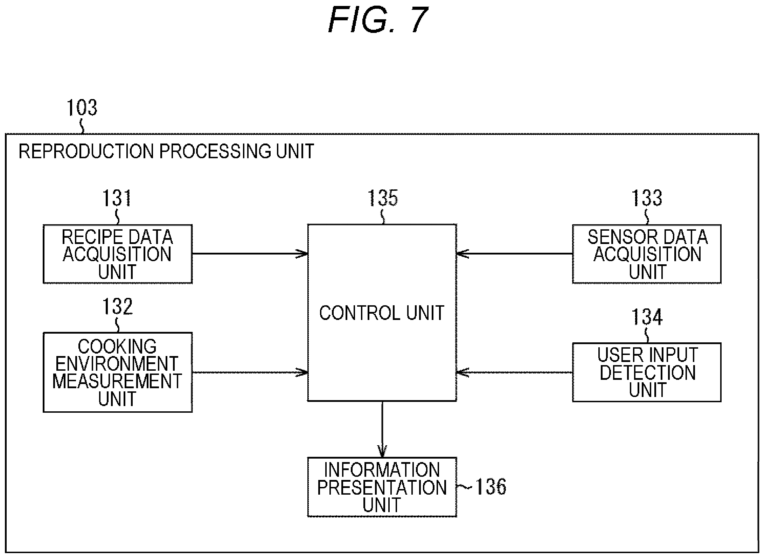

Figs. 6 and 7 are block diagrams illustrating a functional configuration example of the cooking assistance system 1.

As illustrated in Figs. 6 and 7, in the cooking assistance system 1, a recording processing unit 101, a recipe data creation unit 102, and a reproduction processing unit 103 are implemented. At least some the configurations illustrated in Figs. 6 and 7 are implemented by executing a predetermined program with the processor 31. Details of the processing performed by each unit will be described later.

- About recording processing unit 101

The recording processing unit 101 in Fig. 6 performs processing at a time of recording cooking. A recording system is implemented by the recording processing unit 101. The recording processing unit 101 includes a cooking environment measurement unit 111, a sensor data acquisition unit 112, a user input detection unit 113, and an information recording unit 114.

The cooking environment measurement unit 111 measures an environment in which recording cooking is performed, for example, at a start of the recording cooking. Information about the cooking environment measured by the cooking environment measurement unit 111 is supplied to the information recording unit 114.

The sensor data acquisition unit 112 acquires sensor data to be used for generating recipe data, for example, after a start of the recording cooking. For example, during cooking of the recording cooking, time-series data of time measured by a timer inside the processor 31, a temperature measured by the temperature sensor 32, and a weight measured by the weight sensor 33 are acquired. The sensor data acquired by the sensor data acquisition unit 112 is supplied to the information recording unit 114.

The user input detection unit 113 detects input performed by the cook on the input UI device 53 such as the microphone 23 and an operation button, and outputs information representing contents of the input to the information recording unit 114. For example, when the cook or a support staff presses the operation button at a timing important for the recipe data creation, information representing the pressing is output to the information recording unit 114, and a time stamp is recorded. The recorded time stamp is referred to in the recipe data creation processing and used for organization of cooking steps and the like. The timing of recording may be input by an action or utterance of the cook in the recording cooking instead of the operation on the operation button.

The information recording unit 114 records the information about the cooking environment supplied from the cooking environment measurement unit 111, the sensor data supplied from the sensor data acquisition unit 112, and the input data supplied from the user input detection unit 113 in a predetermined format, thereby generating recorded data. When the recording cooking is ended, the recorded data is generated in which the sensor data and the like acquired between a start and an end of the recording cooking are recorded. The recorded data generated by the information recording unit 114 is supplied to the recipe data creation unit 102 at a timing such as at the time of recipe data creation.

- About recipe data creation unit 102

The recipe data creation unit 102 performs processing at a time of recipe data creation on the basis of recorded data including time-series data of sensor data measured during recording cooking. The recipe data creation unit 102 functions as an information processing unit that creates recipe data including at least information indicating contents of cooking work and information indicating a target state for each cooking step in which a target state is defined by a value of sensor data that can be measured at a time of reproduction cooking.

The recipe data creation unit 102 includes a step organization unit 121, a target state setting unit 122, a cooking work setting unit 123, an information recording unit 124, and a recipe data management unit 125.

The step organization unit 121 performs step organization by dividing the entire cooking process of recording cooking into a plurality of cooking steps. Information about each cooking step set by the step organization performed by the step organization unit 121 is supplied to the target state setting unit 122, the cooking work setting unit 123, and the information recording unit 124.

The target state setting unit 122 sets a target state of each cooking step set by the step organization unit 121. Information about the target state set by the target state setting unit 122 is supplied to the cooking work setting unit 123 and the information recording unit 124. How a TTW profile is affected is changed according to the contents of the cooking work. The target state is appropriately set according to the cooking work set by the cooking work setting unit 123.

The cooking work setting unit 123 sets contents of the cooking work in each cooking step set by the step organization unit 121. As the cooking work, for example, work is set for bringing a state of a heating object such as an ingredient to be used in each cooking step into a state defined as the target state. The information indicating the contents of the cooking work set by the cooking work setting unit 123 is supplied to the information recording unit 124 and the target state setting unit 122.

The information recording unit 124 records the recorded data supplied from the recording processing unit 101 and the information supplied from each of the step organization unit 121, the target state setting unit 122, and the cooking work setting unit 123 in a predetermined format, thereby creating recipe data including each piece of the information. The recipe data includes information indicating the information about each cooking step, the target state of the cooking step, and the contents of the cooking work, together with the information about the cooking environment measured at the time of recording cooking and the time-series data of the sensor data. The recipe data created by the information recording unit 124 is supplied to the recipe data management unit 125.

The recipe data management unit 125 manages the recipe data created by the information recording unit 124 by, for example, causing the storage 34 to record the recipe data. In the storage 34, recipe data for various dishes are recorded for every dish.

A data base (DB) of the recipe data may be prepared in the Web server 42, and the recipe data may be managed in the Web server 42. In this case, the recipe data management unit 125 transmits the recipe data created by the information recording unit 124 to the Web server 42, and causes the Web server 42 to manage the recipe data.

- About reproduction processing unit 103

The reproduction processing unit 103 in Fig. 7 performs processing at the time of reproduction cooking. A reproduction system is implemented by the reproduction processing unit 103. The reproduction processing unit 103 includes a recipe data acquisition unit 131, a cooking environment measurement unit 132, a sensor data acquisition unit 133, a user input detection unit 134, a control unit 135, and an information presentation unit 136.

The recipe data acquisition unit 131 acquires and holds recipe data of a dish as a target of reproduction cooking from the storage 34 or the Web server 42. The recipe data acquisition unit 131 functions as a holding unit that holds recipe data. The acquisition of the recipe data is performed, for example, when a cook selects a dish as a target of reproduction cooking. The recipe data acquired by the recipe data acquisition unit 131 is supplied to the control unit 135.

For example, the cooking environment measurement unit 132 measures an environment in which reproduction cooking is performed, at a start of the reproduction cooking. Information about the cooking environment measured by the cooking environment measurement unit 132 is supplied to the control unit 135.

For example, after the reproduction cooking is started, the sensor data acquisition unit 133 acquires sensor data measured by each sensor. For example, during cooking of the reproduction cooking, time-series data of time measured by a timer inside the processor 31, a temperature measured by the temperature sensor 32, and a weight measured by the weight sensor 33 are acquired. The sensor data acquired by the sensor data acquisition unit 133 is supplied to the control unit 135.

The user input detection unit 134 detects input performed by the cook on the input UI device 53 such as the microphone 23 and the operation button. For example, a timing of transition of the cooking step is input by the cook. Information representing contents of the input detected by the user input detection unit 134 is supplied to the control unit 135.

The control unit 135 performs various types of processing for assisting reproduction cooking, on the basis of the recipe data supplied from the recipe data acquisition unit 131. For example, the control unit 135 controls the IH stove 11 to control heating of the heating object. The heating control is also performed according to the cooking environment measured by the cooking environment measurement unit 132 and the sensor data acquired by the sensor data acquisition unit 133. The control unit 135 controls presentation of information by the information presentation unit 136.

Furthermore, the control unit 135 controls progress of the reproduction cooking on the basis of the recipe data. The progress of the reproduction cooking is appropriately triggered by automatic processing or input by the cook.

For example, in a case where the target state is defined by an elapsed time from a start of the target cooking step (the cooking step being executed), the control unit 135 causes cooking of the next cooking step to start when an elapsed time from a start of the cooking step reaches a time defined as the target state.

In a case where the target state is defined by a temperature of the heating object or the heating medium, the control unit 135 causes cooking of the next cooking step to start when a temperature measured by the temperature sensor 32 reaches a temperature defined as the target state.

In a case where the target state is defined by a weight of the heating object, the control unit 135 causes cooking in the next cooking step to start when a weight measured by the weight sensor 33 reaches a weight defined as the target state.

In accordance with the control by the control unit 135, the information presentation unit 136 performs navigation for assisting the reproduction cooking by the cook, on the basis of the recipe data acquired by the recipe data acquisition unit 131. For example, the information presentation unit 136 causes the display 21 to display a navigation screen including information representing contents of the cooking work and information representing the target state. Various types of information for assisting the reproduction cooking are presented according to the cooking environment measured by the cooking environment measurement unit 132 and the sensor data acquired by the sensor data acquisition unit 133.

<<Details of Recording/Reproducing Processing>>

Details of the recording/reproducing processing of the cooking process will be described.

The recording processing and the reproduction processing of the cooking process may be performed in the same device (cooking assistance system), or may be performed individually in different devices. Here, a case will be described in which the recording processing and the reproduction processing of the cooking process are performed in the cooking assistance system 1 of Fig. 3, which is the same device.

Each of the following processing may be performed automatically or may be performed by a cook who is a user of the cooking assistance system 1.

<Information Element Included in Recipe Data>

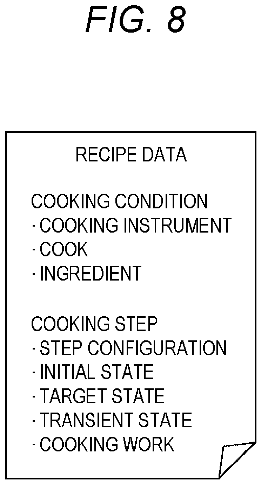

Fig. 8 is a view illustrating an example of information included in recipe data.

As illustrated in Fig. 8, the recipe data includes information regarding cooking conditions and information regarding cooking steps, as large classification information.

The cooking condition is a condition that does not change throughout the entire cooking process. As small classification information constituting the information regarding cooking conditions, information regarding each of a cooking device, a cook, and ingredients is included.

The cooking step is a state or work defined as a course of cooking. Information regarding cooking steps is appropriately represented as information on a time axis. As small classification information constituting the information regarding cooking steps, information regarding each of a step configuration, an initial state, a target state, a transient state, and cooking work is included.

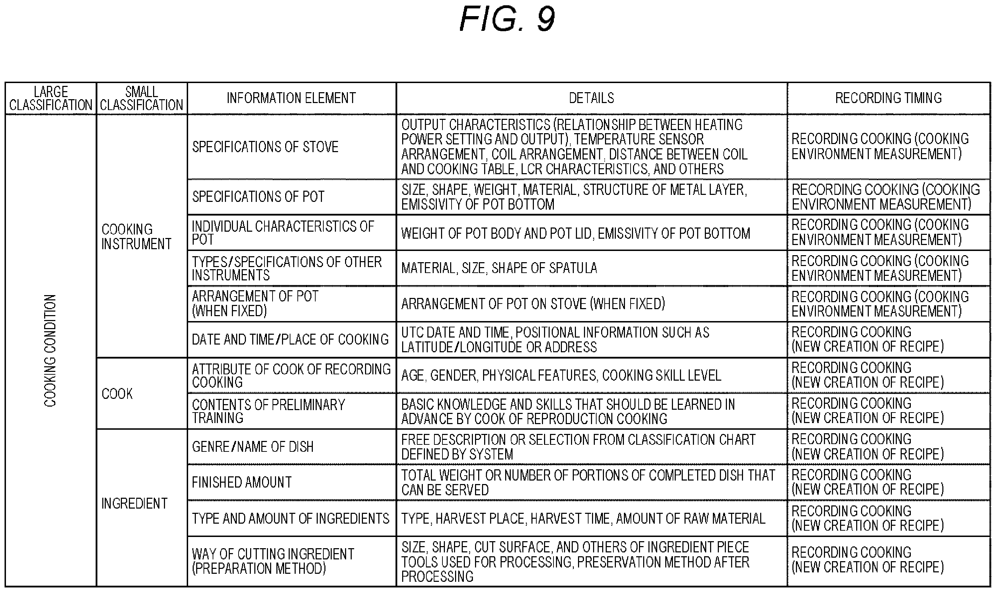

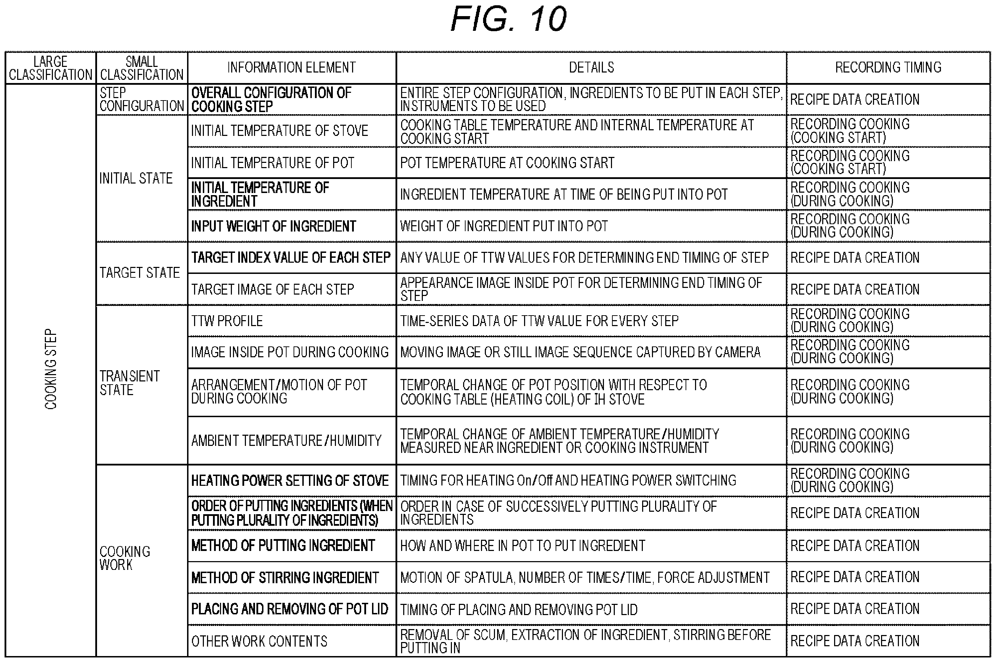

Figs. 9 and 10 are tables illustrating specific examples of information elements (information serving as elements) of the information regarding cooking conditions and the information regarding cooking steps, respectively.

As illustrated in Fig. 9, information regarding a cooking device constituting the information regarding cooking conditions includes information about specifications of a stove, specifications of a pot, individual characteristics of the pot, types/specifications of other instruments, arrangement of the pot (when fixed), and a date and time/place of cooking. For example, the specifications of the stove represent the specifications of the IH stove 11 to be used for recording cooking.

Information regarding the cook includes information about an attribute of a cook of recording cooking and contents of preliminary training.

Information regarding ingredients includes information about a genre/name of a dish, a finished amount, a type and an amount of ingredients, and a way of cutting the ingredients (preparation method).

Furthermore, as illustrated in Fig. 10, information regarding a step configuration constituting the information regarding cooking steps includes information about an overall configuration of a cooking step. The information regarding a step configuration indicates, for example, the number and order of cooking steps, ingredients to be put in each cooking step, cooking instruments to be used, and the like.

The information regarding an initial state includes information about an initial temperature of the stove, an initial temperature of the pot, an initial temperature of ingredients, and an input weight of ingredients.

The information regarding a target state includes information about a target index value of each step and a target image of each step. For example, the information about the target index value of each step is information representing any value of the TTW values to be used for determining an end timing of the cooking step.

The information regarding a transient state includes information about the TTW profile, an image inside the pot during cooking, an arrangement/motion of the pot during cooking, and an ambient temperature/humidity.

The information regarding cooking work includes information about heating power setting of the stove, an order of putting ingredients (when putting a plurality of ingredients), a method of putting an ingredient, a method of stirring an ingredient, placing and removing of a pot lid, and other work contents.

Note that the classification illustrated in Figs. 9 and 10 is an example, and as which classification information a certain information element is recorded in the recipe data can be freely changed. Furthermore, information elements other than the information illustrated in Figs. 9 and 10 may be included as the information regarding cooking conditions or the information regarding cooking steps.

Hereinafter, how each information element is recorded and used in each processing will be described. The rightmost column in Figs. 9 and 10 illustrates a timing at which each information element is recorded, as an example.

The information elements illustrated in Figs. 9 and 10 are recorded in any format in any device such as the storage 34 that can be directly or indirectly accessed by the processor 31.

The processor 31 (recipe data acquisition unit 131 (Fig. 7)) acquires data by accessing a device in which recipe data is recorded, and acquires each information element by performing appropriate information processing. A URL related to necessary data may be recorded in the storage 34, and the recipe data acquisition unit 131 may acquire each information element by referring to the URL and accessing the DB on the Web server 42.

<Normal Recipe Creation>

The normal recipe is a recipe including contents that can be understood by a cook who performs recording cooking. Usually, a recipe is created using any medium or expression. For example, information such as a type and an amount of ingredients, cooking instruments to be used, and a cooking procedure is included as contents.

As a form and contents of the normal recipe, it is important that the cook who performs recording cooking can stably cook a target dish as intended. A person who creates the normal recipe and the cook of recording cooking may be the same person or different persons.

If the recording cooking can be stably executed, the normal recipe creation can be omitted. For example, in a case where the cooking target is a dish that the cook is usually accustomed to making, the cook can stably perform the recording cooking, and thus the normal recipe becomes unnecessary.

<Recording Cooking>

In recording cooking, information necessary for creating recipe data is acquired and recorded by the sensor device or the like. Information input by the cook may be recorded as information necessary for creating recipe data. Information necessary for creating recipe data is acquired by appropriately communicating with a related device.

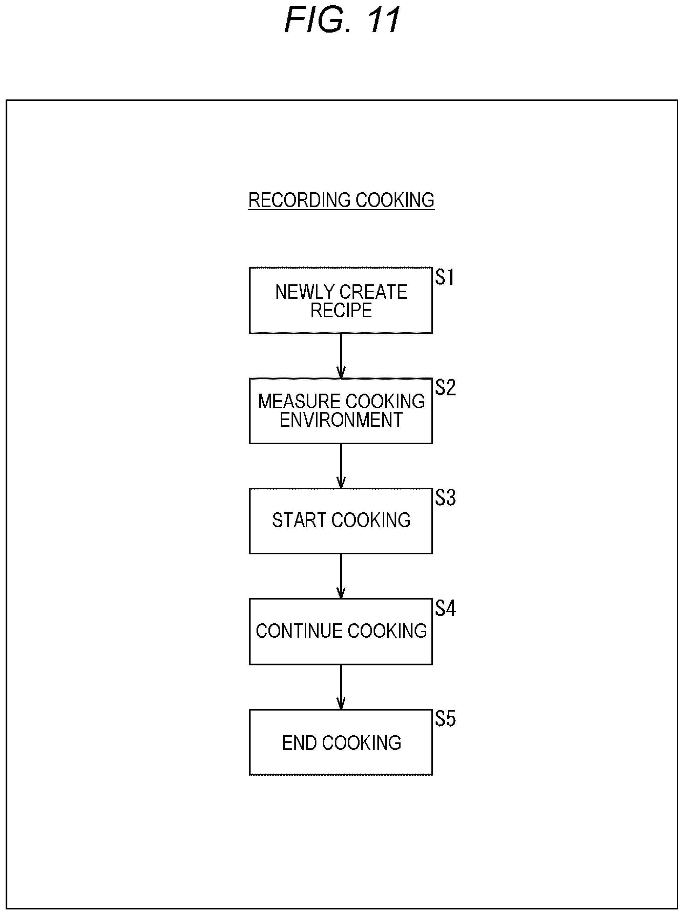

With reference to a flowchart of Fig. 11, a series of processing of recording cooking will be described.

- Step S1: New creation of recipe

The information recording unit 114 (Fig. 6) of the recording processing unit 101 newly creates recipe data (file) of a dish as a target of recording cooking. At the time of newly creating the recipe data, the information recording unit 114 records some information elements of the information regarding cooking conditions on the basis of, for example, input performed by the cook. For example, the cook uses a screen displayed on the display 21 to input information regarding the cook himself/herself and information regarding ingredients.

As illustrated in Fig. 9, at the time of new creation of a recipe, information elements of a date and time/place of cooking, an attribute of a cook of the recording cooking, contents of preliminary training, a genre and a name of the dish, a finished amount, a type and an amount of ingredients, and a way of cutting ingredients (preparation method) are recorded.

Some information elements of the information regarding cooking conditions may be recorded at any timing until the information is used in subsequent processing. Since some information elements of the information regarding cooking conditions are recorded at this time point, the cooking assistance system 1 can use the recorded information for navigation at a time of recording cooking.

- Step S2: Measurement of cooking environment

The cooking environment measurement unit 111 measures a cooking environment, and acquires information regarding specifications and characteristics of cooking devices. For example, the cooking environment measurement unit 111 acquires information about specifications of the IH stove 11, a pot serving as the cooking instrument 12, and other devices, from the storage 34 or the DB prepared in the Web server 42.

In the storage 34 and the DB of the Web server 42, information about the device such as the IH stove compatible with the cooking assistance system 1 is provided by a manufacturer or the like, and is managed in association with model number information and the like. For example, the cooking environment measurement unit 111 acquires the model number information of each device automatically or on the basis of input performed by the cook on the UI such as a screen displayed on the display 21, and acquires the information regarding a cooking device by referring to the DB on the basis of the acquired model number information.

Here, among the specifications of the pot, a weight of a pot lid is particularly important. The weight of the pot lid affects, for example, measurement accuracy of a weight of ingredients in a case where the pot lid is placed and removed during cooking. Since an error occurs due to variations at the time of manufacturing or aged deterioration, an actual measurement value measured using the weight sensor 33 installed on the IH stove 11 may be recorded as the weight of the pot. Considering a possibility that a pot having different characteristics from the pot used at a time of recording cooking is used at a time of reproduction cooking, it is desirable to record an actual measurement value obtained using a real pot in this manner.

In a case where the temperature of the pot is measured in a non-contact manner using the temperature sensor 32 which is a radiation thermometer, emissivity of the measured portion is also important. Since there is a possibility of deterioration over time due to deposits and the like on a pot surface, it is desirable to record an actual measurement value measured using the real pot also for the emissivity of the pot.

In a case where a temperature sensor (such as a thermocouple) different from the radiation thermometer is provided in the cooking assistance system 1, it is possible to estimate the emissivity by simultaneously measuring a temperature of the same object with different temperature sensors. The emissivity of the pot may be estimated by performing so-called calibration on the basis of measurement results of the plurality of temperature sensors.

In a case of a recipe that does not require movement of the pot during cooking, the cooking environment measurement unit 111 determines a position where the pot is fixed at this point of time, and acquires information regarding the determined position as the information regarding arrangement of the pot. In cooking in the cooking assistance system 1, by fixing the position of the pot, reproducibility of heating characteristics and temperature measurement can be improved as compared with a case of moving the pot, and the reproducibility of the finish of the dish can also be improved.

The information acquired by the cooking environment measurement unit 111 is recorded by the information recording unit 114 as an information element related to a cooking device. As illustrated in Fig. 9, at the time of measuring the cooking environment, information elements of the specifications of the stove, the specifications of the pot, the individual characteristics of the pot, the type/specifications of other instruments, and the arrangement of the pot (when fixed) are recorded.

- Step S3: Start of cooking

At a cooking start timing such as immediately before a heating start, the information recording unit 114 records an information element related to an initial state of the cooking device on the basis of the information measured by the sensor data acquisition unit 112. As illustrated in Fig. 10, for example, information about an initial temperature of each of the IH stove 11 and the pot is recorded.

The initial temperatures of the IH stove 11 and the pot are measured using the temperature sensor 32 installed on the cooking assistance system 1, and are acquired by the sensor data acquisition unit 112. As the temperature of the IH stove 11, for example, a temperature of a portion of a cooking table in contact with the pot is recorded. In a case where measurement is possible, a temperature inside the IH stove 11 is also recorded.

In addition to the start timing of cooking, the temperatures of the IH stove 11 and the pot measured as needed during cooking may also be recorded. In this way, it is desirable to record information such as the initial temperature of the cooking instrument, although an influence on reproducibility of the finish is less than that of the initial temperature of ingredients.

- Step S4: During cooking

During cooking, the information recording unit 114 records, in time series, various types of information such as sensor data measured by the sensor mounted on the cooking assistance system 1 and acquired by the sensor data acquisition unit 112. As illustrated in Fig. 10, for example, information elements of an initial temperature of an ingredient, an input weight of an ingredient, a TTW profile, an image inside the pot during cooking, an arrangement/motion of the pot during cooking, an ambient temperature/humidity, and heating power setting of the stove are recorded.

Here, recording of main information will be described.

Information regarding heating power setting of the IH stove 11 is acquired and recorded as the information element of cooking work. In this case, the sensor data acquisition unit 112 detects and acquires a value of the heating power setting set by the cook by operating an operation panel or the like provided as a UI of the cooking assistance system 1.

The TTW profile, which is time-series data of time/temperature/weight, is generated by the sensor data acquisition unit 112 and recorded as the information element of a transient state. The time constituting the TTW profile is measured by a real-time clock incorporated in the processor 31. As the temperature constituting the TTW profile, for example, a pot bottom temperature is measured by the temperature sensor 32 incorporated in the IH stove 11. As the weight constituting the TTW profile, for example, a weight of an ingredient in the pot is measured by the weight sensor 33 incorporated in the IH stove 11.

An image inside the pot is acquired by the sensor data acquisition unit 112 and recorded as an information element of a transient state. For example, images showing a state inside the pot, which are generated on the basis of images captured by the camera 22, are recorded in time series.

The arrangement/motion of the pot is acquired by the sensor data acquisition unit 112 and recorded as the information element of a transient state. The arrangement/motion of the pot is acquired by performing image recognition on an image inside the pot.

An initial temperature of an ingredient is acquired and recorded as the information element of an initial state. The initial temperature of the ingredient is a temperature of the ingredient at the time of being put into the pot (immediately before being put in). For example, the temperature of the ingredient is measured by the cook using a thermometer for cooking.

An input weight of an ingredient is acquired and recorded as the information element of an initial state. For example, a weight of an ingredient actually put into the pot is measured by the weight sensor 33 instead of a weight in the normal recipe, and is used for recording. It is difficult to measure the weight of the ingredient in a case of putting the ingredient into the pot while stirring and holding the pot with a hand. In this case, a weight measured by the cook using a weight scale may be recorded.

The recording of each information element as described above is repeatedly performed during cooking.

- Step S5: End of cooking

The information recording unit 114 records a time at which cooking is ended, and stops recording of sensor data. Data in which each piece of the information is recorded as described above is supplied to the recipe data creation unit 102 as recorded data.

<Recipe Data Creation>

In the recipe data creation, recipe data necessary for reproduction cooking is created on the basis of the recorded data generated by the recording cooking. In some cases, the recording cooking and the recipe data creation are not performed in that order, but are repeatedly performed one after another.

Part or all of the processing of the recipe data creation may be automatically performed by the cooking assistance system 1, or may be performed in response to input performed by a person such as a cook. The processing by the cooking assistance system 1 is performed using, for example, an inference model generated in advance by machine learning. In a case where high reproducibility in the reproduction cooking is expected, it is desirable to perform at least a part of the processing in accordance with input performed by a person having appropriate knowledge.

Note that the information element recorded in the recording cooking is also updated at the time of recipe data creation, as necessary.

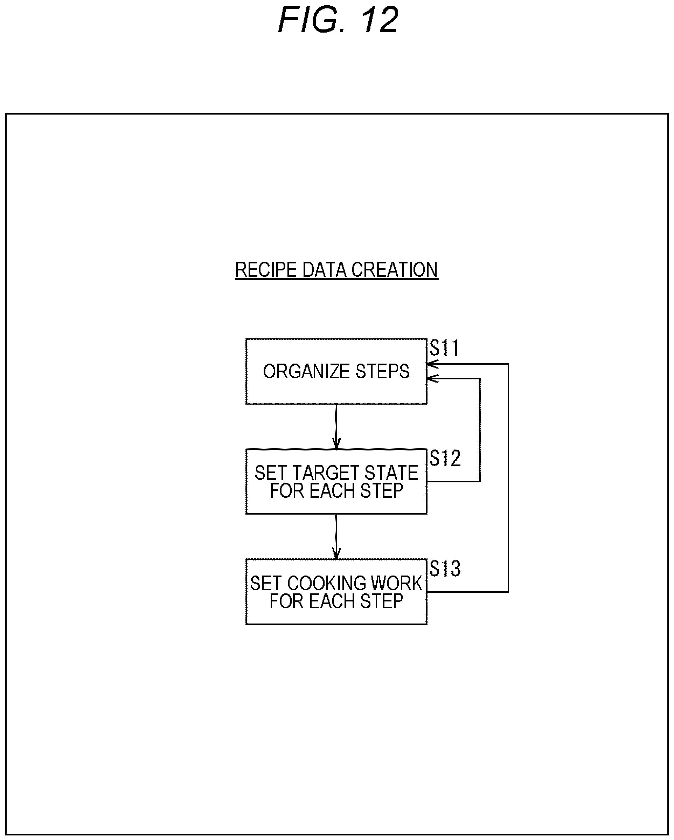

With reference to a flowchart of Fig. 12, a series of processing of the recipe data creation will be described.

- Step S11: Step organization

The step organization is work of dividing the entire cooking process into a plurality of cooking steps. The step organization unit 121 of the recipe data creation unit 102 divides the entire cooking process from a start to an end of the recording cooking into a plurality of sections on the basis of, for example, input performed by the cook, and sets each section as a section constituting one cooking step.

The step organization of the recipe data defines what kind of cooking work is to be performed in the next cooking step when what kind of target state is reached, through the entire cooking process. In the step organization, a point of performing work in which a timing is important, such as change of heating power and putting of ingredients, and a point in which state determination such as a weight and a temperature is important are set as boundaries of the individual cooking steps.

Information about each cooking step set by the step organization unit 121 in this manner is recorded by the information recording unit 124 as the information element of a step configuration. As illustrated in Fig. 10, an information element of an overall configuration of a cooking step is recorded.

- Step S12: Target state setting for each step

The target state setting unit 122 sets a target state of each cooking step by using a quantitative index value that can be measured by the cooking assistance system 1. Specifically, the target state setting unit 122 selects any one numerical value among time (elapsed time from a start of a cooking step), a temperature (a pot bottom temperature detected by the temperature sensor 32), and a weight (a weight of an ingredient in the pot measured by the weight sensor 33), and sets the numerical value as an index value for defining the target state.

Usually, a measurement value at an end timing of each step of the recording cooking is used as an index value defining the target state. This measurement value may be corrected in consideration of an error during the recording cooking or the like.

A value different from the TTW value may be used as the index value that defines the target state, as long as a timing at which a certain condition is reached can be determined without ambiguity during the reproduction cooking. Also in this case, a plurality of values is not used as index values defining one target state. This is because, for example, in a case where a temperature and a weight are used as index values defining one target state, the temperature and the weight do not always become the same values as the individual target values at the same timing during the reproduction cooking, and it becomes difficult to uniquely determine the temperature and the weight.

In principle, the target state that can be uniquely determined is set for all the cooking steps, but setting of an exceptional target state may be allowed in a case where there is substantially no influence on the reproduction of the finish. For example, in the cooking step of only adding a small amount of seasoning, the condition of "immediately after an end of putting seasoning" can be set as the condition defining the target state.

It is also possible to set an image inside the pot captured by the camera 22 as a target state of an image (appearance) of each cooking step. The image does not need to be an image of an end timing of a certain cooking step during the recording cooking. An appropriate image is selected as the target state of appearance from the viewpoint of reproducing the finish by the cook, for example, and is set by the target state setting unit 122 as the index for defining the target state. The image used as an index for defining the target state may be a still image or a moving image selected from images inside the pot. An image edited for easy understanding of a characteristic to be focused may be used. It is not always necessary to use an image captured during the recording cooking, and any means for generating a target image is adopted including an illustration, CG synthesis, and the like.

The information about the index value defining the target state set by the target state setting unit 122 is recorded by the information recording unit 124 as the information element of a target state. As illustrated in Fig. 10, information elements of a target index value of each step and a target image of each step are recorded.

- Step S13: Cooking work setting for each step

For example, the cooking work setting unit 123 sets contents of cooking work to be performed in each cooking step on the basis of input performed by the cook. The information indicating the contents of the cooking work set by the cooking work setting unit 123 is recorded by the information recording unit 124 as the information element of information regarding cooking work. As illustrated in Fig. 10, individual information elements of an order of putting ingredients, a method of putting an ingredient, a method of stirring an ingredient, a method of placing and removing a pot lid, and other work contents are recorded.

Here, the contents of individual work are converted into data so that the work performed by the cook during the recording cooking can be faithfully reproduced. Regarding putting and stirring of an ingredient, in order to prevent variations depending on individual skills, a sentence for explaining specific work contents is recorded. A sentence input by the cook may be recorded, or a sentence obtained by inputting a video image showing a state of work to the inference model may be recorded. In the latter case, the inference model is prepared in the cooking work setting unit 123, in which an image showing a state of the work of the cook is used as an input and a sentence representing the contents of the work is used as an output.

In a case where the work can be classified into a specific pattern of work for which preliminary training can be performed, information such as a symbol representing a corresponding pattern may be recorded as the information indicating the contents of the cooking work. For cooking work that is difficult to express with sentences and symbols, an image showing a state of exemplary work may be recorded as the information indicating the contents of cooking work.

The recipe data is created by recording the information regarding the target state and the contents of the cooking work for each cooking step set in the step organization (step S11). The step organization may be performed again after the target state is set, or the step organization may be performed again after the cooking work is set.

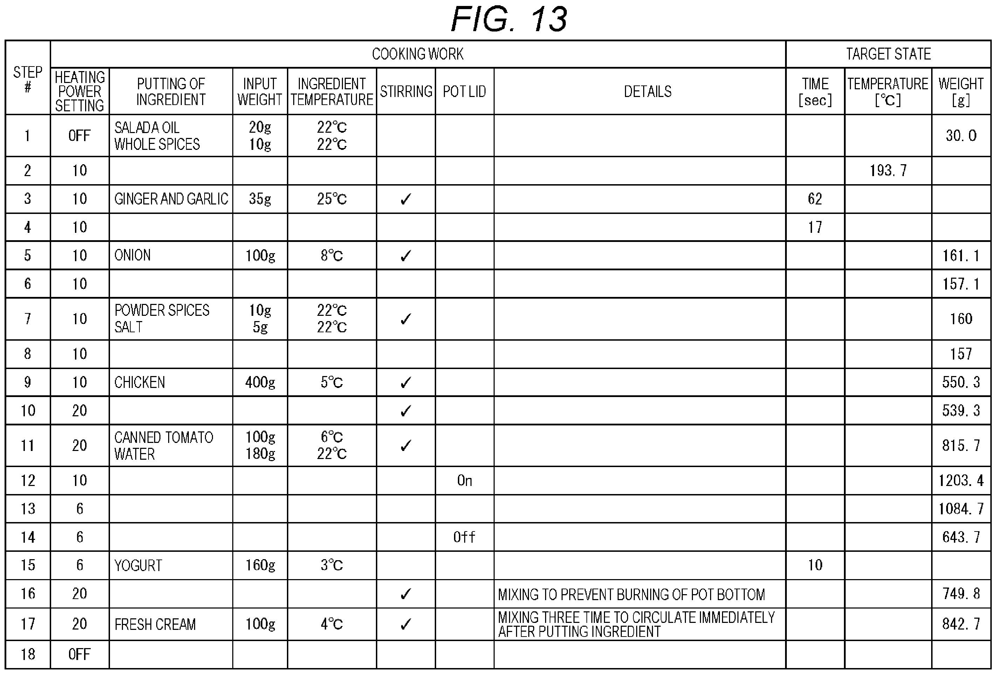

Fig. 13 is a view illustrating an example of a cooking step represented by part of information included in the recipe data.

In the example of Fig. 13, the entire cooking process is divided into cooking steps of cooking steps #1 to #18, and the cooking work and the target state for each cooking step are illustrated. The contents of the cooking work and the target state illustrated in Fig. 13 are the contents of information elements shown in bold in Fig. 10 (an overall configuration of a cooking step, an initial temperature of an ingredient, an input weight of an ingredient, a target index value of each step, heating power setting of a stove, an order of putting ingredients (when putting a plurality of ingredients), a method of putting an ingredient, a method of stirring an ingredient, and a method for placing and removing a pot lid) .

For example, the fact that the entire cooking process is configured by 18 cooking steps is represented by the information element of an overall configuration of a cooking step. Furthermore, the target state of each cooking step is represented by the information element of a target index value of each step.

Heating power setting, putting of ingredients, an input weight, an ingredient temperature, stirring, and a pot lid that define contents of the cooking work are individually represented by the information elements of heating power setting of a stove, an order of putting ingredients and a method of putting an ingredient, an input weight of an ingredient, an initial temperature of an ingredient, a method of stirring an ingredient, and placing and removing a pot lid.

The following items are designated as the cooking work of individual cooking steps.

Heating power setting: heating power of the IH stove 11 is set to a designated level
Putting of ingredients: designated ingredients are put in a designated order
Input weight: a weight of an ingredient to be put into the pot is designated
Ingredient temperature: a temperature (initial temperature) of an ingredient at a time of being put in is designated
Stirring: ingredients in the pot (after putting an ingredient in a case where the ingredient is supposed to be put in) are stirred
Pot lid: the pot lid is placed when "On", and removed when "Off"
Details: detailed work such as stirring method is designated

In a case where there is no instruction as the item of details, the work designated by each item of the heating power setting, the putting of ingredients, and the pot lid represents work to be executed by the cook at a start of the cooking step. The work designated by the item of stirring represents work that is continuously performed by the cook during the cooking step.

The step not designated in the cooking work represents a cooking step automatically executed by the cooking assistance system 1. The step not designated in the cooking work means that the cook simply waits until the target state is reached.

As an index value for defining the target state, any one value of time, a temperature, and a weight is set for every cooking step. The target state means that the next cooking step is started when the measurement value obtained by the cooking assistance system 1 reaches each target value.

For example, cooking step #1 is a step in which setting is made as cooking work to be performed by the cook to turn OFF the heating power of the IH stove 11 and to put 20 g of salad oil and 10 g of whole spices each having a temperature of 22°C into a pot.

During the reproduction cooking, it is determined that the target state is reached at a timing when the weight of the put ingredients (salad oil and whole spices) reaches 30.0 g, and the control unit 135 (Fig. 7) ends cooking step #1. For example, when the weight of the ingredients measured by the weight sensor 33 reaches 30.0 g, the information presentation unit 136 of the reproduction processing unit 103 presents to the cook that the target state is reached.

Furthermore, cooking step #2 is a step in which there is no instruction of cooking work to be performed by the cook.

During the reproduction cooking, the control unit 135 of the reproduction processing unit 103 controls the IH stove 11 so that the heating power becomes 10. It is determined that the target state is reached at a timing when a temperature of the pot reaches 193.7°C, and the control unit 135 ends cooking step #2. For example, when the temperature of the pot measured by the temperature sensor 32 reaches 193.7°C, the information presentation unit 136 presents to the cook that the target state is reached.

Cooking step #3 is a step in which setting is made as cooking work to be performed by the cook to put only 35 g of ginger and garlic at 25°C into a pot and stir.

During reproduction cooking, it is determined that the target state is reached at a timing when the elapsed time from a start of cooking step #3 becomes 62 seconds, and the control unit 135 ends cooking step #3.

Also in the cooking steps #4 to #18, cooking work and the target state are similarly defined.

By the recipe data creation, recipe data including such information is created. The created recipe data is stored, for example, in the storage 34 in the cooking assistance system 1 by the recipe data management unit 125. In a case where the recipe data is stored on the Web server 42, the created recipe data is transmitted to the Web server 42 by the recipe data management unit 125.

<Reproduction Cooking>

In the reproduction cooking, each cooking step is reproduced on the basis of recipe data. A flow of reproduction cooking processing is similar to the flow of the recording cooking processing. The reproduction cooking is performed such that the cooking assistance system 1 assists cooking on the basis of the contents of the recipe data, thereby reproducing, as the finish of the reproduction sample, the same finish as the finish of the recording sample completed at the time of recording cooking. Note that, also in the reproduction cooking, data is recorded in the recipe data as necessary, similarly to the case of the recording cooking.

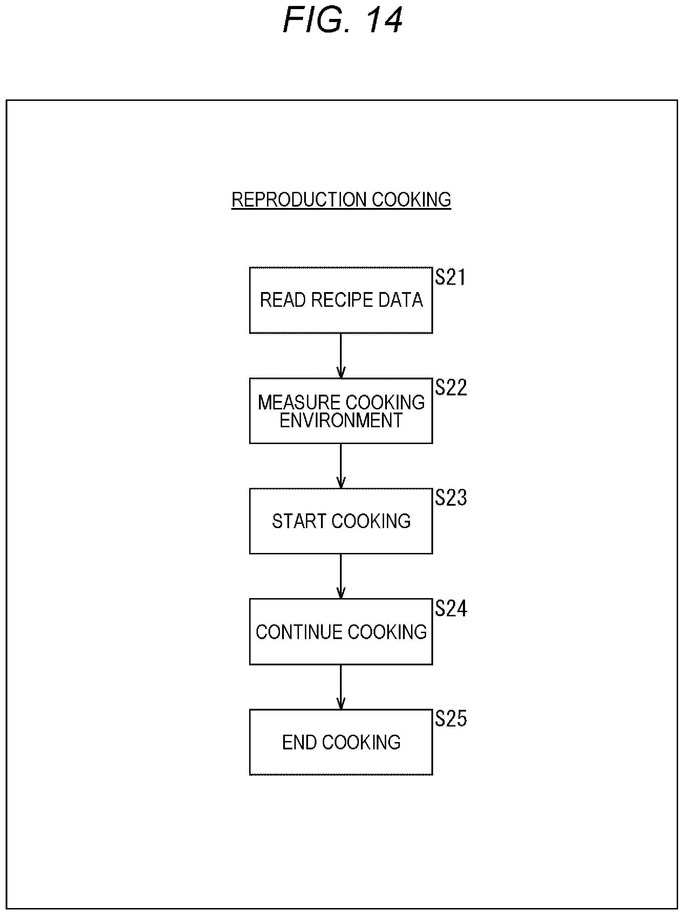

With reference to a flowchart of Fig. 14, a series of processing of the reproduction cooking will be described.

- Step S21: Reading of recipe data

In a case where the cook designates a dish as a reproduction target, the recipe data acquisition unit 131 (Fig. 7) of the reproduction processing unit 103 reads recipe data. The dish as the reproduction target is designated using, for example, a screen displayed on the display 21 by the information presentation unit 136.

The information presentation unit 136 causes the display 21 to mainly display contents of cooking conditions in information about the recipe data read by the recipe data acquisition unit 131. The cook can check the contents displayed on the display 21 and check whether cooking conditions important for executing the reproduction cooking match conditions of an environment of the reproduction cooking.

The cook checks the contents of the cooking conditions and procures ingredients as designated in the recipe data. Furthermore, the cook prepares ingredients so as to be in the same state as the initial state at the time of recording cooking, by preparing the ingredients as designated in the recipe data. Information regarding ingredients to be procured and information regarding a way of preparing ingredients are presented to the cook using, for example, a screen of the display 21. Such information regarding ingredients to be used for preparation and the like is included in the information regarding cooking conditions in the recipe data (Fig. 9).

Furthermore, the cook performs preliminary training as designated in the recipe data before starting cooking. The preliminary training is performed to learn basic knowledge and techniques that should be learned in advance by the cook who performs the reproduction cooking. Contents of the preliminary training are presented to the cook on the basis of, for example, the information (Fig. 9) regarding a cook included in the recipe data.

For example, the cook performs training common to many pieces of recipe data during a training period, and performs training specific to the recipe data of the dish as the reproduction target in a short time immediately before the reproduction cooking, as necessary. It is not necessary that contents of the preliminary training are directly included in the recipe data, and the recipe data may include separately prepared learning contents or information such as a URL designating an essential item of a practical training course.

- Step S22: Measurement of cooking environment

The cooking environment measurement unit 132 measures a cooking environment and acquires specifications and characteristics of cooking devices to be used in the reproduction cooking. The measurement of the cooking environment at the time of the reproduction cooking is performed in a similar manner to the measurement of the cooking environment in the recording cooking (step S2 in Fig. 11).

In a case where there is a difference between the cooking environment of the reproduction cooking acquired by the cooking environment measurement unit 132 and the cooking environment of the recording cooking represented by the information included in the recipe data, the information presentation unit 136 presents information representing the difference to the cook to give a warning. The cook can bring the cooking environment of the reproduction cooking closer to the cooking environment of the recording cooking by changing the cooking device according to the difference in the cooking environment presented using a screen of the display 21 or the like.

There are also cases where it is desired to perform the reproduction cooking in a cooking environment different from the cooking environment at the time of recording cooking. The cooking assistance system 1 has a function of automatically adjusting a step configuration, a target state, and the like of a cooking process in accordance with the difference in cooking environment.

For example, in a case where the IH stove or the pot is different between the time of the recording cooking and the time of the reproduction cooking, it is important to reproduce an amount of heat generation and a temperature distribution of a heating surface during the reproduction cooking. In order to perform calculation necessary for adaptive heating control, the control unit 135 refers to information regarding specifications such as electrical characteristics and structures of the stove and the pot, and adjusts contents of the recipe data read by the recipe data acquisition unit 131.

- Step S23: Start of cooking

The sensor data acquisition unit 133 measures temperatures of the IH stove 11 and the pot as the initial state of the cooking device and the like, similarly to the start of cooking in the recording cooking (step S3 in Fig.

11). In a case where the measured temperature is largely different from the temperature in the initial state recorded in the recipe data, the information presentation unit 136 suspends the heating start and warns the cook.

For example, in a case where the temperatures of the IH stove 11 and the pot are different from the initial state temperature recorded in the recipe data by a threshold value or more, information representing that the temperatures are different is displayed on the display 21. By adjusting the temperatures of the IH stove 11 and the pot in accordance with the warning, the cook can prevent a decrease in the reproducibility due to a mismatch between the temperatures in the initial state.

The cooking assistance system 1 is provided with a function of self-adjusting the temperature of the IH stove 11 and the pot. In a case where the temperatures of the IH stove 11 and the pot are different from the temperatures in the initial state recorded in the recipe data, the control unit 135 controls the temperatures of the IH stove 11 and the pot so as to achieve the temperatures in the initial state defined by the recipe data. Usually, it is important to cool the IH stove 11 and the pot heated in the immediately preceding cooking step. In the case of cooling, the control unit 135 drives a cooling fan (not illustrated) attached to the IH stove 11 to adjust the temperatures of the IH stove 11 and the pot.

- Step S24: During cooking

The control unit 135 refers to contents of the information regarding cooking steps included in the recipe data and assists reproduction of the cooking step. That is, the control unit 135 measures a state of the reproduction cooking in real time with a sensor, and controls the cooking device for reproducing the same cooking step as the cooking step described in the recipe data (the time series of the TTW profile). Information for assisting the work of the cook is appropriately presented by the information presentation unit 136.

As described above, as the information element of the recipe data, information regarding a transient state of the cooking step is included. On the basis of the information regarding a transient state, the TTW profile is visualized and presented to the cook. Assistance for reproduction cooking by visualizing the TTW profile is described in, for example, Japanese Patent Application No. 2021-168046 by the present applicant.

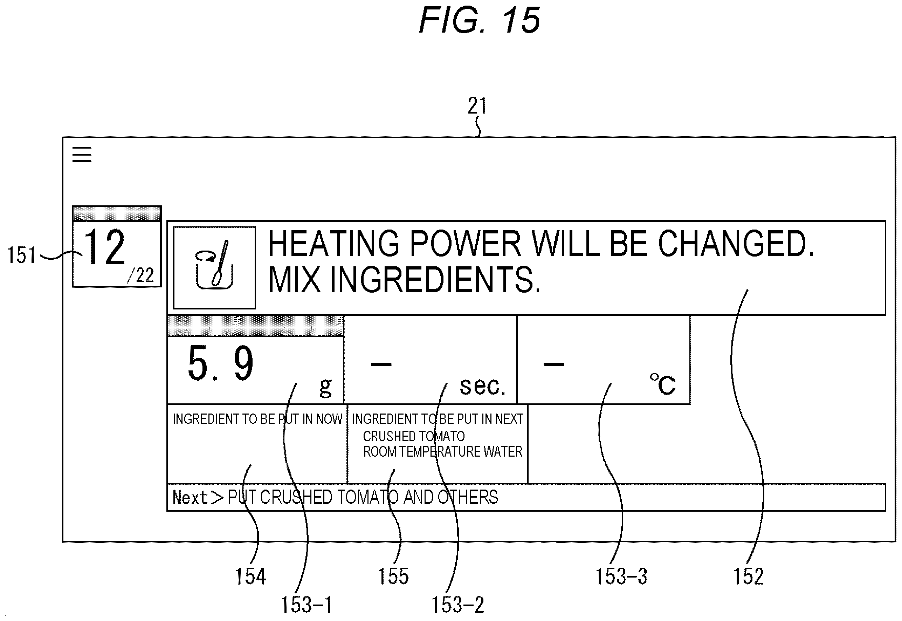

Fig. 15 is a view illustrating an example of a navigation screen displayed on the display 21. Note that the navigation screen illustrated in Fig. 15 is a screen displayed in a step different from the cooking step illustrated in Fig. 13.

In an area 151 which is a small rectangular area at the upper left of the navigation screen of Fig. 15, a number is displayed indicating that the cooking step being executed is the 12th cooking step among 22 cooking steps. In a horizontally long area 152 on the right side of the area 151, sentences representing contents of the cooking work are displayed. From the sentences displayed in the area 152, the cook can confirm that it is sufficient to perform work of mixing the ingredients as work of the 12th cooking step.

Areas 153-1 to 153-3 are formed below the area 152. Each of the areas 153-1 to 153-3 is a display area of a weight, time, or a temperature set as an index value defining the target state.

In the example of Fig. 15, the area 153-1 shows that a differential weight between a weight set as the index value defining the target state and a current weight is 5.9 g. The differential weight decreases with the lapse of time due to moisture evaporation accompanying heating. The cook is to mix the ingredients until the displayed differential weight is 0 g. When the differential weight reaches 0 g, it is determined that the target state is reached, and the 13th cooking step is started.

In a case where work of the cooking step being executed is work of putting an ingredient, information about the ingredient is displayed in an area 154 at a lower part of the screen. An area 155 on the right side of the area 154 shows information indicating that ingredients to be put into in the 13th cooking step are crushed tomato and normal temperature water.

By checking such a navigation screen, the cook can easily proceed with each cooking step of the reproduction cooking.

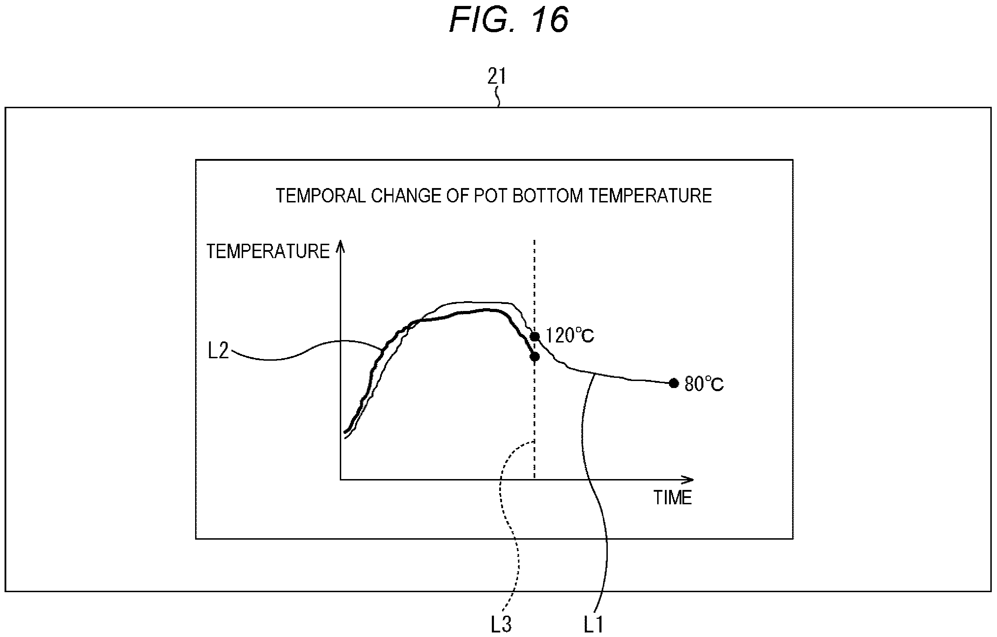

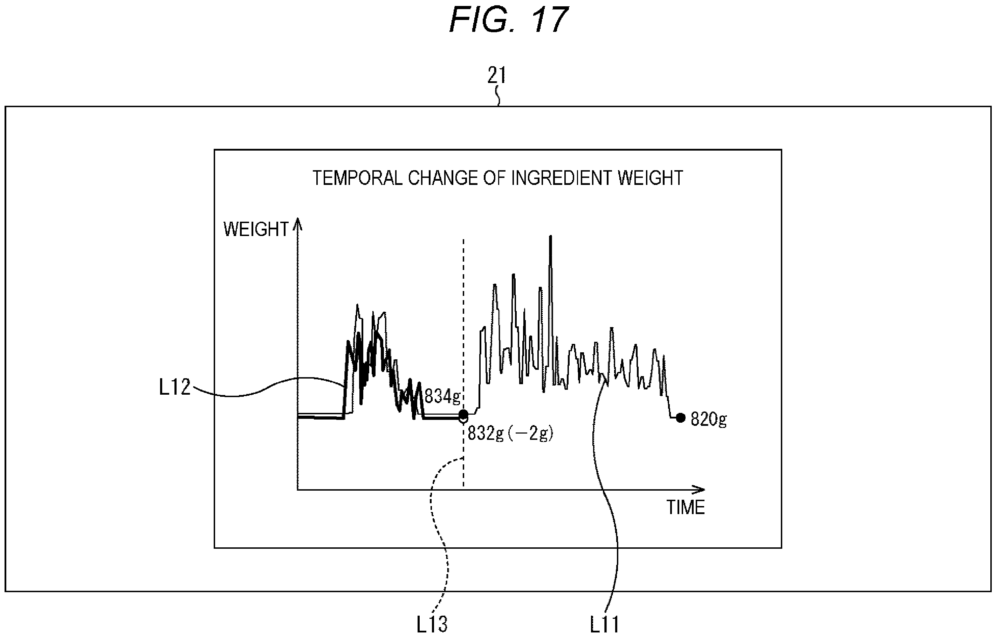

Figs. 16 and 17 are views illustrating another display example of the navigation screen.

The navigation screens illustrated in Figs. 16 and 17 are screens that visualize the TTW profile. In a case where a predetermined operation is performed in the state as illustrated in Fig. 15 in which information regarding the cooking step being executed is displayed, the display of the navigation screen is switched to the screen that visualizes and indicates the TTW profile.

In the example of Fig. 16, a temporal change of a pot bottom temperature in a certain cooking step is visualized and displayed. The screen illustrated in Fig. 16 is displayed, for example, in a case where the target state is defined by a temperature. In the graph illustrated in Fig. 16, the vertical axis represents temperature, and the horizontal axis represents time.

The temperature change indicated by a solid line L1 indicates a temperature change serving as a reference of the cooking step being executed. The temperature serving as the reference is measured in the recording cooking, and is displayed on the basis of time-series data of a temperature constituting the TTW profile recorded in the recipe data. The temperature in the target state is 80°C.

Whereas, the temperature change indicated by a solid line L2 indicates a temperature change measured in the cooking step being executed. The temperature change is displayed on the basis of a temperature measured by the temperature sensor 32 from a start of the cooking step to a current time. A broken line L3 represents the current time.

By comparing the temperature change serving as the reference with the change in the actual measurement value, the cook can check reproducibility of the temperature change in the cooking step.

In the example of Fig. 17, a temporal change of an ingredient weight in a certain cooking step is visualized and displayed. The screen illustrated in Fig. 17 is displayed, for example, in a case where the target state is defined by a weight. In the graph illustrated in Fig. 17, the vertical axis represents weight, and the horizontal axis represents a time.

The weight change indicated by a solid line L11 indicates a weight change serving as a reference of the cooking step being executed. The weight serving as the reference is measured in the recording cooking, and is displayed on the basis of time-series data of a weight constituting the TTW profile recorded in the recipe data. The weight in the target state is 820 g.

Whereas, the weight change indicated by a solid line L12 indicates a weight change measured in the cooking step being executed. The weight change is displayed on the basis of a weight measured by the weight sensor 33 from a start of the cooking step to a current time. A broken line L13 represents the current time.

By comparing the weight change serving as the reference with the change in the actual measurement value, the cook can check reproducibility of the weight change in the cooking step.

Such a navigation screen is displayed on the display 21 by the information presentation unit 136 as information for assisting the work of the cook.

As described above, a value that can be measured in the cooking assistance system 1 is uniquely set for all the cooking steps as an index value that defines the target state, and is recorded as information about the recipe data, whereby high reproducibility can be stably achieved regardless of who performs reproduction cooking.

- Step S25: End of cooking

When all the cooking steps are ended, the reproduction cooking is ended, and the reproduction sample is completed. By visualizing a difference between sensor data such as the TTW profile acquired in the course of reproduction cooking and sensor data recorded in the recipe data and displaying the difference on the display 21, the information presentation unit 136 presents the reproducibility of the cooking process to the cook with the sensor data as a reference.

By recording all the sensor data acquired in the course of reproduction cooking in advance, the sensor data can be used for post-analysis.

<Reproducibility Evaluation>

The cook evaluates reproducibility of the completed dish (reproduction sample) by using a sensory evaluation method and a measuring instrument.

Through the series of processing described above, the cook can stably make the dish with high reproducibility of the finish. Furthermore, since information about cooking work in each cooking step and the like are displayed on the navigation screen, the cook can easily proceed with the reproduction cooking.

<<Modifications>>

<Example of System Configuration>

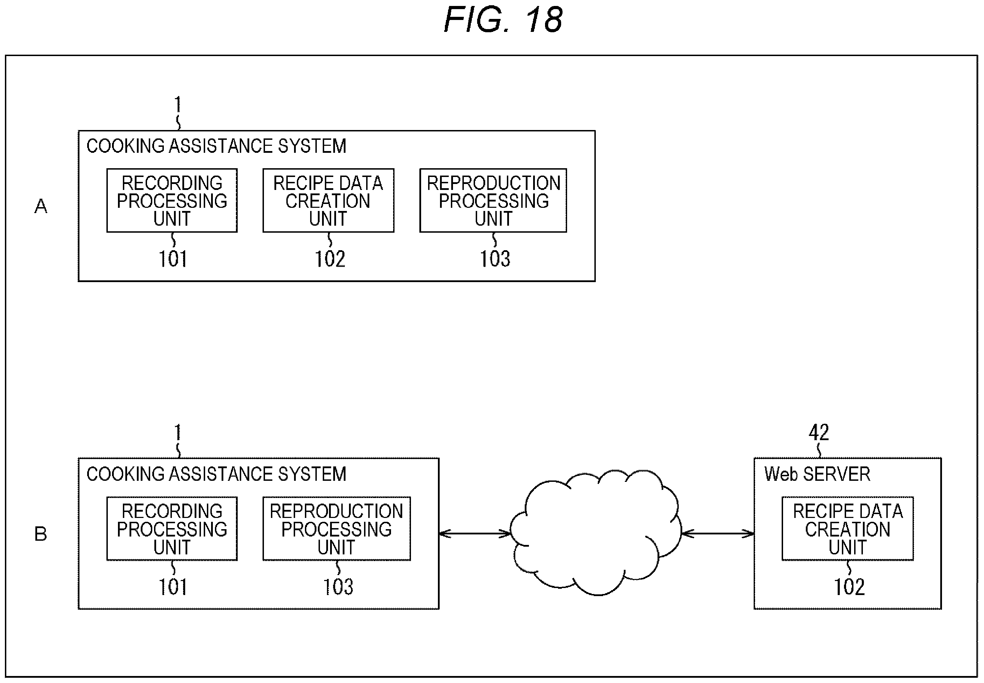

Fig. 18 is a diagram illustrating a configuration example of the cooking assistance system.

In the above, as illustrated in A of Fig. 18, the processing of each of the recording cooking, the recipe data creation, and the reproduction cooking is performed in the same cooking assistance system 1 including the recording processing unit 101, the recipe data creation unit 102, and the reproduction processing unit 103, but the processing may be performed individually in different devices.

For example, as illustrated in B of Fig. 18, the recording cooking and the reproduction cooking may be performed in the cooking assistance system 1, and the recipe data creation may be performed in the Web server 42. In this case, the recording processing unit 101 and the reproduction processing unit 103 are implemented in the cooking assistance system 1, and the recipe data creation unit 102 is implemented in the Web server 42.

The recorded data generated by the recording processing unit 101 of the cooking assistance system 1 is transmitted to the Web server 42 via a network such as the Internet, and is used in the recipe data creation unit 102 to create the recipe data. The recipe data created by the recipe data creation unit 102 of the Web server 42 is transmitted to the cooking assistance system 1 via the network, and is used in the reproduction processing unit 103 for the reproduction cooking.

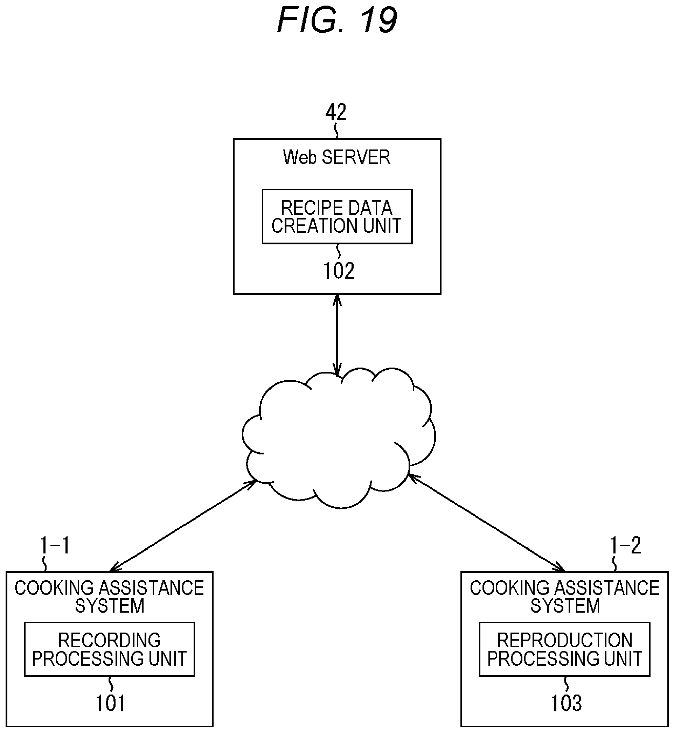

Furthermore, as illustrated in Fig. 19, the recording cooking and the reproduction cooking may be performed in different cooking assistance systems 1. In the example illustrated in Fig. 19, the recording processing unit 101 is implemented in a cooking assistance system 1-1, and the reproduction processing unit 103 is implemented in a cooking assistance system 1-2. The cooking assistance system 1-1 and the cooking assistance system 1-2 each have the same configuration as that of the cooking assistance system 1 described with reference to Fig. 3 and the like.

The recorded data generated by the recording processing unit 101 of the cooking assistance system 1-1 is transmitted to the Web server 42 via a network such as the Internet, and is used in the recipe data creation unit 102 to create the recipe data. The recipe data created by the recipe data creation unit 102 of the Web server 42 is transmitted to the cooking assistance system 1-2 via the network, and is used in the reproduction processing unit 103 for the reproduction cooking.

By providing a plurality of cooking assistance systems 1-2 that performs the reproduction cooking, it is possible to reproduce a dish based on one recipe data in various places.

In this manner, it is possible to freely change which device is to perform at least any processing of the recording cooking, the recipe data creation, and the reproduction cooking.

<Example of Performing Reproduction Cooking in Cooking Robot>

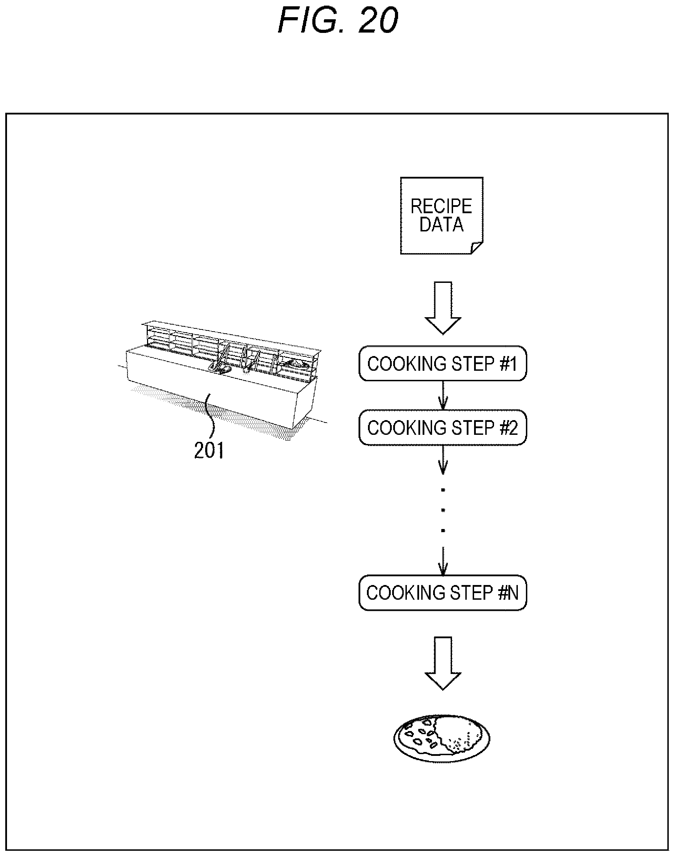

Fig. 20 is a diagram illustrating an example of reproduction cooking performed by a cooking robot.

A cooking robot 201 illustrated in Fig. 20 is a robot capable of performing cooking work such as putting an ingredient into a pot or stirring the ingredient with a spatula, by driving a robot arm.

The cooking robot 201 reads recipe data and controls the robot arm on the basis of information included in the recipe data, thereby performing work of each cooking step. The information included in the recipe data is described in a format in which the cooking robot 201 can understand contents of the cooking work.

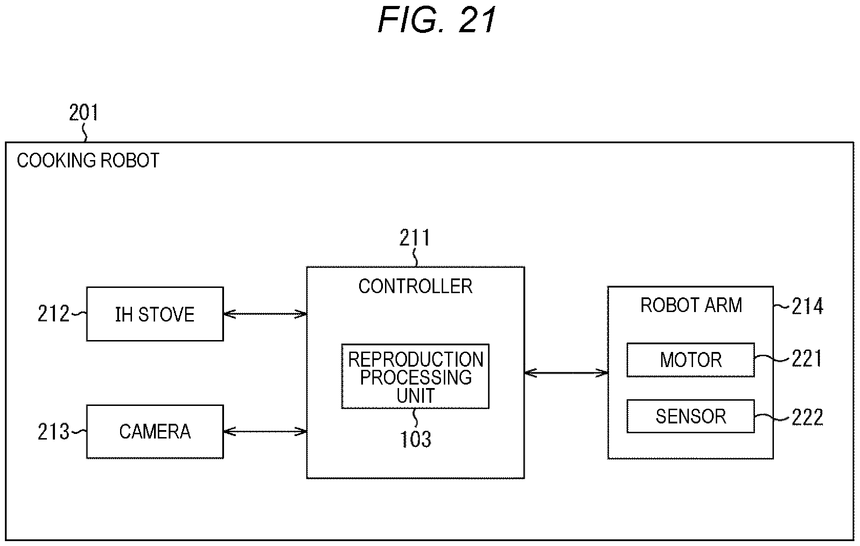

Fig. 21 is a block diagram illustrating a configuration example of the cooking robot 201.

The cooking robot 201 is configured by connecting an IH stove 212, a camera 213, and a robot arm 214 to a controller 211.

The controller 211 includes a computer including a CPU, a ROM, a RAM, a flash memory, and the like. The controller 211 executes a predetermined program by using the CPU and controls the entire action of the cooking robot 201. In the controller 211, a reproduction processing unit 103 is implemented by executing a predetermined program. The reproduction processing unit 103 of the controller 211 also performs processing similar to the reproduction cooking processing described above.

For example, the control unit 135 of the reproduction processing unit 103 controls heating by the IH stove 212 on the basis of information included in the recipe data. Furthermore, the control unit 135 drives the robot arm 214 on the basis of information included in the recipe data to perform individual cooking work.

The IH stove 212 corresponds to the IH stove 11 (Fig. 3 and the like), and heats a cooking instrument such as a pot. For example, the IH stove 212 is provided at a predetermined position on a top plate of a housing of the cooking robot 201.

The camera 213 corresponds to the camera 22, and captures an image of a state of an ingredient being cooked. Control of the IH stove 212 and the robot arm 214 by the reproduction processing unit 103 is also performed on the basis of an analysis result of a video image captured by the camera 213.

The camera 213 captures an image of a state around the cooking robot 201, and outputs the image obtained by the image capture to the controller 211. The camera 213 is provided at various positions such as the front of the housing of the cooking robot 201 and a tip of the robot arm 214.

The robot arm 214 is provided with a motor 221 and a sensor 222. For example, a plurality of robot arms 214 is provided.

The motor 221 is provided at each joint portion of the robot arm 214. The motor 221 performs a rotational action around an axis under the control of the controller 211. An encoder that measures a rotation amount of the motor 221, a driver that adaptively controls rotation of the motor 221 on the basis of a measurement result by the encoder, and the like are also provided at the individual joint portions.

The sensor 222 includes, for example, a gyro sensor, an acceleration sensor, a touch sensor, and the like. The sensor 222 measures an angular speed, an acceleration, and the like of each joint portion during an action of the robot arm 214, and outputs information indicating a measurement result to the controller 211. Control of the robot arm 214 is also performed on the basis of a measurement result obtained by the sensor 222.

In the cooking robot 201 having such a configuration, all the cooking work of the reproduction cooking may be automatically performed.

<Others>

In the above description, a target state of each cooking step is assumed to be defined by any one value of the TTW values, but may be defined using a plurality of values of the TTW values. Since the target state of one cooking step is defined using a plurality of values, the reproducibility of the finish can be further enhanced. That is, the target state of each cooking step can be defined by at least any value of the TTW values.

The target state of each cooking step may not be defined by the TTW value itself, but may be defined by a value obtained by calculation using the TTW value. That is, it is possible to use, as the value of the target parameter that defines the target state, a value that is not the sensor data itself, such as a value of a parameter obtained on the basis of Temperature and Weight that are sensor data. The target parameter includes a parameter based on the sensor data.

Furthermore, although the target state is assumed to be defined by the TTW value, the target state may be defined by values of other sensor data that can be measured in a cooking environment of the reproduction cooking. For example, in a case where taste can be quantified and measured in the cooking environment of the reproduction cooking, the target state of each cooking step may be defined by a value representing taste of an ingredient being cooked.

Although an initial state of an ingredient is assumed to be defined by a temperature and a weight, the initial state of the ingredient may be defined by at least any value of the temperature and the weight.

Although the cooking performed in the cooking assistance system 1 is assumed to be heating cooking using the IH stove 11, the above-described technique can also be applied to heating cooking using other cooking device such as a microwave oven.

<<Other Embodiment 1>>

In the above-described example, the parameters used to describe the cooking work and the target state depend on a specific cooking condition. Here, a parameter expressing method applicable to different cooking conditions will be described.

Furthermore, although the cooking step is assumed to be expressed in a table form (Fig. 13), other expression method will be described. By using an expression method of the cooking process with a graph structure, expression with a higher degree of freedom becomes possible.

The following contents will be described. The contents of 1 to 3 do not depend on whether the expression method of the cooking process is in the table form or the form using a graph structure.

1. Method for describing parameters included in recipe data without depending on specific cooking conditions
1-1. A heating state of an ingredient to be brought into a target state is described with an evaluation value representing a state change due to heating, as a Cook Value or a similar function including a Z value
1-2. A heating state of an ingredient to be brought into a target state is described with a moisture content (component content).
1-3. A heating condition of cooking object is described with a temperature profile
2. Method for external processor to control heating device on basis of recipe data
2-1. Device information and heating medium information are acquired via an interface of a heating device
2-2. A temperature profile and a temperature measurement position of recipe data are converted into a temperature profile and a temperature measurement position conforming to an actual cooking environment
2-3. A temperature sensor of a heating device corresponding to the temperature profile and the temperature measurement position converted in 2-2 is designated via an interface of the heating device
3. "State" as target of measurement and determination
4. Method for expressing recipe data (cooking process) in graph structure

4-1. A cooking operation and a target state are expressed with nodes, and a restriction of a temporal order thereof is expressed with an edge
4-2. A cooking operation and a parameter (quantification condition) of a target state are described
4-3. Processing flows of an ingredient operation and a heating operation are described in parallel

<<1. Parameter Expression Method without Depending on Cooking Condition>>

As a method of describing the target state, a method using measurement values or function values of time, a temperature, and a weight as main parameters has been described. However, when a cooking condition such as a cooking device or a finished amount changes between a time of recording cooking and a time of reproduction cooking, the numerical values change.

Similarly, the parameters related to the cooking work also depend on the cooking condition at the time of recording cooking. For example, an output level of heating power setting varies depending on specifications of the device. In order to obtain recipe data applicable to cooking conditions different from those at the time of recording cooking, an expression method using parameters that do not depend on the cooking conditions is desirable.

<Parameter Expression Related to "State Determination">

A specific example of an expression method of a parameter regarding "state determination" during a cooking process will be described.

- 1-1. State description with Cook Value

There is an index called Cook Value as a parameter expressing a heating state of an ingredient. For example, an F value described in the following document corresponds to the Cook Value. A target state of a cooking step can be defined using the Cook Value.

"Title of the book: "Food Engineering Dictionary Useful for Food Production", Author: edited by Japan Society for Food Engineering, Published: First edition, First printing, December 1, 2020"

The F value is formulated as an index used in sterilization engineering, but can also be interpreted as a quantitative index of a change in a food component due to heating. The F value is written as a Cv value. Hereinafter, the F value will be described as a Cv value. The Cv value is expressed as a function including a Z value and a reference temperature Tr.

The Z value indicates temperature dependence of killing of bacteria or decomposition of food components. As the Z value is smaller, an influence of a temperature rise is larger. The Z value is a constant unique to every food component, and is acquired by referring to a database.

The reference temperature Tr is determined by a heating condition for every recipe with, as a guide, a lower limit value of a temperature at which a component change of interest occurs, and the same reference temperature Tr is used at the time of recording cooking and at the time of reproduction cooking.

In a case where these constants are determined, the Cv value can be calculated by determining a start time and an end time of heating cooking (a start point and an end point on a time axis), which are times indicating an integration section. Other evaluation values similar to the Cv value can also be used. It is possible to use an evaluation value that can represent a state change due to heating by using time integration of a function using the Z value which is a characteristic value unique to a food component.

In a case of performing heating in a certain cooking step, when a time point immediately after a start of heating is defined as time t1, and any time point after the start of heating is defined as time t2, Cv(t1 → t2), which is a Cv value having an integration section from time t1 to time t2, is calculated from a temperature profile in the same section. The temperature profile is time-series data of a temperature described with reference to Fig. 16.

By using any threshold value X, the target state of the cooking step is defined as the following Formula (1).

$$\mathrm{Cv(t1 \rightarrow t2)} \geq \mathrm{X} \quad \cdots (1)$$

For example, at a time of heating in the reproduction cooking, Cv(t1 → t2) is calculated on the basis of the temperature up to time t2 and compared with a threshold value defined in the recipe data, thereby determining whether or not the target state is reached.

Here, it is necessary to define a position whose temperature is used to calculate the Cv value. In a case of evaluating the Cv value, a temperature of the ingredient itself at which a chemical reaction occurs is used.

Information indicating which position where the temperature is indicated may be described in the target state. For example, in a case of indicating a core portion temperature of the ingredient to be heated, if a probe type thermometer capable of measuring the inside of the ingredient is prepared in the cooking assistance system 1, the temperature can be directly measured. In a case where the probe type thermometer is not prepared, the core portion temperature of the ingredient may be estimated on the basis of a heat conduction model of the heating system, from a pot bottom temperature measured by a sensor (temperature sensor 32 in Fig. 5) included in the heating device 51 and a measurement value of a thermographic camera (camera 22 in Fig. 5) that captures an image of the inside of the pot from above.

The heating object includes a plurality of food components, and the Z value described above is also different for every food component. The determination condition may be set by focusing on one food component that most affects the reproducibility of the finish of the dish in the heating step, or the determination condition may be set by focusing on a plurality of components. In a case where the determination condition is set by focusing on a plurality of components, it is desirable that a timing at which the determination condition is established can be uniquely specified by, for example, using a function expression using a plurality of Cv values as arguments for calculation of the evaluation value.

- 1-2. State description with moisture content

It is extremely effective to describe a target state by using a weight change of an ingredient in the pot. In particular, in heating cooking, an influence of moisture evaporation on the weight change is large. Therefore, it is often desirable to describe a condition by using a moisture content of a heating object as a parameter. By quantifying the condition with the moisture content per unit volume, dependency on an amount of the ingredient can be reduced. The target state can be defined using the moisture content of the ingredient that changes in the course of cooking.

Since a concentration of the food component depends on the moisture content, the moisture content strongly correlates with how the flavor is sensed through the sense of taste or smell. Furthermore, since an amount of water removed from the ingredient reflects a destruction state of a cell structure by heating, there is also an influence on eating texture (texture).

For example, assuming a stewing step, when the moisture content per unit volume of the heating object is represented by y, and a threshold value is represented by Y, a target state of the stewing step is set by a conditional expression of the following Formula (2).

$$\mathrm{y} \leq \mathrm{Y} \quad \cdots (2)$$

For example, at the time of heating in the reproduction cooking, the moisture content of the heating object is measured and compared with a threshold value defined in the recipe data, thereby determining whether or not the target state is reached.

Similarly to the Cv value described above, it may be difficult to directly measure the moisture content of the heating object in an actual cooking environment. For example, in a case where only a weight sensor can be used in the cooking environment, the moisture content may be estimated from a weight of every ingredient and a measurement value of a weight inside the pot in the course of heating. In a case where a sensor capable of measuring an accurate moisture content in real time is prepared in the cooking environment, it is possible to perform accurate condition determination with description of the recipe data.

In addition to the moisture content, the above-described method for describing conditions can also be applied to other food components that can be chemically specified. Examples of such food components include taste-related components (substances exhibiting basic five tastes and pungency) and smell-related components (volatile low molecular organic compounds) described in Japanese Patent Application No. 2022-048036. Furthermore, there are also various components belonging to carbohydrates, lipids, proteins, minerals, and vitamins known as the five major nutrients.

<Parameter Expression Related to "Operation">

A specific example of an expression method of a parameter related to "operation" during a cooking process will be described.

- 1-3. Description of heating condition with temperature profile

In the step chart of Fig. 13, the heating condition is described with the heating power setting value of the heating device 51 (IH stove 11), but the heating power setting value depends on the specifications of the heating device. As an expression method of contents of the heating operation, a temperature profile in a course of heating may be used.

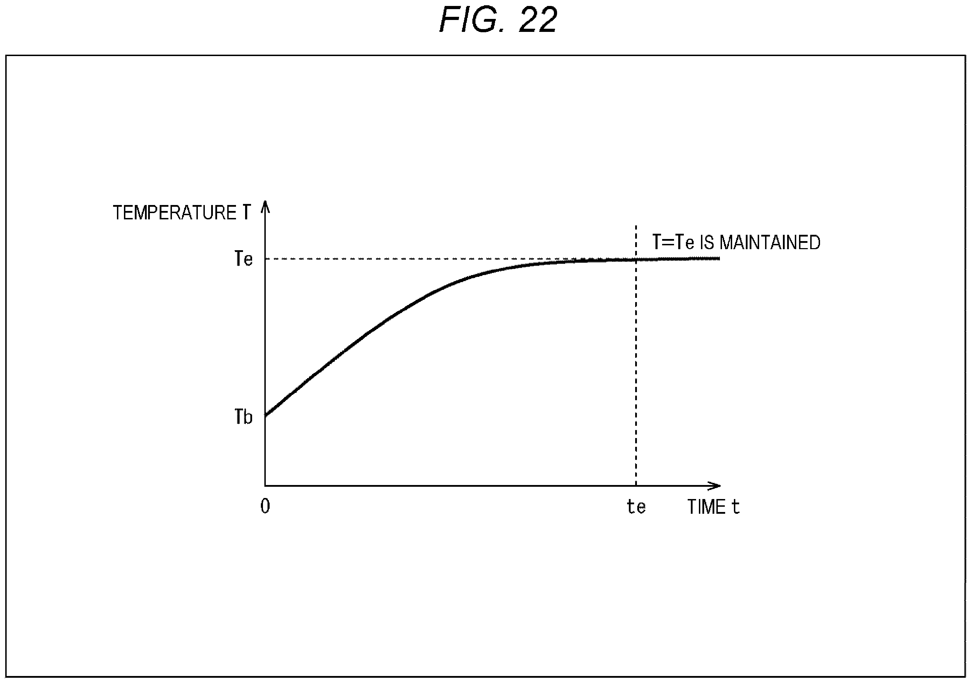

Fig. 22 is a view illustrating an example of a temperature profile. In Fig. 22, the horizontal axis represents time and the vertical axis represents temperature.

The temperature profile illustrated in Fig. 22 is a temperature profile in which a temperature reaches an initial temperature Tb at a start of heating (t = 0), thereafter, monotonically rises to become a temperature Te at time te. In a case where such a temperature profile is set as the heating condition, it is interpreted that heating control is performed so as to reproduce the same temperature profile at a specific measurement position in the reproduction cooking.

In practice, perfect matching of the temperature profiles is difficult. A timing of a temperature change may be changed, and a heating time during the reproduction cooking may be longer than a heating time during the recording cooking. In this case, a condition is set such that a target temperature at any time point can be uniquely interpreted such that the temperature Te is maintained in a period of $t \geq te$.

Also for the temperature profile, it is important to define a position where the temperature is measured. The temperature of a specific position of the cooking device, such as a central portion of a pot bottom, may be measured, but a temperature of the ingredient itself is important in a case of accurately expressing a cooking scientific intention. For example, a temperature of soup or frying oil in the pot, a portion where the ingredient is in contact with the frying pan (a heating surface of the ingredient), an ingredient core portion, or the like may be measured.

In a normal cooking environment, it may be difficult to accurately measure the temperature profile. In this case, the temperature of the ingredient may be estimated on the basis of a measurement value of the pot bottom temperature and heat transfer characteristics of the pot. For example, an internal temperature of the ingredient being heated by the frying pan or the like is estimated using the method described in Japanese Patent Application No. 2020-161384. Japanese Patent Application No. 2020-161384 describes a technique of estimating a three-dimensional shape, a surface temperature, and heat conduction characteristics of a cooking object and estimating an internal temperature of the cooking object by heat conduction analysis using a three-dimensional model.

It is not necessary to use data measured in an actual course of cooking as it is as the temperature profile describing the heating condition. For example, a temperature profile obtained by editing a part or all of measurement data may be used, or a temperature profile calculated by analysis or numerical calculation based on an appropriate theoretical model may be used regardless of measurement.

A temperature change in the actual course of cooking is affected by disturbances such as putting of ingredients and stirring operations. In many cases, it is inappropriate to reproduce such a fine temperature change as well.

As the target heating condition, a temperature profile obtained by removing a temperature change due to disturbance may be described. In this case, it is desirable that the cooking assistance system 1 detect a deviation from a target temperature due to disturbance generated in the course of reproduction cooking, and perform appropriate heating control.

Whereas, it is sometimes necessary to reproduce a fine temperature change due to disturbance at the time of recording cooking as in a case of aiming at an extremely high finish reproducibility. In this case, a temperature profile including a temperature change due to disturbance is described as the heating condition, and heating control is performed such that the change is also reproduced at the time of reproduction cooking.

Furthermore, in a case where it is necessary to reproduce a fine temperature change, for example, an amount and a timing of putting an ingredient are reproduced with fine accuracy, and the stirring action is accurately reproduced in units of seconds. The temperature profile of the recipe data expresses necessary and sufficient heating conditions for obtaining reproducibility of target finish.

<<2. Method for Controlling Heating Device>>

<Software Configuration>

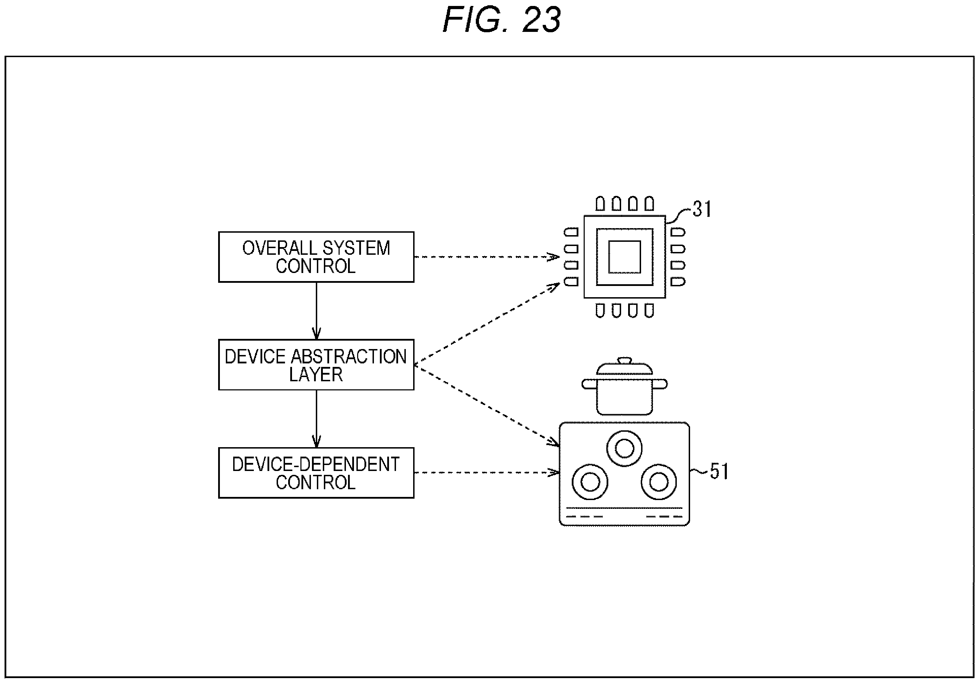

Fig. 23 is a diagram illustrating an example of a software configuration related to heating control.

The above-described "parameter expression method without depending on cooking conditions" is applied to exchange between the processor 31 and the heating device 51 in the system configuration diagram of Fig. 4. An example of the heating device 51 corresponds to the IH stove 11 as illustrated in Fig. 5, but there is a possibility that various devices are actually used.

Therefore, as illustrated in Fig. 23, a software configuration for controlling the cooking assistance system 1 desirably has a configuration including a device abstraction layer serving as an interface common to all the heating devices with respect to the overall system control which is software operating on the processor 31.

As indicated by broken arrows, the device abstraction layer can be implemented on both the processor 31 and the heating device 51. In a case of being implemented on the processor 31 side, an interface of the device abstraction layer is provided, for example, as an API of a software library. Furthermore, in a case of being implemented on the heating device 51 side, the device abstraction layer is provided as a command protocol on a general-purpose communication path such as a virtual COM port, for example.

The device abstraction layer serves as an abstract interface for the processor 31 to control the heating device 51. The heating device 51 is also a logical functional unit. Software that operates on the processor 31 may be included in the heating device 51 as some components.

Heating control of the present system has the following features.

    1. The processor 31 receives some or all of contents corresponding to the information element of the "cooking device" in Fig. 9 from the heating device 51 via the interface.

    2. Using the information received from the heating device 51, the processor 31 converts a temperature profile described in the recipe data as the heating condition and information about a corresponding temperature measurement position so as to conform to the actual cooking environment.

    3. The processor 31 transmits the temperature profile and the information about the corresponding temperature measurement position to the heating device 51 via the interface, and instructs the heating condition.

"Device information" corresponding to the information element of the above-described 1. includes specification information and arrangement information of the temperature sensor included in the heating device 51.

The specification information of the temperature sensor includes information regarding specifications such as a sensor type, a measurement temperature range, resolution, accuracy, a sampling rate, and latency. In a case where an optical sensor such as a radiation thermometer or a thermographic camera is provided, information about an optical system such as a focal length, a viewing angle, a depth of field, and spatial resolution is included in the specification information.

Whereas, the arrangement information of the temperature sensor includes mechanism design information necessary for specifying a measurement position by each sensor. For example, in a case where a fixed thermocouple is provided, information indicating a measurement position on a three-dimensional structure of the heating device 51 or the heating medium is included. Furthermore, in a case where a radiation thermometer is provided, information indicating an attachment position of a sensor on a three-dimensional structure and a direction of an optical axis is included. In a case where a movable sensor that can be freely moved by a user is provided, such as a probe-shaped thermocouple, arrangement information is not specified.

"Heating medium information", which is another information element of the above-described 1., includes specification information and arrangement information of the heating medium.

The specification information of the heating medium corresponds to "specifications of a pot" or "individual characteristics of a pot" in Fig. 9. Other information may be included in the specification information of the heating medium.

The arrangement information of the heating medium corresponds to "arrangement of a pot (when fixed)" in Fig. 9. The arrangement information is information for specifying a relative position and orientation of the heating medium with respect to the heating device 51. As means for detecting the position and orientation of the heating medium, for example, means for estimating by performing image processing (object recognition) on an image captured by the camera 22 in Fig. 3 is used.

In a case where the "device information" and the "heating medium information" have sufficient information amounts, the processor 31 constructs a simulation model of the heating system by using these pieces of information. By using the constructed simulation model, the processor 31 can estimate a temperature measurement value indicated by each sensor included in the heating device 51 by calculating a temperature change under any heating condition and any arrangement situation of the heating object.

<Heating Control in Case Where Heating Medium is Fixed>

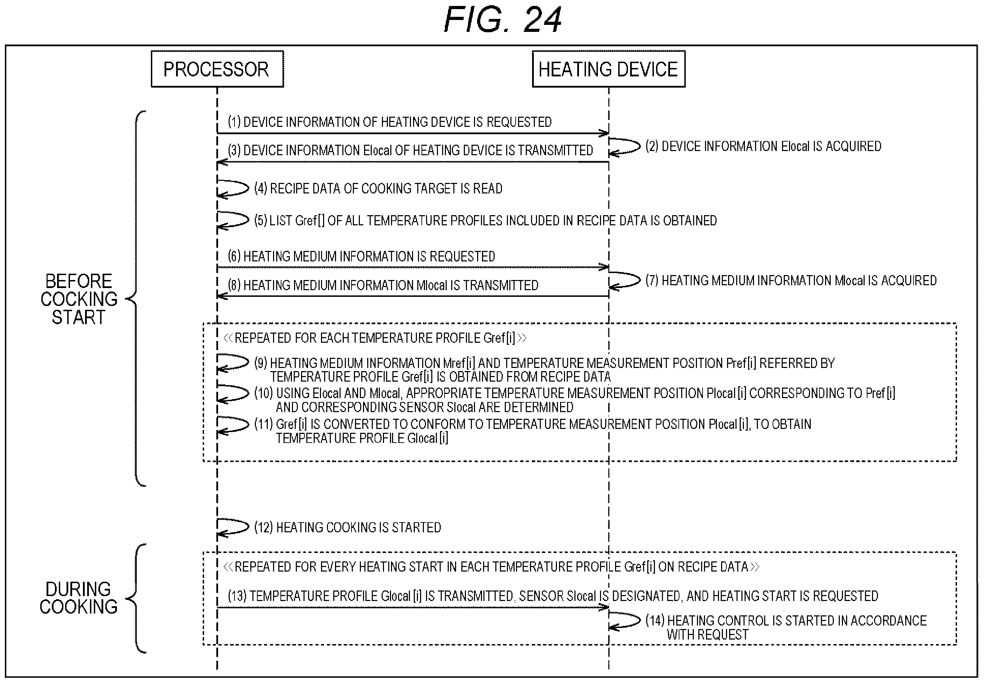

Fig. 24 is a sequence diagram illustrating a processing flow in a case where heating control is performed. Here, the description will be given focusing on transfer of information on the interface in a case where reproduction cooking is performed on the basis of recipe data in which a heating condition is described using a temperature profile.

The sequence diagram illustrated in Fig. 24 illustrates a processing flow in a case where a heating medium such as a pot or a frying pan is fixed and does not move during cooking. The term "fixing" means that a relative arrangement between the heating device 51 and the heating medium does not change. A position of the heating medium to be measured by the temperature sensor included in the heating device 51 is not to be changed.

A straight arrow between the processor 31 and the heating device 51 illustrated in Fig. 24 represents information communication on the interface. Furthermore, a loop-back arrow represents internal processing of each of the processor 31 and the heating device 51.

The suffix "ref" of the symbol means information included in the recipe data, and "local" means information about the heating device 51 (a cooking environment for executing processing). The symbol "[]" represents a list (array) including one or more data elements, and [i] represents an i-th data element in the list.

Processing (1) to (11) is processing before a start of heating cooking using the heating device 51. The processing in and after Processing (12) corresponds to processing during the heating cooking.

Processing (1):

The processor 31 requests device information from the heating device 51. The device information required here is specification information of the heating device 51. The specification information of the heating device 51 corresponds to, for example, the "specifications of a stove" in Fig. 9. Information indicating an action state of the stove or the like may be included in the specification information of the heating device 51.

Processing (2):

The heating device 51 acquires device information Elocal in response to the request of Processing (1), and prepares transmission data.

Processing (3):

The heating device 51 transmits the device information Elocal to the processor 31. Hereinafter, information used for processing will be appropriately described using symbols.

Processing (4):

The processor 31 reads recipe data of the cooking target.

Processing (5):

The processor 31 obtains, from the recipe data, a list Gref [] of all temperature profiles that describe heating conditions during the cooking process and a list Pref [] of corresponding temperature measurement positions.

Processing (6):

The processor 31 requests heating medium information from the heating device 51.

Processing (7):

The heating device 51 acquires current heating medium information Mlocal in response to the request of Processing (6), and prepares transmission data.

Processing (8):

The heating device 51 transmits the heating medium information Mlocal to the processor 31.
The following Processing (9) to (11) is Processing executed for every temperature profile Gref [i] that is each element of the list Gref [] of temperature profiles.

Processing (9):

The processor 31 acquires heating medium information Mref [i] and a temperature measurement position Pref [i] designated by the temperature profile Gref [i], from the recipe data. The heating medium information and the temperature measurement position are associated for each temperature profile. The heating medium information Mref [i] is the same information as some information elements of the heating medium information Mlocal. Specification information (a size, a shape, a material, and the like) of the heating medium assumed by the temperature profile Gref [i] is acquired as the heating medium information Mref [i].

Processing (10):

The processor 31 determines an appropriate temperature measurement position Plocal [i] corresponding to the temperature measurement position Pref [i] of the recipe data and a sensor Slocal capable of measuring the position. The sensor Slocal is selected with reference to sensor information included in the device information Elocal. On the basis of the temperature measurement position Pref [i] designated by the temperature profile Gref [i], the sensor Slocal to be used for measuring the temperature at the time of heating control is selected from the sensors included in the heating device 51.

Processing (11):

The processor 31 converts the temperature profile Gref [i] of the recipe data so as to conform to the temperature measurement position Plocal [i], to obtain a temperature profile Glocal [i]. The temperature profile Gref [i] is converted on the basis of the temperature measurement position Plocal [i] included in the device information Elocal, and the temperature profile Glocal [i] is generated. For example, the temperature profile Gref [i] is converted according to a difference between the temperature measurement position Pref [i] and the temperature measurement position Plocal [i], and the temperature profile Glocal [i] is generated.

The following processing is processing after a start of heating cooking.

Processing (12):

The processor 31 starts heating cooking according to the recipe data.

Processing (13) and Processing (14) are repeatedly executed at a timing of starting heating in accordance with the temperature profile Gref [i].

Processing (13):

The processor 31 transmits the temperature profile Glocal [i], which is a temperature profile after conversion, to the heating device 51, designates the sensor Slocal to be used for temperature measurement, and requests the start of heating. The sensor Slocal determined in Processing (9) is designated.

Processing (14):

The heating device 51 starts heating control such that a temperature measurement value of the sensor Slocal reproduces the temperature profile Glocal [i] in accordance with the request of Processing (13).

Hereinafter, contents of the above-described Processing (10) and Processing (11) for each situation will be described.

(A) Case of same condition as assumption of recipe data

Consider a situation where the same heating medium as the heating medium assumed by the recipe data can be used to measure the same position as the temperature measurement position assumed by the recipe data. This situation is a situation where Mlocal = Mref [i] is satisfied, and the heating device 51 includes a temperature sensor capable of measuring the same position as Pref [i]. In this case, a temperature sensor capable of measuring the same position as Pref [i] is selected as the sensor Slocal. Furthermore, Plocal [i] = Pref [i] and Glocal [i] = Gref [i] are set.

This situation is the simplest situation. For example, the present situation corresponds to a situation where reproduction cooking is performed using the same stove and the same pot as those used for recording cooking.

(B) Case where heating medium is different and temperature measurement position is same

Consider a situation where a different heating medium from the heating medium assumed by the recipe data can be used to measure the same position as the temperature measurement position assumed by the recipe data. This situation is a situation where Mlocal ≠ Mref [i] is satisfied, and the heating device 51 includes a temperature sensor capable of measuring the same position as Pref [i]. In this case, similarly to the above-described (A), a temperature sensor capable of measuring the same position as Pref [i] is selected as the sensor Slocal. Furthermore, Plocal [i] = Pref [i] and Glocal [i] = Gref [i] are set.

This situation corresponds to, for example, a situation where Pref [i] indicates a central portion of an outer surface of a pot bottom. If the temperature measurement position intended by the recipe data is the outer surface of the pot bottom, it suffices that the temperature profile at that position is reproduced regardless of the type of pot.

(C) Case where heating medium is same and temperature measurement position is different

Consider a situation where the same heating medium as the heating medium assumed by the recipe data can be used, but the heating device 51 does not include a temperature sensor capable of measuring the temperature measurement position Pref [i]. In this case, Mlocal = Mref [i] is satisfied.

In a case where the heating device 51 has a temperature sensor capable of measuring a position close to Pref [i], the temperature sensor capable of measuring the position close to Pref [i] is selected as the sensor Slocal, and the temperature measurement position is selected as Plocal [i]. For example, this case corresponds to a situation where Pref [i] indicates a center of the pot bottom, and Plocal [i] indicates a position away from the center of the pot bottom.

Typically, a temperature profile of Plocal [i] will not be the same as the temperature profile Gref [i]. Therefore, processing of converting the temperature profile is performed using device information Einfo and characteristic information included in heating medium information Minfo.

For example, a heat conduction model of the heating system is constructed so that temperatures at positions of both Pref [i] and Plocal [i] can be simultaneously estimated. Furthermore, by performing a simulation using the constructed heat conduction model, heating conditions reproducing the temperature profile Gref [i] are specified at Pref [i], and a temperature profile estimated at Plocal [i] under the same heating conditions is adopted as Glocal [i].

As a different example, consider a situation where Pref [i] indicates a heating surface of an ingredient itself or an ingredient core portion. In this case, the heating device 51 may not include a temperature sensor that measures a position close to Pref [i]. Similarly, as in the method proposed in Japanese Patent Application No. 2020-161384 described above, Slocal, Plocal [i], and Glocal [i] can be determined using a heat conduction model that estimates the temperature profile of Pref [i] from a measurement value of the sensor.

(D) Case where heating medium and temperature measurement position are both different

Consider a situation where the temperature measurement position Pref [i] assumed by the recipe data cannot be measured using a heating medium different from the heating medium assumed by the recipe data. In this case, Mlocal ≠ Mref [i] is satisfied.

The processing in this case is basically similar to the processing of (C) described above. First, using a model in which the heating device 51 and the heating medium Mlocal are combined, a measurement position Qref [i] that enables temperature estimation by a simulation and is as close as possible to Pref [i] and the measurement position Plocal [i] that can be measured by the sensor of the heating device 51 are determined, and the sensor that measures Plocal [i] is selected as the sensor Slocal. Thereafter, by setting Pref [i] as Qref [i], processing of obtaining Glocal [i] is performed similarly to (C) described above.

That is, a heat conduction model of the heating system is constructed so that the temperatures at both the positions of Qref [i] and Plocal [i] can be simultaneously estimated. Furthermore, by performing a simulation using the constructed heat conduction model, heating conditions reproducing the temperature profile Gref [i] are specified at Qref [i], and a temperature profile estimated at Plocal [i] under the same heating conditions is adopted as Glocal [i].

This situation corresponds to a situation where Pref [i] and Qref [i] indicate an ingredient heating surface (a central portion of an inner surface of the pot bottom), but the positions of Pref [i] and Qref [i] as viewed with reference to the heating device 51 are slightly different because a structure of the pot is different and a thickness of the pot bottom is different.

(E) Case where valid conversion cannot be performed

Consider a situation where there is no effective means for determining the effective temperature measurement position Plocal [i] and temperature profile Glocal [i] corresponding to Pref [i] and Gref [i]. In this case, for a period corresponding to Gref [i], information about Pref [i] and Gref [i] is presented to a cook by using a UI of the cooking assistance system 1. The cook manually adjusts the heating power with reference to the presented information.

<Heating Control in Case Where Type and Arrangement of Heating Medium are Changed During Cooking>

There is a case where it is necessary to consider information about the heating device and the heating medium while heating cooking is performed.

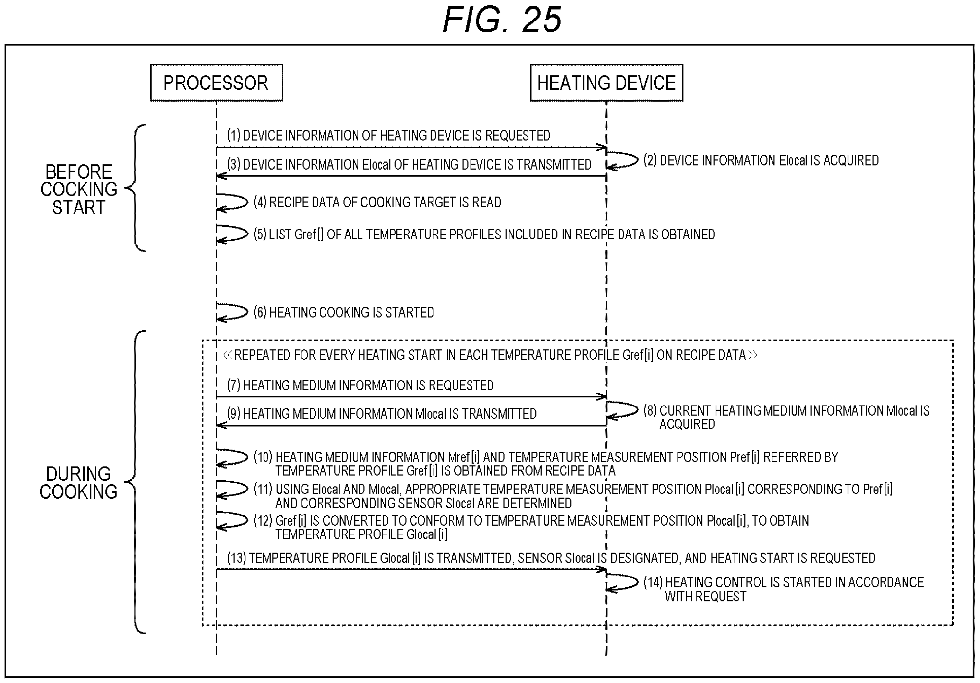

Fig. 25 is a sequence diagram illustrating a processing flow in a case where a type and an arrangement of the heating medium are changed during the cooking process.

The processing illustrated in Fig. 25 is different from the processing illustrated in Fig. 24 in that the heating medium information is acquired by the processor 31 at a timing during cooking when the heating condition indicated by the recipe data changes. In the processing illustrated in Fig. 24, the heating medium information is acquired before a cooking start. The processing illustrated in Fig. 25 is basically similar to the processing illustrated in Fig. 24 except that the acquisition timing of the heating medium information is different. Detailed description is omitted.

That is, after heating cooking is started in Processing (6), Processing (7) to (14) including transmission and reception of the heating medium information is executed for every element Gref [i] included in the list Gref [] of temperature profiles.

As Processing (7), processing of requesting the heating device 51 for the heating medium information is performed by the processor 31. As Processing (8), processing of acquiring the current heating medium information Mlocal and preparing transmission data is performed by the heating device 51. Furthermore, as Processing (9), processing of transmitting the heating medium information Mlocal to the processor 31 is performed by the heating device 51. After the heating medium information is transmitted and received, Processing (10) to (14) is performed. Processing (10) to (14) in Fig. 25 is the same as Processing (9) to (11), (13), and (14) in Fig. 24.

<Heating Control in Case of Performing Feedback Control on Processor Side>

In both the processing in Figs. 24 and 25, heating conditions are designated for the heating device 51 by using the temperature profile. The heating device 51 performs heating power adjustment to reproduce the temperature profile. The heating power adjustment can also be performed on the processor 31 side.

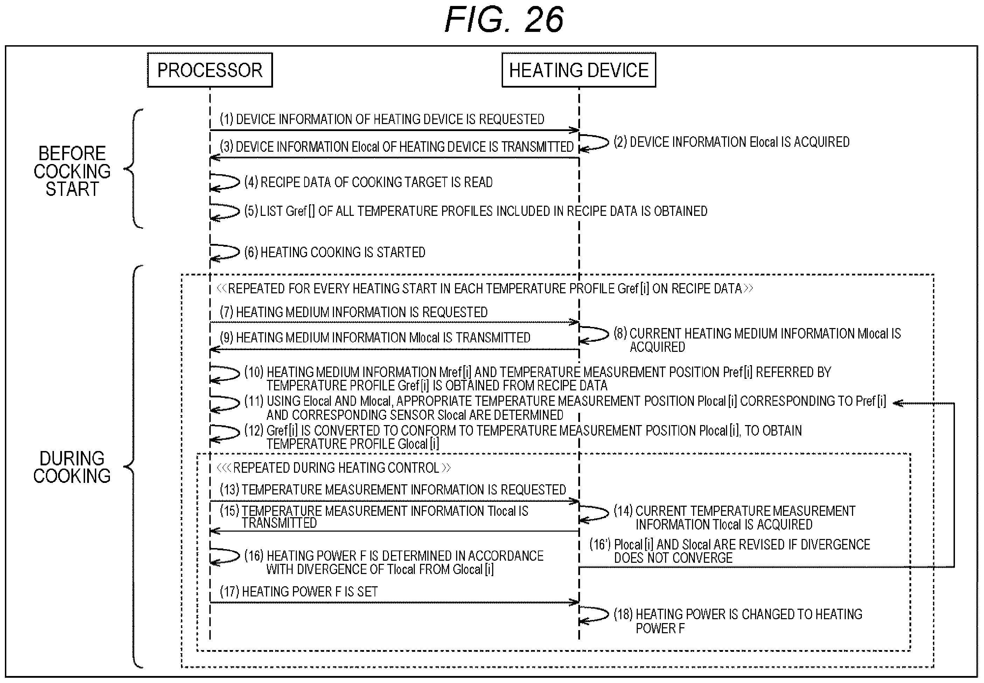

Fig. 26 illustrates a processing flow in a case where the processor 31 side adjusts the heating power. In the processing illustrated in Fig. 26, processing that is a difference from the processing illustrated in Fig. 25 will be mainly described. Processing (1) to (12) illustrated in Fig. 26 is the same as Processing (1) to (12) illustrated in Fig. 25. The processor 31 performs, as Processing (12), processing of converting the temperature profile Gref [i] of the recipe data to conform to the temperature measurement position Plocal [i] and obtaining the temperature profile Glocal [i], and then the following Processing (13) to (18) is repeatedly performed during the heating control.

Processing (13):

The processor 31 requests temperature measurement information from the heating device 51.

Processing (14):

The heating device 51 acquires a current temperature measurement value of each temperature sensor included in the device information Elocal, and prepares temperature measurement information Tlocal.

Processing (15):

The heating device 51 transmits the temperature measurement information Tlocal to the processor 31. In a case where the heating device 51 is compatible, a history of past temperature measurement values may be included in the temperature measurement information Tlocal.

Processing (16):

The processor 31 performs so-called feedback control according to a deviation between the target temperature profile Glocal [i] and an actual temperature profile obtained from Tlocal, and determines heating power F. The heating power F determined here is device-specific information that can be acquired from the device information Elocal, and depends on the specifications of the heating device 51.

For example, in a case where a deviation between the target temperature profile Glocal [i] and the actual temperature profile obtained from Tlocal does not tend to converge, the processing returns to Processing (11), and the sensor Slocal corresponding to the temperature measurement position Plocal [i] may be reselected.

Processing (17):

The processor 31 sets the heating power F in the heating device 51.

Processing (18):

The heating device 51 changes heating power to the heating power F and continues heating.

The feedback control based on the temperature profile can be performed on the heating device 51 side as illustrated in Figs. 24 and 25, or can be performed on the processor 31 side as illustrated in Fig. 26. Usually, it is advantageous that an algorithm of the feedback control is adapted to design specifications and characteristics of the device. It is desirable that the function of the feedback control is implemented on the heating device 51 side, and the feedback control based on the temperature profile is performed on the heating device 51 side as illustrated in Figs. 24 and 25.

Whereas, in a case where the function of the feedback control is implemented on the processor 31 side, it is possible to dynamically optimize the target temperature profile by using information (temperature profile Glocal [i]) unique to the processor 31 side as in Processing (16) of Fig. 26.

<<3. "State" as target of measurement and determination>>

As an index expressing a state as a target of measurement and determination, it is possible to use any index quantitatively expressing a state of a cooking object or a cooking device at any time point during a cooking process. The index expressing the state includes at least the following contents.

1. Time/temperature/weight (TTW) value used to express target state
2. Index used for expressing initial state or "transient state"
3. Index indicating component of flavor
4. Index indicating component of cooking action information
5. Index indicating environmental information

The component of flavor of the above-described 3 include, for example, a taste including basic five flavors (salty, sour, bitter, sweet, and umami), an aroma, a texture, an apparent temperature, and a color.

The component of cooking action information of the above-described 4 include, for example, ingredient information and action information. The ingredient information is information regarding ingredients to be used in the cooking step. The information regarding ingredients includes information representing a type of ingredient, an amount of ingredient, a size of ingredient, and the like. Whereas, the action information is information regarding a motion of the cook in the cooking step. The information regarding a motion of the cook includes information representing a type of cooking tool used by the cook, a motion of the body of the cook at each time including a motion of the hands, a standing position of the cook at each time, and the like.

Each component of the flavor and the cooking action information is disclosed in, for example, WO 2020/179407 A.

The index indicating environmental information in the above-described 5 includes a temperature and a humidity of a cooking environment. Details of the temperature and the humidity of the cooking environment will be described later.

While the above-described 1 to 3 are indices that directly express a state, the above-described 4 and 5 are indices that indirectly express a state. There may be a case where it is difficult to directly measure and determine the state of the cooking object due to a technical problem or the like. For example, in a case where the state of the cooking object cannot be directly measured and determined, cooking action information or environmental information is used as an index for estimating the state.

It is also possible to use the following indexes.

    6. Sound or vibration issued by cooking object and cooking device
    7. Viscosity of cooking object

Sound issued by the cooking object or the cooking device includes not only sound having a frequency in an audible range but also sound having a frequency in an inaudible range such as an ultrasonic wave.

The sound during cooking is measured by an acoustic sensor including a microphone. Furthermore, vibration during cooking is measured by a vibration sensor or the like. Viscosity of the cooking object is measured by, for example, a viscometer that is a type of stress sensor.

<<4. Method of Expressing Cooking Process in Graph Structure>>

Although the cooking process is shown in the table form in Fig 13, it is also possible to express the cooking process in a graph structure. In particular, description of a target state during a cooking process will be described. A cooking process expressed in a graph structure is referred to as a graph.

<Basic Configuration of Graph Structure>

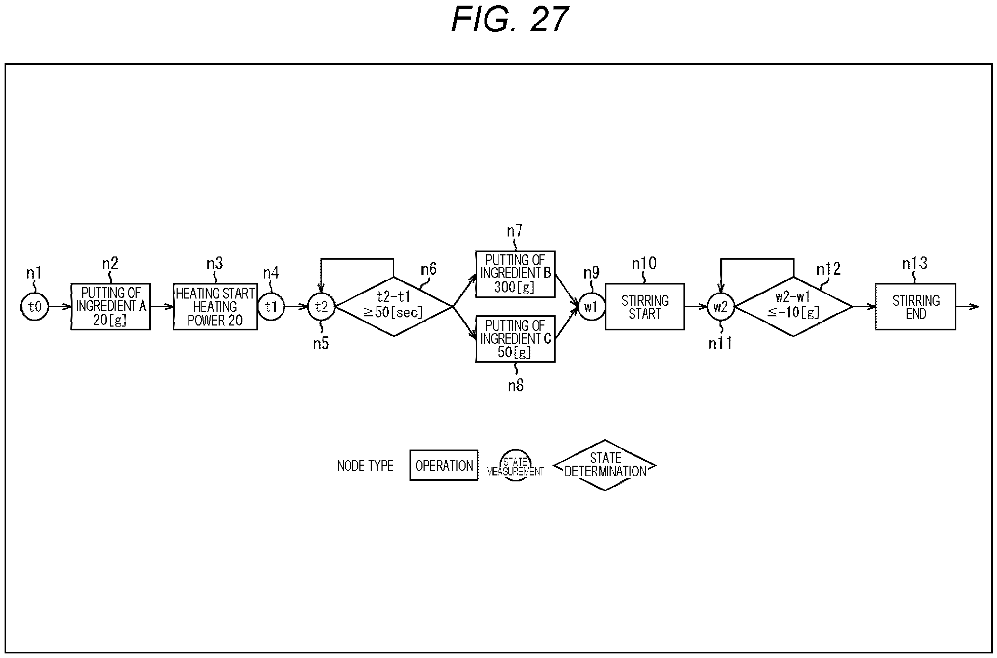

Fig. 27 is a diagram illustrating an example of a graph. For convenience of description, a graph of a simplified cooking process is shown.

As illustrated in Fig. 27, the graph includes at least the following three types of nodes.

    1. Operation node
    2. State determination node
    3. State measurement node

The operation node indicated by a rectangle is a node representing an operation performed on a cooking device or an ingredient. The operation may be automatically performed by processing of the device, or may be manually performed by human work.

As illustrated in Fig. 27, the operation corresponds to: putting of ingredients (Nodes n2, n7, and n8); stirring (Nodes n10 and n13); placing and removing a pot lid; heating start (Node n3); stopping; and heating power adjustment. Furthermore, all the contents illustrated as cooking work in Fig. 10 also correspond to the operation. The operation node is a node corresponding to cooking work.

The state determination node indicated by a diamond is a node representing a target condition of the cooking state. Similarly to the target state, it is important that the condition is quantitatively described so that a timing at which the corresponding condition is satisfied can be uniquely specified on a time axis. The state determination node is a node corresponding to the target state.

Node n6 in Fig. 27 represents a condition that the elapsed time from time t1 to time t2 is 50 seconds or more. Node n12 represents a condition that Weight w2 measured as a weight of the heating object in the pot decreases by 10 g or more from Weight w1.

A state measurement node indicated by a small circle is a node representing a timing to refer to a sensor value or the like related to the state determination node.

In Fig. 27, Node n4 represents measurement at time t1, and Node n5 represents measurement at time t2. Node n9 represents measurement of Weight w1 of the heating object in the pot, and Node n11 represents measurement of Weight w2 of the heating object in the pot.

A value as a target of measurement in the state measurement node includes measurement values obtained by various sensors. As long as information can be quantified, information that can be acquired by visual observation by a human may be a target of measurement.

In a case where a rule enabling interpretation of the measurement condition without ambiguity is provided, the state measurement node can be omitted. For example, as a rule for omitting the state determination node, a case is provided in which a sensor value or the like is referred to at the same timing as determination of the state measurement node.

Note that the state measurement node is a node to be used to specify a logical reference timing of the measurement value described in the state determination node, and does not restrict a timing at which the cooking assistance system 1 actually performs measurement. Measurement may be continuously performed at all times, or an estimation value may be used instead of the measurement value in a case where actual measurement is difficult. Indication of the state measurement nodes before and after the operation node and the state determination node in Fig. 27 means that measurement is executed at a timing of a start or an end of the operation and a timing of a start or an end of the state determination.

An edge indicated by an arrow in Fig. 27 represents a restriction of a temporal order between nodes. Nodes connected by the edge need to be processed in that order. Nodes that are not connected by the edge are nodes whose order is not limited. Any processing of a plurality of nodes not connected by an edge may be executed first, or may be executed simultaneously.

By using the graph structure based on the basic rules as described above, it is possible to express the cooking process. The expression using the graph structure is reflected in the recipe data processed by the cooking assistance system 1.

<Application Example of Expression Using Parameters Without Depending on Cooking Condition>

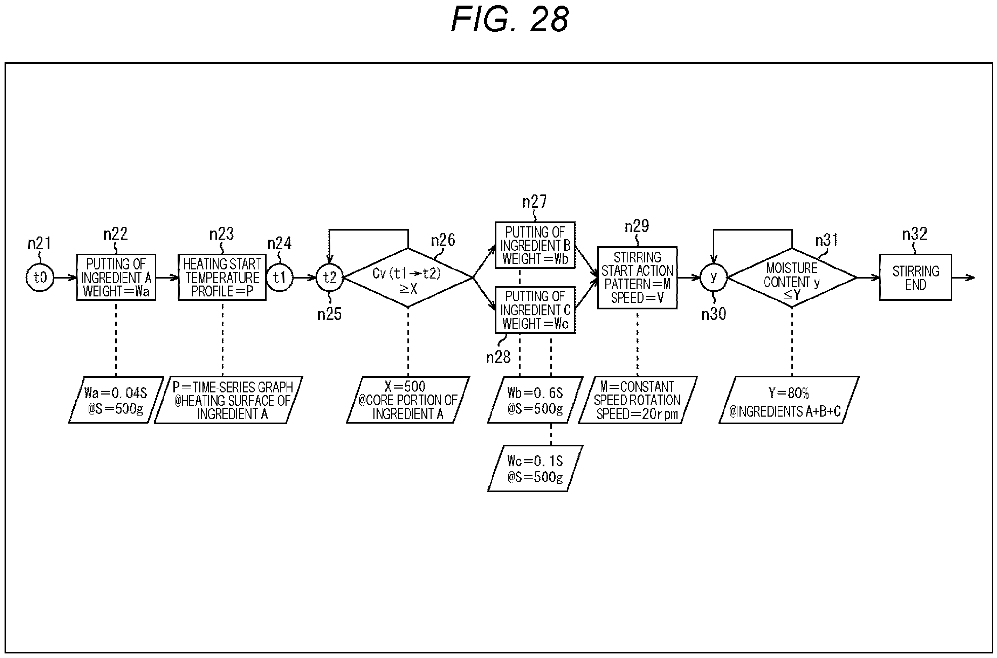

Fig. 28 is a diagram illustrating an example of a graph using parameters that do not depend on cooking conditions.

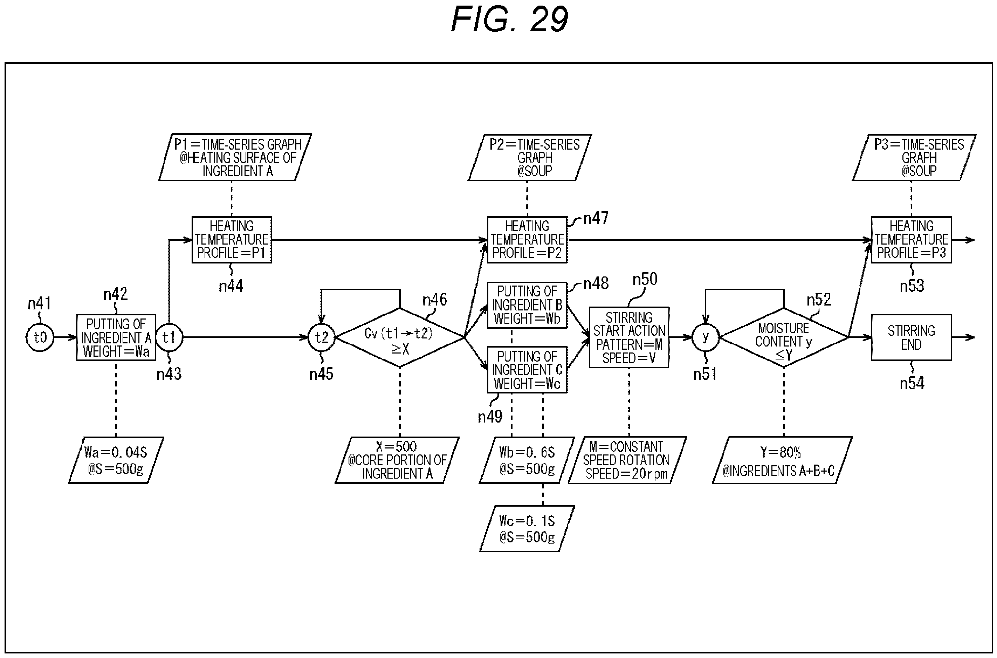

In the example of Fig. 28, information quantitatively describing contents of each node is indicated as additional information in a rectangle at a tip of a broken line extending from each node. The rectangle indicating the additional information is not a node constituting the graph. The broken line in the figure is not an edge but indicates a node to which the additional information belongs. This is similar for Fig. 29 as described later. The contents of the main nodes will be described.

Node n26, which is a state determination node, is a node describing a determination condition using the above-described Cv value as a parameter.

Assuming that a time measured at Node n24 immediately after a start of heating is time t1, and a time measured at Node n25 at a later timing is time t2, Cv(t1 → t2), which is a Cv value having an integration section from time t1 to time t2, is calculated as a function value of a temperature profile in the same section. Node n26 means standby while the Cv value calculated in such a manner is less than the threshold value X, and proceeding to the next step when the Cv value becomes equal to or greater than the threshold value X.

As the additional information of Node n26, information is set indicating that the Cv value is an evaluation value of a core portion of Ingredient A put into the pot and the threshold value X is 500. The temperature T used for calculating the Cv value means a temperature of the core portion of Ingredient A in the course of heating.

Node n31, which is a state determination node, is a node describing a moisture content per unit volume of a heating object as a parameter.

In the course of stirring of the heating object, a moisture content y per unit volume is measured at Node n30. Node n31 means continuation of stirring while y > Y is satisfied, and proceeding to the next step when y ≤ Y is satisfied.

As the additional information of Node n31, information is set indicating that the heating object for measuring moisture is a mixture of Ingredients A, B, and C put into and stirred in the pot. Furthermore, information indicating that a threshold value Y is 80% is set.

Node n23, which is a heating operation node, is a node describing that heating is started under a condition of a temperature profile P on a heating surface of Ingredient A.

As the additional information of Node n23, information is set indicating that the temperature profile P is, for example, information of a time-series graph as illustrated in Fig. 22. Furthermore, information is set indicating that a temperature of a contact surface (heating surface) of Ingredient A with respect to a heating medium such as a frying pan is requested to change as shown in the graph.

A condition in which an input weight is quantified is illustrated as additional information of each of Nodes n22, n27, and n28, which are three operation nodes of putting of ingredients. A weight S represents a finished weight of the cooking object after cooking is completed. In a case where S = 500 g is set as indicated in each piece of the additional information, for example, a weight Wa of Ingredient A indicated in the additional information of Node n22 is interpreted as Wa = 0.04S = 20 g.

An input amount of an ingredient is adjusted in proportion to the finished weight. The input amount may be represented by any function formula of the finished weight S, or a conversion rule of the weight S → Wa may be represented by a numerical table.

As additional information of Node n29 which is an operation node for starting stirring, a condition obtained by quantifying an action pattern and a speed is shown. Here, it is assumed that an automatic stirrer having a rotating blade of a type of being fixed to a pot is used. The action pattern is information that qualitatively represents the way of motion of the wings. In Fig. 28, constant speed rotation at a speed of 20rpm is set.

In this manner, it is possible to express each cooking step constituting the cooking process in a graph structure, and create recipe data representing the cooking step expressed in the graph structure at a time of recording cooking.

<Expression Example of Parallel Processing>

The expression using the graph structure is suitable for expressing parallel processing. Hereinafter, a specific example of expressing parallel processing will be described.

(A) Parallelization of heating operation and ingredient operation

In the example of Fig. 27, Node n3, which is a node related to the heating operation, is connected in series to the preceding and following nodes. However, in practice, it may be necessary to adjust the heating power by changing the heating condition during the cooking process.

Although the order of heating power adjustment and ingredient operation may be important, it may be inappropriate to clearly restrict the order in some cases. For example, such a restriction is inappropriate in a case where it is desired to maintain a temperature of the frying pan in a certain range during the cooking process of sauteing. In this case, since the temperature of the frying pan is greatly affected by the situation of putting of an ingredient and stirring, it is more appropriate to adjust the heating power according to how much the temperature of the frying pan or a temperature of an ingredient as the heating object deviates from the target temperature, instead of mechanically adjusting the heating power before and after putting of an ingredient or stirring.

Therefore, in a case where the heating condition is described using the temperature profile as described above, the cooking assistance system 1 that performs the heating control performs the heating power adjustment with reference to the temperature measurement value without depending on a procedure of the ingredient operation represented by the recipe data.

Fig. 29 is a diagram illustrating an example of a graph including a graph structure in which the heating operation and the ingredient operation are parallelized.

Nodes n44, n47, and n53, which are heating operation nodes, are nodes in which heating conditions are set by temperature profiles P1, P2, and P3, respectively, which are different temperature profiles. For example, in parallel with the heating operation at Node n47 in which the heating condition of the temperature profile P2 is set, putting of Ingredient B at Node n48, putting of Ingredient C at Node n49, and stirring at Node n50 are executed. In Fig. 29, the fact that Nodes n48, n49, and n50 are shown in parallel with Node n47 means that the heating operation of Node n47 is performed independently of the ingredient operation of Nodes n48, n49, and n50.

Such parallel notation is suitable in a case where the heating condition is expressed using the temperature profile. By using parallel notation, it is possible to clearly indicate that heating control is continuously performed in parallel with other operations.

Note that the graph of Fig. 29 includes a portion where edges of a plurality of nodes are merged to one node and connected, such as an edge portion connecting Nodes n48 and n49 to Node n50. The fact that the edges of the plurality of nodes are merged to one node and connected means that an operation of a node at the subsequent stage to be a merging destination is executed at a timing when operations of all the nodes at the preceding stage are completed. Stirring at Node n50 is performed after completion of putting of Ingredient B at Node n48 and putting of Ingredient C at Node n49.

(B) Parallelization of plurality of heating operations

Depending on the recipe, heating cooking may be performed in parallel using a plurality of IH stoves. Also in this case, any parallel processing can be expressed by expanding the graph structure of Fig. 29.

In a case where a plurality of devices of the same type is used in the cooking process, it is necessary to eliminate ambiguity in interpretation as to which device is related to the operation of each node or which device is related to the determination of each node. Therefore, in the additional information of the node, a unique identifier in the cooking process is described as a device ID.

(C) Parallelization of plurality of ingredient operations

In the graph of Fig. 27, Node n7 and Node n8 are not connected by an edge, and the order of the putting of Ingredient B at Node n7 and the putting of Ingredient C at Node n8 is not limited. The fact that Node n7 and Node n8 are illustrated in parallel means that either ingredient may be put first or may be put simultaneously, after the condition for state determination at Node n6 is satisfied.

<<Other Embodiment 2>>

A method for achieving higher reproducibility of a dish completed by reproduction cooking will be described.

A first method is a method of sensing information about an environment and reflecting the information in recording cooking/reproduction cooking. An ambient temperature and a humidity of a cooking environment are measured as environmental information. Not only the ambient temperature and the humidity are reflected in the recording cooking/reproduction cooking, but also various types of environmental information other than the ambient temperature and the humidity are used in the recording cooking/reproduction cooking.

A second method is a method for stabilizing positions of pots of various sizes (including frying pans and the like). A specific method for fixing a position of a pot will be described.

The description will be given in the following order.

    1. Sensing of environmental information and utilization in recording cooking/reproduction cooking
    1-1. Sensing of temperature/humidity of cooking environment
    1-2. Sensing of atmospheric pressure in cooking environment
    1-3. Acoustic sensing of cooking environment
    2. Method for stabilizing positions of pots of various sizes
    2-1. Method for stabilizing positions of pots of various sizes
    2-2. Addition of load sensor to fixing portion
    2-3. Electricalization of fixing portion by addition of actuator

<<1. Sensing of environmental information and utilization in recording cooking/reproduction cooking>>

Due to a difference in environment between a time of recording cooking and a time of reproduction cooking, a case is assumed in which completed dishes do not match even when the same recipe data is used. Here, a description is given to a sensor that measures an environment and a method of utilizing environmental information measured by the sensor.

For example, in a case where the environment at the time of reproduction cooking is different from the environment at the time of recording cooking, the environment at the time of reproduction cooking is adjusted so as to be the same environment as or close to the environment at the time of recording cooking. For the adjustment of the environment at the time of reproduction cooking, information indicating the environment at the time of recording cooking included in the recipe data is used.

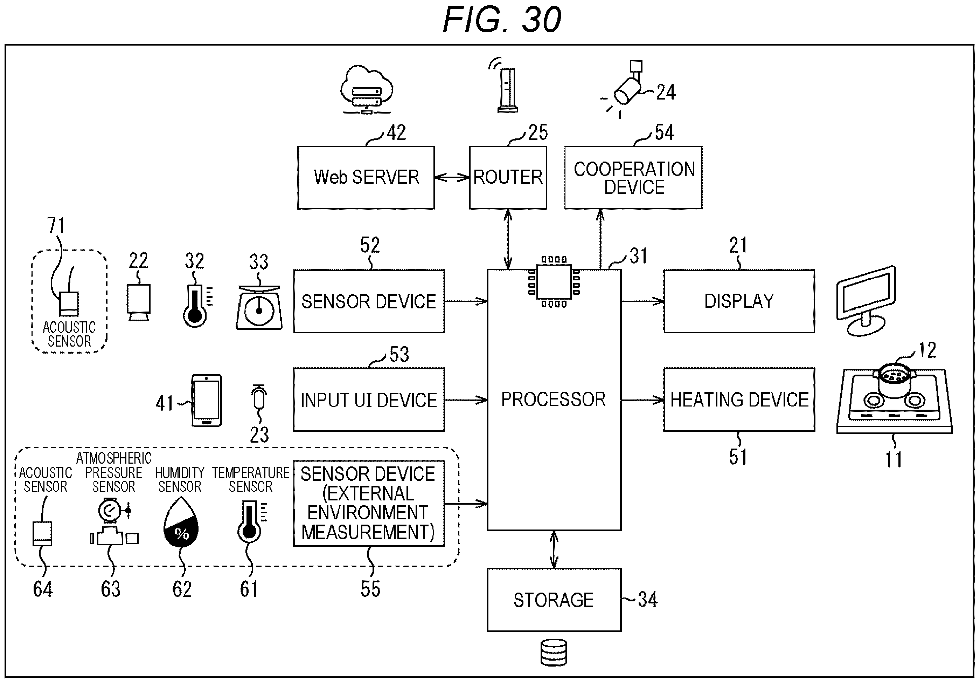

Fig. 30 is a block diagram illustrating another configuration example of the cooking assistance system 1. Fig. 30 illustrates a configuration corresponding to each block. In the configuration illustrated in Fig. 30, the same components as those described with reference to Figs. 4 and 5 and the like are denoted by the same reference numerals. Redundant description will be omitted as appropriate.

As indicated by a broken line, a sensor device 55 which is a sensor for external environment measurement is provided. The sensor device 55 includes a temperature sensor 61, a humidity sensor 62, an atmospheric pressure sensor 63, and an acoustic sensor 64. The acoustic sensor 64 is, for example, a microphone. By utilizing these sensors for environmental measurement, improvement of reproducibility of a dish is achieved.

Sound issued by a cooking object or a cooking device during cooking may be used for measuring and determining a state. In this case, an acoustic sensor 71 is added as the sensor device 52. The acoustic sensor 71 constituting the sensor device 52 is an acoustic sensor for cooking sound measurement. For example, the acoustic sensor 71 is installed closer to the heating device 51 than the acoustic sensor 64 constituting the sensor device 55.

<1-1. Sensing of Temperature/Humidity of Cooking Environment>

Processing in a case of utilizing a temperature sensor for environmental measurement will be described.

- At time of recording cooking

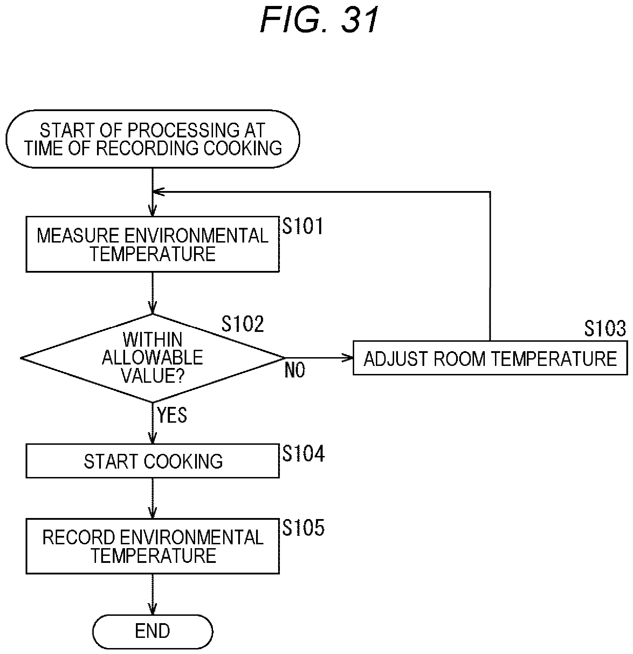

With reference to a flowchart of Fig. 31, processing at a time of recording cooking using the temperature sensor 61 for environment measurement will be described.

In step S101, the temperature sensor 61 of the sensor device 55 measures an environmental temperature under the control of the processor 31.

In step S102, the processor 31 determines whether or not the environmental temperature is a temperature within an allowable value. For example, 20 to 30°C, which is a general room temperature, is set as the allowable value.

In a case where it is determined in step S102 that the environmental temperature does not fall within the allowable value, in step S103, the processor 31 controls an air conditioning device constituting the cooperation device 54, and performs temperature adjustment so that the environmental temperature falls within the allowable value. Thereafter, the processing returns to step S101, and the subsequent processing is performed.

In a case where it is determined in step S102 that the environmental temperature is a temperature that falls within the allowable value, in step S104, the processor 31 causes recording cooking to start. Each processing described with reference to Fig. 11 is started.

After the recording cooking is started, in step S105, the processor 31 records information about the environmental temperature in the recipe data, for example, as the information element of the information regarding cooking steps. After the start of the recording cooking, the environmental temperature is repeatedly measured by the temperature sensor 61 at a predetermined cycle. When the recording cooking is ended, the processing of Fig. 31 is also ended. Time-series data of the environmental temperature may be recorded such that the environmental temperature at the time of each cooking step is recorded.

- At time of reproduction cooking

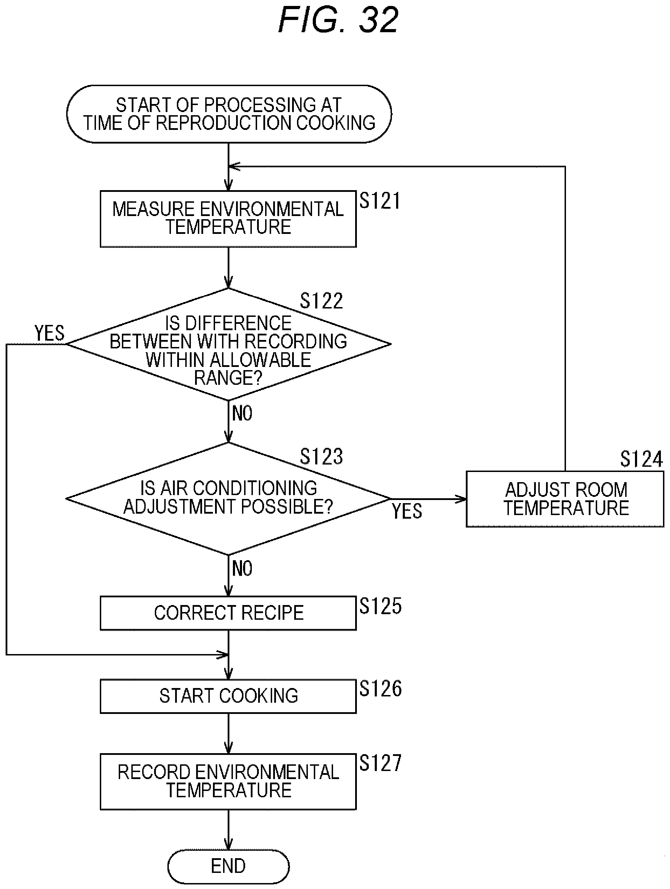

With reference to a flowchart of Fig. 32, processing at a time of reproduction cooking using the temperature sensor 61 for environment measurement will be described.

In step S121, the temperature sensor 61 of the sensor device 55 measures an environmental temperature under the control of the processor 31.

In step S122, the processor 31 determines whether or not a difference between the environmental temperature measured in step S121 and the environmental temperature at the time of recording cooking read from the recipe data is within an allowable value.

When it is determined in step S122 that the difference is not within the allowable value, in step S123, the processor 31 determines whether or not air conditioning adjustment is possible.

When it is determined in step S123 that the air conditioning can be adjusted, in step S124, the processor 31 controls the air conditioning device constituting the cooperation device 54, and performs temperature adjustment so that a difference from the environmental temperature at the time of recording cooking falls within the allowable value. For example, in a case where the temperature at the time of recording cooking is lower than the current temperature (at the time of reproduction cooking) by more than the allowable value temperature, adjustment is performed to raise the temperature. Thereafter, the processing returns to step S121, and the subsequent processing is performed.

In a case where it is determined in step S123 that the air-conditioning adjustment is not possible, the processor 31 corrects the recipe data in step S125. For example, in a case where the environmental temperature at the time of reproduction cooking is higher than the environmental temperature at the time of recording cooking, the recipe data is corrected such that heating power of the cooking device is lowered or a heating time is shortened in accordance with the difference between the environmental temperature at the time of reproduction cooking and the environmental temperature at the time of recording cooking. For the correction of the heating power and the heating time, a correction value obtained on the basis of experimentally collected data, a correction value calculated from a theoretical formula, a correction value verified by a thermal simulation, or the like is used.

After the recipe data is corrected, in step S126, the processor 31 causes the reproduction cooking to start. Each processing described with reference to Fig. 14 is started on the basis of the corrected recipe data.

After the reproduction cooking is started, in step S127, the processor 31 records information about the environmental temperature. When the recording cooking is ended, the processing of Fig. 32 is also ended.

In this way, by performing the reproduction cooking in an environment close to the ambient temperature at the time of recording cooking, it is possible to improve the reproducibility of the dish completed by the reproduction cooking.

Processing at the time of recording cooking/reproduction cooking in a case of using the humidity sensor 62 of the sensor device 55 is basically similar to the processing described above in the case of using the temperature sensor 61. For example, it is determined whether or not a difference between an environmental humidity at the time of recording cooking and an environmental humidity at the time of reproduction cooking is within an allowable value. In a case where it is determined that the difference is not within the allowable value, the adjustment of the humidity is executed, and then the recipe data is appropriately corrected. For example, in a case where the humidity at the time of reproduction cooking is higher than the humidity at the time of recording cooking, the recipe data is corrected by reducing a blending amount of water.

Also by performing the reproduction cooking in an environment close to the humidity at the time of recording cooking, it is possible to improve the reproducibility of the dish completed by the reproduction cooking.

Although the adjustment of the temperature or the humidity has been described, both the temperature and the humidity may be adjusted. At least any of temperature and humidity can be adjusted.

<1-2. Sensing of atmospheric pressure in Cooking Environment>

Processing in a case of utilizing the atmospheric pressure sensor 63 for environment measurement will be described.

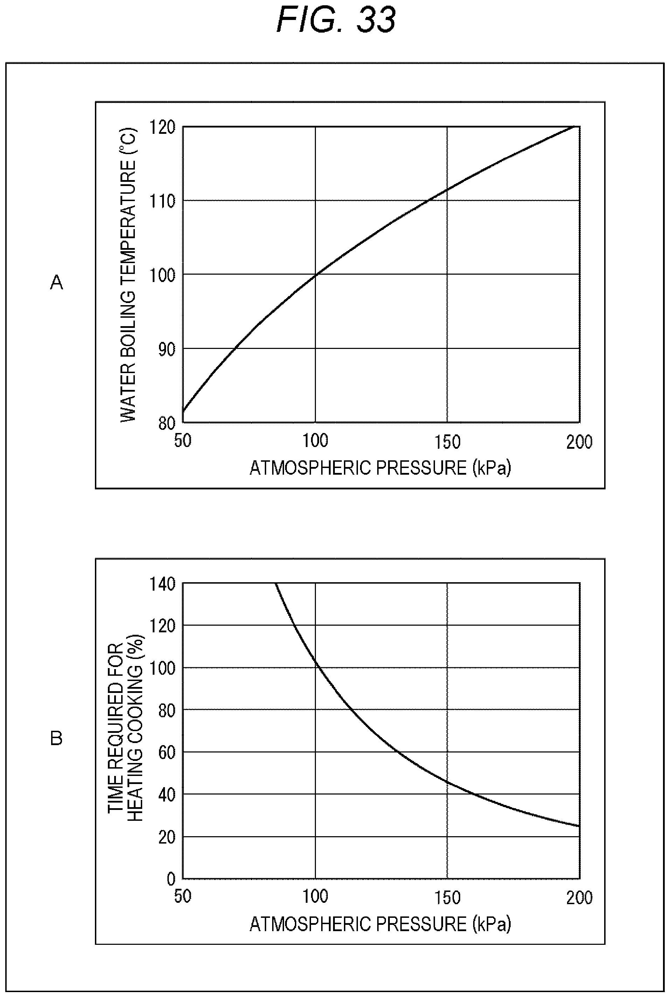

A boiling point of water to be used for cooking is affected by atmospheric pressure. As illustrated in A of Fig. 33, the boiling point of water decreases as the atmospheric pressure decreases, and increases as the atmospheric pressure increases. Therefore, in a case of a cooking step such as "stewing", "simmering", or "boiling" in which an ingredient is heated in water, a temperature of water at a time of full boiling, that is, a temperature at which the ingredient is heated, changes depending on the atmospheric pressure.

In a case of utilizing the atmospheric pressure sensor 63, for example, at a time of recording cooking, the atmospheric pressure at the time of recording cooking is measured and recorded in the recipe data.

Whereas, at a time of reproduction cooking, an atmospheric pressure at the time of reproduction cooking is measured, and a difference in boiling point is calculated on the basis of a difference between the measured atmospheric pressure and the atmospheric pressure at the time of recording cooking read from the recipe data. Furthermore, a time of cooking of heating in water in the recipe data is adjusted on the basis of a difference in temperature of water at a time of full boiling caused by the difference in boiling point.

A relationship between the temperature of water during heating and the cooking time can be estimated using, for example, Arrhenius' law (10°C halving law). A relationship between the atmospheric pressure and the cooking time is, for example, as illustrated in B of Fig. 33.

By adjusting the cooking time according to the difference between the atmospheric pressure at the time of recording cooking and the atmospheric pressure at the time of reproduction cooking, it is possible to improve the reproducibility of the dish completed by the reproduction cooking.

Although it has been described that the recipe data is corrected on the basis of a temperature, a humidity, or an atmospheric pressure, the recipe data may be corrected on the basis of two or more types of information among three types of information of the temperature, the humidity, and the atmospheric pressure. At least any of the three types of information of the temperature, the humidity, and the atmospheric pressure can be adjusted.

<1-3. Acoustic Sensing of Cooking Environment>

Processing in a case of utilizing the acoustic sensor 64 for environment measurement will be described.

In a case of utilizing cooking sound for recording cooking/reproduction cooking, environmental noise becomes a problem. In the cooking assistance system 1, an acoustic sensor for external environment measurement for measuring sound to be noise is installed separately from the acoustic sensor for cooking sound measurement with directivity directed to a pot side which is a cooking instrument. The acoustic sensor for cooking sound measurement corresponds to the acoustic sensor 71 (Fig. 30) of the sensor device 52, and the acoustic sensor for external environment measurement corresponds to the acoustic sensor 64 of the sensor device 55.

In the recording cooking and the reproduction cooking, noise canceling based on the environmental sound measured by the acoustic sensor 71 for external environment measurement is performed on the cooking sound measured by the acoustic sensor 64 for cooking sound measurement. At the time of recording cooking, cooking sound after noise canceling is recorded in the recipe data.

By performing the noise canceling processing at both the time of recording cooking and the time of reproduction cooking, the cooking assistance system 1 can compare only the sound generated during cooking to perform a state determination at the time of reproduction cooking, for example. Since the state determination at the time of the reproduction cooking is performed only on the basis of the sound generated during cooking, it is possible to improve the reproducibility of the dish completed by the reproduction cooking.

<<2. Method for Stabilizing Positions of Pots of Various Sizes>>

In the cooking assistance system 1, recipe data of various dishes are generated by recording cooking and used for reproduction cooking. In the recording cooking and the reproduction cooking, pots of various sizes are used, and reproducibility can be improved by fixing a position of the pot. Therefore, fixing methods corresponding to pots of various sizes are required.

In the cooking assistance system 1, as an example, a method of stabilizing a position of a pot by fixing an outer shape of the pot is used. It is possible to adopt various methods for stabilizing the position of the pot, such as fixing a handle of the pot or holding the pot with a robot arm.

<2-1. Method for Stabilizing Positions of Pots of Various Sizes>

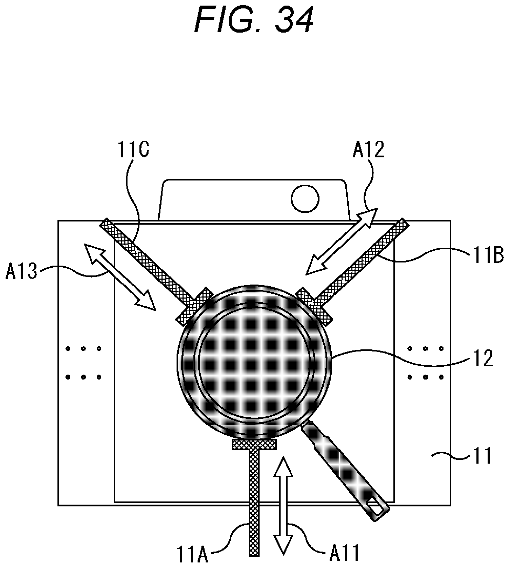

Fig. 34 is a view illustrating a state in which the IH stove 11 on which a pot is installed is viewed from above.

On an upper surface of the IH stove 11 as the heating device 51, fixing portions 11A to 11C are provided in which a small piece-shaped tip portion is attached to a tip of a thin bar-shaped member. The IH stove 11 is provided with a structure that causes the fixing portions 11A to 11C to extend and contract in directions indicated by bidirectional Arrows A11 to A13. The fixing portions 11A to 11C individually extend in a center direction of the IH stove 11, and can fix a circular pot to the center of the IH stove 11 by holding an outer shape (peripheral side surface) of the pot as the cooking instrument 12 at the tip portion. It is assumed that the center of the IH stove 11 is the heating position.

As described above, in a case where it is assumed that the pot is circular, a structure of holding the outer shape of the pot at three points is used. Since the fixing portions 11A to 11C have a configuration that can be extended and contracted, pots of various sizes can be fixed. The fixing portions 11A to 11C may be manually driven by a cook, or may be electrically driven under the control of the processor 31.

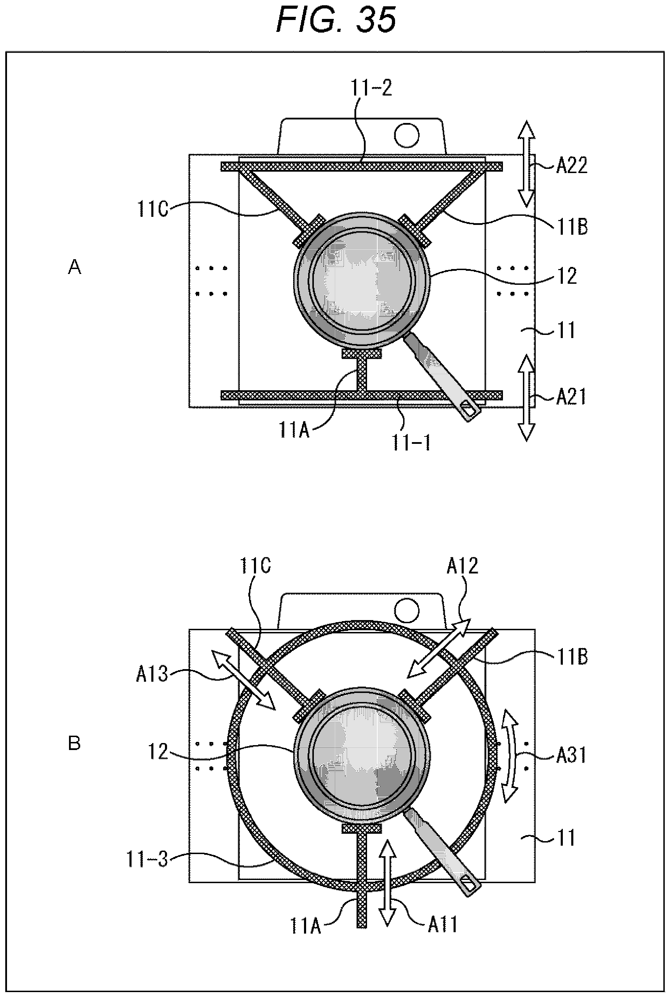

Fig. 35 is a view illustrating an example of fixing a pot. In the configurations illustrated in Fig. 35, the same configurations as the configurations described with reference to Fig. 34 are denoted by the same reference numerals. Redundant description will be omitted as appropriate.

In the example of A of Fig. 35, the fixing portion 11A is attached to an attachment portion 11-1, and the fixing portion 11B and the fixing portion 11C are attached to an attachment portion 11-2. The attachment portion 11-1 and the attachment portion 11-2 including thin bar-shaped members are configured to move in a vertical direction in the figure as indicated by Arrows A21 and A22, respectively.

When the attachment portion 11-1 moves upward and the attachment portion 11-2 moves downward, the tip portions of the fixing portions 11A to 11C extend individually toward the center of the IH stove 11, and hold the outer shape of the pot. As a result, it becomes possible to fix the pot while reducing the number of moving members.

In the example of B of Fig. 35, a holding structure 11-3 such as a scroll chuck that converts a rotation motion into a straight action is provided. The fixing portions 11A to 11C are attached to the holding structure 11-3 having a ring shape in plan view.

When a force is applied to the holding structure 11-3 as indicated by Arrow A31, the tip portions of the fixing portions 11A to 11C extend individually toward the center of the IH stove 11, and hold the outer shape of the pot. As a result, three fixed points can be simultaneously moved using one movable starting point, and the pot can be fixed.

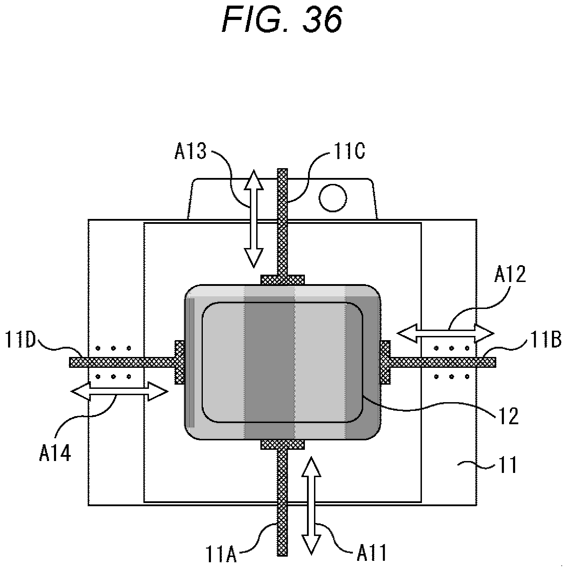

Fig. 36 is a view illustrating an example of a configuration in a case where not only a circular pot but also a rectangular pot is a target.

Each of fixing portions 11A to 11D has a configuration in which a tip portion extends toward the center of the IH stove 11. In this way, by setting the movable fixing points to four points, it is also possible to fix a pot having a quadrangular outer shape in plan view.

By performing the recording cooking and the reproduction cooking in a state where the pot is fixed, it is possible to increase the reproducibility of the dish completed by the reproduction cooking.

<2-2. Addition of Load Sensor to Fixing Portion>

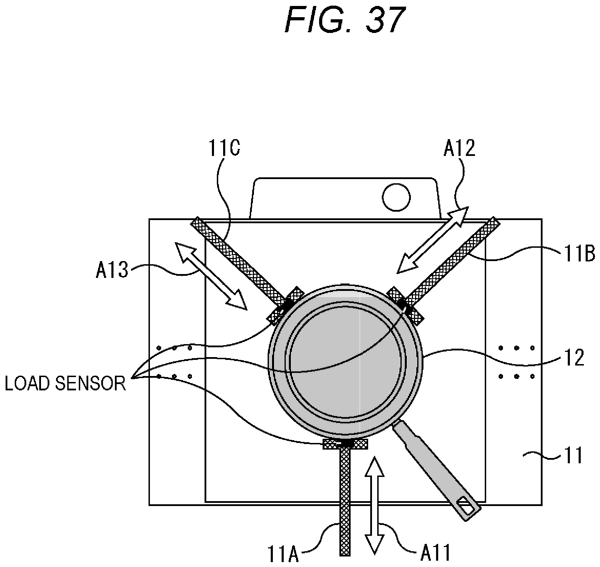

Fig. 37 is a diagram illustrating a configuration example of the fixing portion.

As illustrated in Fig. 37, load sensors are provided at the tip portions constituting the fixing portions 11A to 11C. On the basis of measurement values of the load sensors, the processor 31 can check whether the fixing portions 11A to 11C are in contact with the pot, whether no excessive load is applied, and the like.

- At time of recording cooking

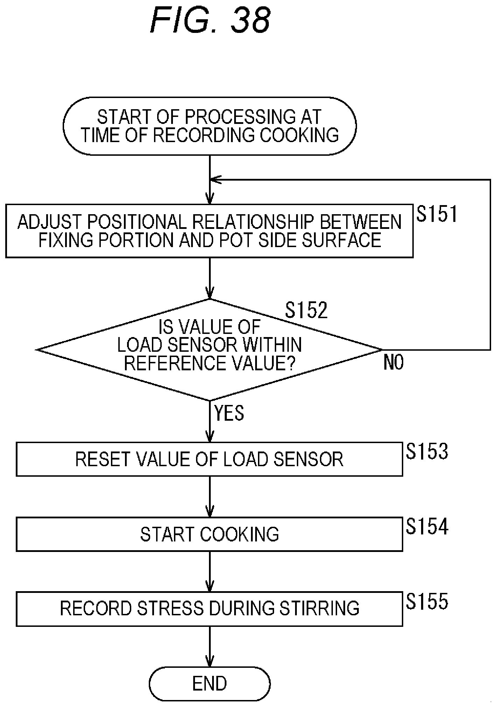

With reference to a flowchart of Fig. 38, processing at a time of recording cooking in a case of utilizing the load sensor will be described.

In step S151, the processor 31 controls the IH stove 11 to move positions of the fixing portions 11A to 11C, thereby adjusting a positional relationship between the fixing portions 11A to 11C and side surfaces of the pot. The positions of the fixing portions 11A to 11C may be adjusted manually.

In step S152, the processor 31 determines whether or not the measurement values of the load sensors provided at the fixing portions 11A to 11C are within a reference value. In a case where it is determined in step S152 that the reference value is exceeded, the processing returns to step S151, and the subsequent processing is performed.

As a case where an excessive load becomes a problem, a case is considered in which a side surface has a round shape like a Chinese wok. In this case, when a load from the fixing portion is large, the pot bottom may be lifted from the top surface of the IH stove 11. By setting an allowable value of the load in advance, it is possible to adjust the positions of the fixing portions 11A to 11C while preventing the pot bottom from lifting.

In a case where it is determined in step S152 that the measurement value of the load sensor is within the reference value, the processor 31 causes the measurement value of the load sensor to be reset in step S153.

In step S154, the processor 31 causes recording cooking to start. Each processing described with reference to Fig. 11 is started. After the start of the recording cooking, the load is repeatedly measured by the load sensor at a predetermined cycle.

After the recording cooking is started, in step S155, the processor 31 records a measurement value of the load sensor at a time of stirring into the recipe data, for example, as the information element of the information regarding cooking steps. When the recording cooking is ended, the processing of Fig. 38 is also ended.

With the above processing, it is possible to record a stress on the side surface of the pot when ingredients in the pot are stirred, as time-series data in the recipe data.

- At time of reproduction cooking

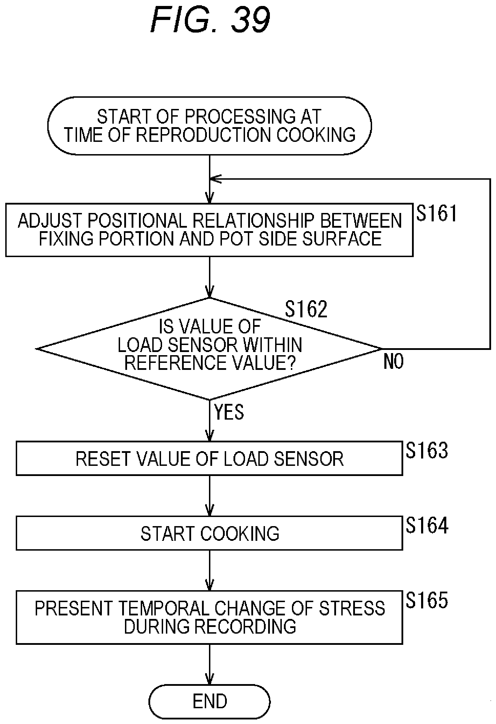

With reference to a flowchart of Fig. 39, processing at a time of reproduction cooking in a case of utilizing the load sensor will be described.

The processing in steps S161 to S163 is similar to the processing in steps S151 to S153 at the time of recording cooking. After a measurement value of the load sensor is reset in step S163, the processor 31 causes reproduction cooking to start in step S164. Each processing described with reference to Fig. 14 is started.

In step S165, the processor 31 acquires the time-series data of the stress on the side surface of the pot from the recipe data, and presents the data to the cook as a reference at the time of reproduction cooking. The measurement value of the load sensor is also presented together with the reference time-series data. The time-series data serving as a reference and the like are presented, for example, in a case where work of the cooking step is stirring.

As a result, the cook can check reproducibility of a stirring force by comparing the actual measurement value displayed on the display 21 with the reference time series, and can adjust his or her own force level. Note that an attachment position of the load sensor is not limited to the position of the tip portion illustrated in Fig. 37, and may be various positions where the load can be measured, such as the vicinity of a root of the fixing portion.

<2-3. Electricalization of Fixing Portion by Addition of Actuator>

An actuator such as a motor may be provided on the IH stove 11, and the movement of the fixing portion described above may be motorized. By detecting a contact with the side surface of the pot by using the load sensor, the pot can be automatically fixed.

Furthermore, a sensor such as an encoder that detects a movement amount of the fixing portion may be provided. As a result, it becomes possible to automatically measure an outer size of the pot.

By recording information about the size of the pot as the information element of recipe data at a time of recording cooking, it is possible to reduce a risk of using a wrong pot at a time of reproduction cooking. A cook who performs the reproduction cooking can check the information about the size of the pot recorded at the time of recording cooking, and perform the reproduction cooking using a pot of the same size.

Furthermore, a center position of the pot can be controlled on the basis of a movement amount of the fixing portion. In a case of the configuration illustrated in A of Fig. 34 or 35, there is a possibility that the pot is fixed at a position deviated from a center position of a coil of the IH stove 11. In a case of the configuration illustrated in Fig.

34, there is a possibility that the center of the pot may be deviated vertically and horizontally from the center position of the coil. In a case of the configuration illustrated in A of Fig. 35, there is a possibility that the center of the pot may be deviated vertically from the center position of the coil.

It is possible to perform control to cause the center of the pot and the center of the coil to coincide with each other, by calculation using the information about a movement amount of each fixing portion and the information about an angle and a movable direction of the fixing portion determined in advance.

Moreover, in a case of the configuration illustrated in Fig. 34, it is also possible to move the center of the pot to any position of up, down, left, and right by adjusting movement amounts of the three fixing portions. The configuration in which the position of the pot is moved by the fixing portion is also applicable to automation of a pot shaking action.

By providing an actuator that operates to the left and right of the figure in a case of the configuration illustrated in A of Fig. 35, and providing an actuator that moves up and down and left and right of the figure in the case of the configuration illustrated in B of Fig. 35, the pot can be moved in any direction.

- Configuration example of computer

A series of the processing described above can be executed by hardware, or may be executed by software. In a case where the series of processing steps is executed by software, a program included in the software is installed from a program recording medium on a computer incorporated in dedicated hardware, a general-purpose personal computer, or the like.

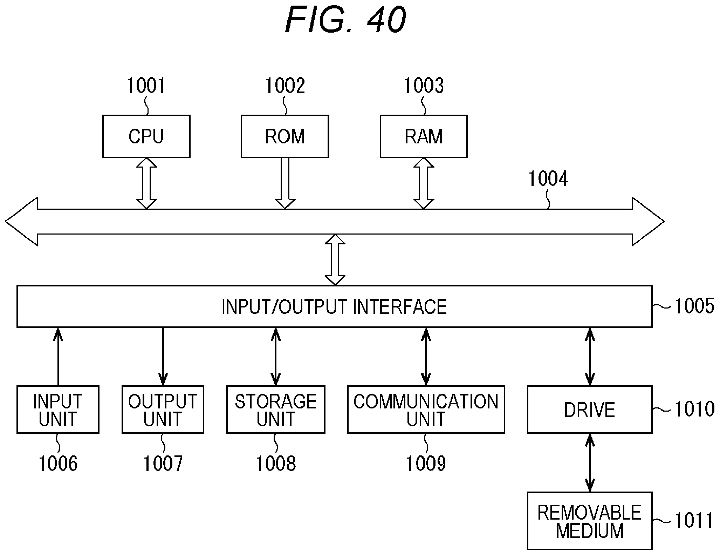

Fig. 40 is a block diagram illustrating a configuration example of hardware of a computer that executes the series of processing described above in accordance with a program. A computer having a configuration as illustrated in Fig. 40 is provided on the IH stove 11. An external device such as the Web server 42 is also configured by a computer having a configuration as illustrated in Fig. 40.

A central processing unit (CPU) 1001, a read only memory (ROM) 1002, and a random access memory (RAM) 1003 are interconnected via a bus 1004.

An input/output interface 1005 is further connected to the bus 1004. The input/output interface 1005 is connected with an input unit 1006 including, for example, a keyboard and a mouse, and an output unit 1007 including, for example, a display and a speaker. Furthermore, the input/output interface 1005 is connected with a storage unit 1008 including, for example, a hard disk and a non-volatile memory, a communication unit 1009 including, for example, a network interface, and a drive 1010 driving a removable medium 1011.

In the computer configured as described above, for example, the CPU 1001 loads a program stored in the storage unit 1008 into the RAM 1003 via the input/output interface 1005 and the bus 1004 and executes the program, to perform the series of the processing described above.

For example, the program to be executed by the CPU 1001 is recorded in the removable medium 1011 or provided via a wired or wireless transmission medium such as a local area network, the Internet, or a digital broadcast, and installed in the storage unit 1008.

The program executed by the computer may be a program in which the processing is performed in time series in the order described in the present description, or may be a program in which the processing is performed in parallel or at a necessary timing such as when a call is made.

In the present description, a system means a set of a plurality of components (devices, modules (parts), and the like), and it does not matter whether or not all the components are in the same housing. Therefore, a plurality of devices housed in separate housings and connected to each other via a network and one device in which a plurality of modules is housed in one housing are both systems.

The effects described in the specification are merely examples and are not limited, and other effects may be provided.

An embodiment of the present technology is not limited to the embodiment described above, and various modifications can be made without departing from the scope of the present technology.

For example, the present technology may be configured as cloud computing in which a function is shared by a plurality of apparatuses via a network to process together.

Furthermore, each of the steps described in the above-described flowcharts can be executed by one apparatus or executed by a plurality of apparatuses in a shared manner.

Moreover, in a case where a plurality of processing steps is included in one step, the plurality of processing included in the one step can be performed by one apparatus or shared and performed by a plurality of apparatuses.

- Examples of combinations of configurations

The present technology can also be configured as follows.
(1) An information processing apparatus including:

a holding unit configured to hold recipe data including at least information indicating a content of cooking work and information indicating a target state, for each of a plurality of cooking steps in which the target state is individually defined by a value of a target parameter including a parameter based on sensor data measurable at a time of cooking; and

a control unit configured to control the cooking work on the basis of the recipe data until a state of cooking in each of the cooking steps reaches a state defined as the target state.

(2) The information processing apparatus according to (1) above, in which

the target state for each of the cooking steps is a condition based on a value of at least any target parameter among a plurality of predetermined target parameters.

(3) The information processing apparatus according to (1) above, in which

the target state for each of the cooking steps is a condition based on a value of any one target parameter among the plurality of predetermined target parameters.

(4) The information processing apparatus according to (2) above, in which

the target state is defined by a value of at least any target parameter of an elapsed time from a start of each of the cooking steps, a temperature of a heating object or a heating medium, or a weight of the heating object.

(5) The information processing apparatus according to (4) above, in which

in a case where the target state is defined by an elapsed time from a start of each of the cooking steps, when an elapsed time from a start of a target cooking step among the cooking steps reaches a time defined as the target state, the control unit causes cooking of a next cooking step among the cooking steps to start.

(6) The information processing apparatus according to (4) above, in which

in a case where the target state is defined by a temperature of the heating object or the heating medium, the control unit causes cooking of a next cooking step among the cooking steps to start when a temperature measured by a temperature sensor reaches a temperature defined as the target state.

(7) The information processing apparatus according to (4) above, in which

in a case where the target state is defined by a weight of the heating object, the control unit causes cooking of a next cooking step among the cooking steps to start when a weight measured by a weight sensor reaches a weight defined as the target state.

(8) The information processing apparatus according to (4) above, further including:

a presentation unit configured to present information representing the target state.

(9) The information processing apparatus according to (8) above, in which

in a case where the target state is defined by a temperature of the heating object or the heating medium, the presentation unit causes display of information about a temperature measured by a temperature sensor in a target cooking step among the cooking steps, together with information about a temperature defined as the target state.

(10) The information processing apparatus according to (8) above, in which

in a case where the target state is defined by a weight of the heating object, the presentation unit causes display of information about a weight measured by a weight sensor in a target cooking step among the cooking steps, together with information about a weight defined as the target state.

(11) The information processing apparatus according to any one of (8) to (10) above, in which

the presentation unit further causes display of information representing a content of the cooking work.

(12) The information processing apparatus according to any one of (8) to (11) above, in which

in a case where the recipe data further includes information indicating at least any value of a temperature or a weight of the heating object at a time of being put in, as information defining an initial state of each of the cooking steps, the presentation unit causes display of information representing a state of the heating object defined as the initial state.

(13) The information processing apparatus according to any one of (1) to (12) above, in which

the recipe data is data created on the basis of time-series data of sensor data measured during another cooking.

(14) The information processing apparatus according to (1) above, in which

the target state is defined using a Cook Value representing a heating state of an ingredient or using a similar evaluation value obtained with a function including a Z value.

(15) The information processing apparatus according to (14) above, in which

the control unit compares the Cook Value or the similar evaluation value calculated from sensor data after a start time of each of the cooking steps with the Cook Value or the similar evaluation value defined as the target state, and the control unit determines whether or not a state defined as the target state is reached.

(16) The information processing apparatus according to (1) above, in which

the target state is defined using a moisture content of an ingredient, the moisture content being changed in a course of cooking.

(17) The information processing apparatus according to (16) above, in which

the control unit compares a moisture content of the ingredient as a heating target with a moisture content defined as the target state, and the control unit determines whether or not a state defined as the target state is reached.

(18) The information processing apparatus according to (1) above, in which

a content of the heating control as the cooking work is described using a temperature profile that is time-series data of a temperature of a heating object, and
the control unit controls heating of the heating object so as to reproduce a change in temperature represented by the temperature profile.

(19) The information processing apparatus according to (18) above, in which
the control unit communicates with a heating device via a predetermined interface, and receives information transmitted from the heating device.

(20) The information processing apparatus according to (19) above, in which
the control unit receives device information including information regarding a specification of a temperature sensor included in the heating device and information regarding an arrangement position.

(21) The information processing apparatus according to (20) above, in which
the control unit receives heating medium information including information regarding a specification of a heating medium used for heating by the heating device and information regarding an arrangement position of the heating medium.

(22) The information processing apparatus according to (20) or (21) above, in which
the control unit converts the temperature profile described in the recipe data as a content of heating control, on the basis of the device information.

(23) The information processing apparatus according to (22) above, in which
the control unit selects a temperature sensor to be used for measurement of a temperature during heating control from among temperature sensors included in the heating device on the basis of a measurement position designated by the temperature profile, and the control unit converts the temperature profile into the temperature profile corresponding to a measurement position of the selected temperature sensor.

(24) The information processing apparatus according to (23) above, in which
the control unit transmits the temperature profile after conversion and information designating the selected temperature sensor, to the heating device via the predetermined interface.

(25) The information processing apparatus according to (1) above, in which
the control unit adjusts an environment on a reproduction cooking side that is cooking using the recipe data, on the basis of information indicating an environment on a recording cooking side that is cooking at a time of creating the recipe data, the information being included in the recipe data.

(26) The information processing apparatus according to (25) above, in which
the control unit adjusts at least any of a temperature or a humidity.

(27) The information processing apparatus according to (1) above, in which
the control unit corrects the recipe data in accordance with a difference between an environment on a recording cooking side that is cooking at a time of creating the recipe data and an environment on a reproduction cooking side that is cooking using the recipe data.

(28) The information processing apparatus according to (27) above, in which
the control unit corrects the recipe data in accordance with a difference of at least any of a temperature, a humidity, or an atmospheric pressure, as the environment.

(29) The information processing apparatus according to (1) above, in which
in a case where the target state is defined by cooking sound, the control unit cancels noise included in sound measured by a sensor for cooking sound measurement, on the basis of sound measured by a sensor for environmental sound measurement of a cooking environment.

(30) The information processing apparatus according to (1) above, in which
the control unit controls heating performed by a heating device having a fixing portion configured to fix a cooking instrument to a specific position.

(31) The information processing apparatus according to (30) above, in which
the control unit acquires, from the recipe data, measurement data obtained by a load sensor of the fixing portion included in the heating device used for recording cooking that is cooking at a time of creating the recipe data.

(32) The information processing apparatus according to (31) above, in which
the control unit controls an actuator configured to drive the fixing portion on the basis of the measurement data.

(33) An information processing method including, by an information processing apparatus:

holding recipe data including at least information indicating a content of cooking work and information indicating a target state, for each of a plurality of cooking steps in which the target state is individually defined by a value of a target parameter including a parameter based on sensor data measurable at a time of cooking; and
controlling the cooking work on the basis of the recipe data until a state of cooking in each of the cooking steps reaches a state defined as the target state.

(34) A program for causing a computer to execute processing including:

holding recipe data including at least information indicating a content of cooking work and information indicating a target state, for each of a plurality of cooking steps in which the target state is individually defined by a value of a target parameter including a parameter based on sensor data measurable at a time of cooking; and controlling the cooking work on the basis of the recipe data until a state of cooking in each of the cooking steps reaches a state defined as the target state.

(35) An information processing apparatus including: an information processing unit configured to create, on the basis of time-series data of sensor data measured during first cooking, recipe data including at least information indicating a content of cooking work and information indicating a target state, for each of a plurality of cooking steps in which the target state is individually defined by a value of a target parameter including a parameter based on sensor data measurable during second cooking of reproducing a dish completed by the first cooking.

(36) The information processing apparatus according to (35) above, in which
the target state is defined by at least any value of an elapsed time from a start of each of the cooking steps, a temperature of a heating object or a heating medium, or a weight of the heating object.

(37) The information processing apparatus according to (36) above, in which
the information processing unit creates the recipe data further including information indicating an initial state defined by at least any value of a temperature or a weight of the heating object at a time of being put in, as information about each of the cooking steps using the heating object.

(38) The information processing apparatus according to (35) above, in which
the target state is defined using a Cook Value representing a heating state of an ingredient or using a similar evaluation value obtained with a function including a Z value.

(39) The information processing apparatus according to (35) above, in which
the target state is defined using a moisture content of an ingredient, the moisture content being changed in a course of cooking.

(40) The information processing apparatus according to (35) above, in which
a content of the heating control as the cooking work is described using a temperature profile that is time-series data of a temperature of a heating object.

(41) The information processing apparatus according to (35) above, in which
the information processing unit creates the recipe data representing each of the cooking steps expressed using a graph structure, the graph structure including a first node corresponding to the cooking work, a second node corresponding to the target state, and an edge indicating a temporal order between nodes.

(42) The information processing apparatus according to (41) above, in which
the information processing unit creates a parameter indicating a content of the cooking work as additional information of the first node, and the information processing unit creates a parameter indicating the target state as additional information of the second node.

(43) The information processing apparatus according to (41) above, in which
the information processing unit creates the recipe data representing each of the cooking steps expressed using the graph structure in which a plurality of processing flows is parallelized.

(44) The information processing apparatus according to (35) above, in which
the information processing unit creates the recipe data including information indicating an environment on a recording cooking side that is cooking at a time of creating the recipe data.

(45) The information processing apparatus according to (44) above, in which
the information processing unit creates the recipe data indicating at least any of a temperature, a humidity, or an atmospheric pressure, as the environment.

(46) The information processing apparatus according to (35) above, in which
the information processing unit cancels noise included in sound measured by a sensor for cooking sound measurement on the basis of sound measured by a sensor for environmental sound measurement of a cooking environment, and the information processing unit creates the recipe data including cooking sound after noise cancellation as information indicating the target state.

(47) An information processing method including, by an information processing apparatus:
creating, on the basis of time-series data of sensor data measured during first cooking, recipe data including at least information indicating a content of cooking work and information indicating a target state, for each of a plurality of cooking steps in which a target state is defined by a value of a target parameter including a parameter based on sensor data measurable during second cooking of reproducing a dish completed by the first cooking.

(48) A program for causing a computer to execute processing including:

creating, on the basis of time-series data of sensor data measured during first cooking, recipe data including at least information indicating a content of cooking work and information indicating a target state, for each of a plurality of cooking steps in which a target state is defined by a value of a target parameter including a parameter based on sensor data measurable during second cooking of reproducing a dish completed by the first cooking.

REFERENCE SIGNS LIST

| | |
|---|---|
| 1 | Cooking assistance system |
| 11 | IH stove |
| 21 | Display |
| 22 | Camera |
| 23 | Microphone |
| 24 | Lighting device |
| 25 | Router |
| 31 | Processor |
| 32 | Temperature sensor |
| 33 | Weight sensor |
| 34 | Storage |
| 41 | Smartphone |
| 42 | Web server |
| 101 | Recording processing unit |
| 102 | Recipe data creation unit |
| 103 | Reproduction processing unit |
| 111 | Cooking environment measurement unit |
| 112 | Sensor data acquisition unit |
| 113 | User input detection unit |
| 114 | Information recording unit |
| 121 | Step organization unit |
| 122 | Target state setting unit |
| 123 | Cooking work setting unit |
| 124 | Information recording unit |
| 125 | Recipe data management unit |
| 131 | Recipe data acquisition unit |
| 132 | Cooking environment measurement unit |
| 133 | Sensor data acquisition unit |
| 134 | User input detection unit |
| 135 | Control unit |
| 136 | Information presentation unit |

**Claims**

1. An information processing apparatus comprising:

    a holding unit configured to hold recipe data including at least information indicating a content of cooking work and information indicating a target state, for each of a plurality of cooking steps in which the target state is individually defined by a value of a target parameter including a parameter based on sensor data measurable at a time of cooking; and
    a control unit configured to control the cooking work on a basis of the recipe data until a state of cooking in each of the cooking steps reaches a state defined as the target state.

2. The information processing apparatus according to claim 1, wherein
the target state for each of the cooking steps is a condition based on a value of at least any target parameter among a plurality of predetermined target parameters.

3. The information processing apparatus according to claim 2, wherein
the target state for each of the cooking steps is a condition based on a value of any one target parameter among the plurality of predetermined target parameters.

4. The information processing apparatus according to claim 2, wherein
the target state is defined by a value of at least any target parameter of an elapsed time from a start of each of the cooking steps, a temperature of a heating object or a heating medium, or a weight of the heating object.

5. The information processing apparatus according to claim 4, wherein
in a case where the target state is defined by an elapsed time from a start of each of the cooking steps, when an elapsed time from a start of a target cooking step among the cooking steps reaches a time defined as the target state, the control unit causes cooking of a next cooking step among the cooking steps to start.

6. The information processing apparatus according to claim 4, wherein
in a case where the target state is defined by a temperature of the heating object or the heating medium, the control unit causes cooking of a next cooking step among the cooking steps to start when a temperature measured by a temperature sensor reaches a temperature defined as the target state.

7. The information processing apparatus according to claim 4, wherein
in a case where the target state is defined by a weight of the heating object, the control unit causes cooking of a next cooking step among the cooking steps to start when a weight measured by a weight sensor reaches a weight defined as the target state.

8. The information processing apparatus according to claim 4, further comprising:

a presentation unit configured to present information representing the target state.

9. The information processing apparatus according to claim 8, wherein
in a case where the target state is defined by a temperature of the heating object or the heating medium, the presentation unit causes display of information about a temperature measured by a temperature sensor in a target cooking step among the cooking steps, together with information about a temperature defined as the target state.

10. The information processing apparatus according to claim 8, wherein
in a case where the target state is defined by a weight of the heating object, the presentation unit causes display of information about a weight measured by a weight sensor in a target cooking step among the cooking steps, together with information about a weight defined as the target state.

11. The information processing apparatus according to claim 8, wherein
the presentation unit further causes display of information representing a content of the cooking work.

12. The information processing apparatus according to claim 8, wherein

in a case where the recipe data further includes information indicating at least any value of a temperature or a weight of the heating object at a time of being put in, as information defining an initial state of each of the cooking steps, the presentation unit causes display of information representing a state of the heating object defined as the initial state.

13. The information processing apparatus according to claim 1, wherein
the recipe data is data created on a basis of time-series data of sensor data measured during another cooking.

14. The information processing apparatus according to claim 1, wherein
the target state is defined using a Cook Value representing a heating state of an ingredient or using a similar evaluation value obtained with a function including a Z value.

15. The information processing apparatus according to claim 1, wherein
the target state is defined using a moisture content of an ingredient, the moisture content being changed in a course of cooking.

16. The information processing apparatus according to claim 1, wherein

a content of the heating control as the cooking work is described using a temperature profile that is time-series data of a temperature of a heating object, and
the control unit controls heating of the heating object so as to reproduce a change in temperature represented by the temperature profile.

17. The information processing apparatus according to claim 1, wherein
the control unit adjusts an environment on a reproduction cooking side that is cooking using the recipe data, on a basis of information indicating an environment on a recording cooking side that is cooking at a time of creating the recipe data, the information being included in the recipe data.

18. The information processing apparatus according to claim 1, wherein
the control unit corrects the recipe data in accordance with a difference between an environment on a recording cooking side that is cooking at a time of creating the recipe data and an environment on a reproduction cooking side that is cooking using the recipe data.

19. The information processing apparatus according to claim 1, wherein
in a case where the target state is defined by cooking sound, the control unit cancels noise included in sound measured by a sensor for cooking sound measurement, on a basis of sound measured by a sensor for environmental sound measurement of a cooking environment.

20. The information processing apparatus according to claim 1, wherein
the control unit controls heating performed by a heating device having a fixing portion configured to fix a cooking instrument to a specific position.

21. An information processing method comprising:
by an information processing apparatus:

holding recipe data including at least information indicating a content of cooking work and information indicating a target state, for each of a plurality of cooking steps in which the target state is individually defined by a value of a target parameter including a parameter based on sensor data measurable at a time of cooking; and
controlling the cooking work on a basis of the recipe data until a state of cooking in each of the cooking steps reaches a state defined as the target state.

**22.** A program for causing a computer to execute processing comprising:

holding recipe data including at least information indicating a content of cooking work and information indicating a target state, for each of a plurality of cooking steps in which the target state is individually defined by a value of a target parameter including a parameter based on sensor data measurable at a time of cooking; and controlling the cooking work on a basis of the recipe data until a state of cooking in each of the cooking steps reaches a state defined as the target state.

**23.** An information processing apparatus comprising: an information processing unit configured to create, on a basis of time-series data of sensor data measured during first cooking, recipe data including at least information indicating a content of cooking work and information indicating a target state, for each of a plurality of cooking steps in which the target state is individually defined by a value of a target parameter including a parameter based on sensor data measurable during second cooking of reproducing a dish completed by the first cooking.

**24.** The information processing apparatus according to claim 23, wherein the target state is defined by at least any value of an elapsed time from a start of each of the cooking steps, a temperature of a heating object or a heating medium, or a weight of the heating object.

**25.** The information processing apparatus according to claim 23, wherein the information processing unit creates the recipe data further including information indicating an initial state defined by at least any value of a temperature or a weight of the heating object at a time of being put in, as information about each of the cooking steps using the heating object.

**26.** The information processing apparatus according to claim 23, wherein the information processing unit creates the recipe data representing each of the cooking steps expressed using a graph structure, the graph structure including a first node corresponding to the cooking work, a second node corresponding to the target state, and an edge indicating a temporal order between nodes.

**27.** The information processing apparatus according to claim 26, wherein the information processing unit creates the recipe data representing each of the cooking steps expressed using the graph structure in which a plurality of processing flows is parallelized.

**28.** An information processing method comprising, by an information processing apparatus: creating, on a basis of time-series data of sensor data measured during first cooking, recipe data including at least information indicating a content of cooking work and information indicating a target state, for each of a plurality of cooking steps in which the target state is individually defined by a value of a target parameter including a parameter based on sensor data measurable during second cooking of reproducing a dish completed by the first cooking.

**29.** A program for causing a computer to execute processing comprising: creating, on a basis of time-series data of sensor data measured during first cooking, recipe data including at least information indicating a content of cooking work and information indicating a target state, for each of a plurality of cooking steps in which the target state is individually defined by a value of a target parameter including a parameter based on sensor data measurable during second cooking of reproducing a dish completed by the first cooking.

FIG. 1

# FIG. 2

FIG. 3

# FIG. 4

42 Web SERVER ⟷ 25 ROUTER

54 COOPERATION DEVICE

31 PROCESSOR

52 SENSOR DEVICE → PROCESSOR

53 INPUT UI DEVICE → PROCESSOR

PROCESSOR → DISPLAY 21

PROCESSOR → HEATING DEVICE 51

STORAGE 34

EP 4 502 470 A1

# FIG. 5

# FIG. 6

RECORDING PROCESSING UNIT 101

- 111 COOKING ENVIRONMENT MEASUREMENT UNIT
- 112 SENSOR DATA ACQUISITION UNIT
- 113 USER INPUT DETECTION UNIT
- 114 INFORMATION RECORDING UNIT

RECIPE DATA CREATION UNIT 102

- 121 STEP ORGANIZATION UNIT
- 122 TARGET STATE SETTING UNIT
- 123 COOKING WORK SETTING UNIT
- 124 INFORMATION RECORDING UNIT
- 125 RECIPE DATA MANAGEMENT UNIT

EP 4 502 470 A1

## FIG. 7

EP 4 502 470 A1

# FIG. 8

RECIPE DATA

COOKING CONDITION
· COOKING INSTRUMENT
· COOK
· INGREDIENT

COOKING STEP
· STEP CONFIGURATION
· INITIAL STATE
· TARGET STATE
· TRANSIENT STATE
· COOKING WORK

# FIG. 9

| LARGE CLASSIFICATION | SMALL CLASSIFICATION | INFORMATION ELEMENT | DETAILS | RECORDING TIMING |
|---|---|---|---|---|
| COOKING CONDITION | COOKING INSTRUMENT | SPECIFICATIONS OF STOVE | OUTPUT CHARACTERISTICS (RELATIONSHIP BETWEEN HEATING POWER SETTING AND OUTPUT), TEMPERATURE SENSOR ARRANGEMENT, COIL ARRANGEMENT, DISTANCE BETWEEN COIL AND COOKING TABLE, LCR CHARACTERISTICS, AND OTHERS | RECORDING COOKING (COOKING ENVIRONMENT MEASUREMENT) |
| | | SPECIFICATIONS OF POT | SIZE, SHAPE, WEIGHT, MATERIAL, STRUCTURE OF METAL LAYER, EMISSIVITY OF POT BOTTOM | RECORDING COOKING (COOKING ENVIRONMENT MEASUREMENT) |
| | | INDIVIDUAL CHARACTERISTICS OF POT | WEIGHT OF POT BODY AND POT LID, EMISSIVITY OF POT BOTTOM | RECORDING COOKING (COOKING ENVIRONMENT MEASUREMENT) |
| | | TYPES/SPECIFICATIONS OF OTHER INSTRUMENTS | MATERIAL, SIZE, SHAPE OF SPATULA | RECORDING COOKING (COOKING ENVIRONMENT MEASUREMENT) |
| | | ARRANGEMENT OF POT (WHEN FIXED) | ARRANGEMENT OF POT ON STOVE (WHEN FIXED) | RECORDING COOKING (COOKING ENVIRONMENT MEASUREMENT) |
| | | DATE AND TIME/PLACE OF COOKING | UTC DATE AND TIME, POSITIONAL INFORMATION SUCH AS LATITUDE/LONGITUDE OR ADDRESS | RECORDING COOKING (NEW CREATION OF RECIPE) |
| | COOK | ATTRIBUTE OF COOK OF RECORDING COOKING | AGE, GENDER, PHYSICAL FEATURES, COOKING SKILL LEVEL | RECORDING COOKING (NEW CREATION OF RECIPE) |
| | | CONTENTS OF PRELIMINARY TRAINING | BASIC KNOWLEDGE AND SKILLS THAT SHOULD BE LEARNED IN ADVANCE BY COOK OF REPRODUCTION COOKING | RECORDING COOKING (NEW CREATION OF RECIPE) |
| | INGREDIENT | GENRE/NAME OF DISH | FREE DESCRIPTION OR SELECTION FROM CLASSIFICATION CHART DEFINED BY SYSTEM | RECORDING COOKING (NEW CREATION OF RECIPE) |
| | | FINISHED AMOUNT | TOTAL WEIGHT OR NUMBER OF PORTIONS OF COMPLETED DISH THAT CAN BE SERVED | RECORDING COOKING (NEW CREATION OF RECIPE) |
| | | TYPE AND AMOUNT OF INGREDIENTS | TYPE, HARVEST PLACE, HARVEST TIME, AMOUNT OF RAW MATERIAL | RECORDING COOKING (NEW CREATION OF RECIPE) |
| | | WAY OF CUTTING INGREDIENT (PREPARATION METHOD) | SIZE, SHAPE, CUT SURFACE, AND OTHERS OF INGREDIENT PIECE TOOLS USED FOR PROCESSING, PRESERVATION METHOD AFTER PROCESSING | RECORDING COOKING (NEW CREATION OF RECIPE) |

# FIG. 10

| LARGE CLASSIFICATION | SMALL CLASSIFICATION | INFORMATION ELEMENT | DETAILS | RECORDING TIMING |
|---|---|---|---|---|
| COOKING STEP | STEP CONFIGURATION | OVERALL CONFIGURATION OF COOKING STEP | ENTIRE STEP CONFIGURATION, INGREDIENTS TO BE PUT IN EACH STEP, INSTRUMENTS TO BE USED | RECIPE DATA CREATION |
| | INITIAL STATE | INITIAL TEMPERATURE OF STOVE | COOKING TABLE TEMPERATURE AND INTERNAL TEMPERATURE AT COOKING START | RECORDING COOKING (COOKING START) |
| | | INITIAL TEMPERATURE OF POT | POT TEMPERATURE AT COOKING START | RECORDING COOKING (COOKING START) |
| | | INITIAL TEMPERATURE OF INGREDIENT | INGREDIENT TEMPERATURE AT TIME OF BEING PUT INTO POT | RECORDING COOKING (DURING COOKING) |
| | | INPUT WEIGHT OF INGREDIENT | WEIGHT OF INGREDIENT PUT INTO POT | RECORDING COOKING (DURING COOKING) |
| | TARGET STATE | TARGET INDEX VALUE OF EACH STEP | ANY VALUE OF TTW VALUES FOR DETERMINING END TIMING OF STEP | RECIPE DATA CREATION |
| | | TARGET IMAGE OF EACH STEP | APPEARANCE IMAGE INSIDE POT FOR DETERMINING END TIMING OF STEP | RECIPE DATA CREATION |
| | TRANSIENT STATE | TTW PROFILE | TIME-SERIES DATA OF TTW VALUE FOR EVERY STEP | RECORDING COOKING (DURING COOKING) |
| | | IMAGE INSIDE POT DURING COOKING | MOVING IMAGE OR STILL IMAGE SEQUENCE CAPTURED BY CAMERA | RECORDING COOKING (DURING COOKING) |
| | | ARRANGEMENT/MOTION OF POT DURING COOKING | TEMPORAL CHANGE OF POT POSITION WITH RESPECT TO COOKING TABLE (HEATING COIL) OF IH STOVE | RECORDING COOKING (DURING COOKING) |
| | | AMBIENT TEMPERATURE/HUMIDITY | TEMPORAL CHANGE OF AMBIENT TEMPERATURE/HUMIDITY MEASURED NEAR INGREDIENT OR COOKING INSTRUMENT | RECORDING COOKING (DURING COOKING) |
| | COOKING WORK | HEATING POWER SETTING OF STOVE | TIMING FOR HEATING On/Off AND HEATING POWER SWITCHING | RECORDING COOKING (DURING COOKING) |
| | | ORDER OF PUTTING INGREDIENTS (WHEN PUTTING PLURALITY OF INGREDIENTS) | ORDER IN CASE OF SUCCESSIVELY PUTTING PLURALITY OF INGREDIENTS | RECIPE DATA CREATION |
| | | METHOD OF PUTTING INGREDIENT | HOW AND WHERE IN POT TO PUT INGREDIENT | RECIPE DATA CREATION |
| | | METHOD OF STIRRING INGREDIENT | MOTION OF SPATULA, NUMBER OF TIMES/TIME, FORCE ADJUSTMENT | RECIPE DATA CREATION |
| | | PLACING AND REMOVING OF POT LID | TIMING OF PLACING AND REMOVING POT LID | RECIPE DATA CREATION |
| | | OTHER WORK CONTENTS | REMOVAL OF SCUM, EXTRACTION OF INGREDIENT, STIRRING BEFORE PUTTING IN | RECIPE DATA CREATION |

# FIG. 11

RECORDING COOKING

NEWLY CREATE RECIPE — S1

↓

MEASURE COOKING ENVIRONMENT — S2

↓

START COOKING — S3

↓

CONTINUE COOKING — S4

↓

END COOKING — S5

## FIG. 12

RECIPE DATA CREATION

ORGANIZE STEPS — S11

SET TARGET STATE FOR EACH STEP — S12

SET COOKING WORK FOR EACH STEP — S13

# FIG. 13

| STEP # | HEATING POWER SETTING | COOKING WORK | | | | | | | TARGET STATE | | |
| --- | --- | --- | --- | --- | --- | --- | --- | --- | --- | --- | --- |
| | | PUTTING OF INGREDIENT | INPUT WEIGHT | INGREDIENT TEMPERATURE | STIRRING | POT LID | DETAILS | | TIME [sec] | TEMPERATURE [°C] | WEIGHT [g] |
| 1 | OFF | SALADA OIL WHOLE SPICES | 20g 10g | 22°C 22°C | | | | | | | 30.0 |
| 2 | 10 | | | | | | | | | 193.7 | |
| 3 | 10 | GINGER AND GARLIC | 35g | 25°C | ✓ | | | | 62 | | |
| 4 | 10 | | | | | | | | 17 | | |
| 5 | 10 | ONION | 100g | 8°C | ✓ | | | | | | 161.1 |
| 6 | 10 | | | | | | | | | | 157.1 |
| 7 | 10 | POWDER SPICES SALT | 10g 5g | 22°C 22°C | ✓ | | | | | | 160 |
| 8 | 10 | | | | | | | | | | 157 |
| 9 | 10 | CHICKEN | 400g | 5°C | ✓ | | | | | | 550.3 |
| 10 | 20 | | | | ✓ | | | | | | 539.3 |
| 11 | 20 | CANNED TOMATO WATER | 100g 180g | 6°C 22°C | ✓ | | | | | | 815.7 |
| 12 | 10 | | | | | On | | | | | 1203.4 |
| 13 | 6 | | | | | | | | | | 1084.7 |
| 14 | 6 | | | | | Off | | | | | 643.7 |
| 15 | 6 | YOGURT | 160g | 3°C | | | | | 10 | | |
| 16 | 20 | | | | ✓ | | MIXING TO PREVENT BURNING OF POT BOTTOM | | | | 749.8 |
| 17 | 20 | FRESH CREAM | 100g | 4°C | ✓ | | MIXING THREE TIME TO CIRCULATE IMMEDIATELY AFTER PUTTING INGREDIENT | | | | 842.7 |
| 18 | OFF | | | | | | | | | | |

EP 4 502 470 A1

# FIG. 14

REPRODUCTION COOKING

READ RECIPE DATA — S21

MEASURE COOKING ENVIRONMENT — S22

START COOKING — S23

CONTINUE COOKING — S24

END COOKING — S25

# FIG. 15

HEATING POWER WILL BE CHANGED. MIX INGREDIENTS.

12 /22 — 151

5.9 g

— sec.

— °C

INGREDIENT TO BE PUT IN NOW

INGREDIENT TO BE PUT IN NEXT
CRUSHED TOMATO
ROOM TEMPERATURE WATER

Next＞PUT CRUSHED TOMATO AND OTHERS

154  153-1  155  153-2  153-3  152

EP 4 502 470 A1

## FIG. 16

TEMPORAL CHANGE OF POT BOTTOM TEMPERATURE

*FIG. 17*

# FIG. 18

A

**COOKING ASSISTANCE SYSTEM** (1)

| RECORDING PROCESSING UNIT | RECIPE DATA CREATION UNIT | REPRODUCTION PROCESSING UNIT |
|---|---|---|
| 101 | 102 | 103 |

B

**COOKING ASSISTANCE SYSTEM** (1)

| RECORDING PROCESSING UNIT | REPRODUCTION PROCESSING UNIT |
|---|---|
| 101 | 103 |

**Web SERVER** (42)

| RECIPE DATA CREATION UNIT |
|---|
| 102 |

EP 4 502 470 A1

# FIG. 19

42

Web SERVER

RECIPE DATA
CREATION UNIT

102

1-1

COOKING ASSISTANCE
SYSTEM

RECORDING
PROCESSING UNIT

101

1-2

COOKING ASSISTANCE
SYSTEM

REPRODUCTION
PROCESSING UNIT

103

# FIG. 20

RECIPE DATA

COOKING STEP #1

COOKING STEP #2

COOKING STEP #N

201

## FIG. 21

COOKING ROBOT 201

IH STOVE 212

CAMERA 213

CONTROLLER 211

REPRODUCTION PROCESSING UNIT 103

ROBOT ARM 214

MOTOR 221

SENSOR 222

EP 4 502 470 A1

# FIG. 22

TEMPERATURE T

T=Te IS MAINTAINED

Te

Tb

0                    te    TIME t

## FIG. 23

OVERALL SYSTEM CONTROL

DEVICE ABSTRACTION LAYER

DEVICE-DEPENDENT CONTROL

31

51

EP 4 502 470 A1

## FIG. 24

**BEFORE COOKING START**

**PROCESSOR** — **HEATING DEVICE**

(1) DEVICE INFORMATION OF HEATING DEVICE IS REQUESTED

(3) DEVICE INFORMATION Elocal OF HEATING DEVICE IS TRANSMITTED

(2) DEVICE INFORMATION Elocal IS ACQUIRED

(4) RECIPE DATA OF COOKING TARGET IS READ

(5) LIST Gref[] OF ALL TEMPERATURE PROFILES INCLUDED IN RECIPE DATA IS OBTAINED

(6) HEATING MEDIUM INFORMATION IS REQUESTED

(8) HEATING MEDIUM INFORMATION Mlocal IS TRANSMITTED

(7) HEATING MEDIUM INFORMATION Mlocal IS ACQUIRED

《 REPEATED FOR EACH TEMPERATURE PROFILE Gref[i] 》

(9) HEATING MEDIUM INFORMATION Mref[i] AND TEMPERATURE MEASUREMENT POSITION Pref[i] REFERRED BY TEMPERATURE PROFILE Gref[i] IS OBTAINED FROM RECIPE DATA

(10) USING Elocal AND Mlocal, APPROPRIATE TEMPERATURE MEASUREMENT POSITION Plocal[i] CORRESPONDING TO Pref[i] AND CORRESPONDING SENSOR Slocal ARE DETERMINED

(11) Gref[i] IS CONVERTED TO CONFORM TO TEMPERATURE MEASUREMENT POSITION Plocal[i], TO OBTAIN TEMPERATURE PROFILE Glocal[i]

(12) HEATING COOKING IS STARTED

**DURING COOKING**

《 REPEATED FOR EVERY HEATING START IN EACH TEMPERATURE PROFILE Gref[i] ON RECIPE DATA 》

(13) TEMPERATURE PROFILE Glocal[i] IS TRANSMITTED, SENSOR Slocal IS DESIGNATED, AND HEATING START IS REQUESTED

(14) HEATING CONTROL IS STARTED IN ACCORDANCE WITH REQUEST

EP 4 502 470 A1

## FIG. 25

**PROCESSOR** — **HEATING DEVICE**

**BEFORE COCKING START**

(1) DEVICE INFORMATION OF HEATING DEVICE IS REQUESTED

(2) DEVICE INFORMATION Elocal IS ACQUIRED

(3) DEVICE INFORMATION Elocal OF HEATING DEVICE IS TRANSMITTED

(4) RECIPE DATA OF COOKING TARGET IS READ

(5) LIST Gref[] OF ALL TEMPERATURE PROFILES INCLUDED IN RECIPE DATA IS OBTAINED

(6) HEATING COOKING IS STARTED

**DURING COOKING**

≪ REPEATED FOR EVERY HEATING START IN EACH TEMPERATURE PROFILE Gref[i] ON RECIPE DATA ≫

(7) HEATING MEDIUM INFORMATION IS REQUESTED

(8) CURRENT HEATING MEDIUM INFORMATION Mlocal IS ACQUIRED

(9) HEATING MEDIUM INFORMATION Mlocal IS TRANSMITTED

(10) HEATING MEDIUM INFORMATION Mref[i] AND TEMPERATURE MEASUREMENT POSITION Pref[i] REFERRED BY TEMPERATURE PROFILE Gref[i] IS OBTAINED FROM RECIPE DATA

(11) USING Elocal AND Mlocal, APPROPRIATE TEMPERATURE MEASUREMENT POSITION Plocal[i] CORRESPONDING TO Pref[i] AND CORRESPONDING SENSOR Slocal ARE DETERMINED

(12) Gref[i] IS CONVERTED TO CONFORM TO TEMPERATURE MEASUREMENT POSITION Plocal[i], TO OBTAIN TEMPERATURE PROFILE Glocal[i]

(13) TEMPERATURE PROFILE Glocal[i] IS TRANSMITTED, SENSOR Slocal IS DESIGNATED, AND HEATING START IS REQUESTED

(14) HEATING CONTROL IS STARTED IN ACCORDANCE WITH REQUEST

EP 4 502 470 A1

# FIG. 26

FIG. 27

NODE TYPE    OPERATION    STATE MEASUREMENT    STATE DETERMINATION

EP 4 502 470 A1

# FIG. 28

n21 t0 → n22 PUTTING OF INGREDIENT A WEIGHT=Wa → n23 HEATING START TEMPERATURE PROFILE=P → n24 t1 → n25 t2 → n26 Cv(t1→t2) ≥X

n26 → n27 PUTTING OF INGREDIENT B WEIGHT=Wb
n26 → n28 PUTTING OF INGREDIENT C WEIGHT=Wc

n27, n28 → n29 STIRRING START ACTION PATTERN=M SPEED=V → n30 y → n31 MOISTURE CONTENT y ≤Y → n32 STIRRING END

- n22: Wa=0.04S @S=500g
- n23: P=TIME-SERIES GRAPH @HEATING SURFACE OF INGREDIENT A
- n26: X=500 @CORE PORTION OF INGREDIENT A
- n27: Wb=0.6S @S=500g
- n28: Wc=0.1S @S=500g
- n29: M=CONSTANT SPEED ROTATION SPEED=20rpm
- n31: Y=80% @INGREDIENTS A+B+C

EP 4 502 470 A1

FIG. 29

# FIG. 30

# FIG. 31

START OF PROCESSING AT
TIME OF RECORDING COOKING

MEASURE ENVIRONMENTAL
TEMPERATURE    S101

WITHIN
ALLOWABLE
VALUE?    S102    NO → ADJUST ROOM TEMPERATURE    S103

YES

START COOKING    S104

RECORD ENVIRONMENTAL
TEMPERATURE    S105

END

# FIG. 32

```
       ┌──────────────────────────────────────┐
       │      START OF PROCESSING AT           │
       │ TIME OF REPRODUCTION COOKING          │
       └──────────────────────────────────────┘
                        │
                        ▼
       ┌──────────────────────────┐ S121
       │ MEASURE ENVIRONMENTAL     │
       │      TEMPERATURE          │
       └──────────────────────────┘
                        │
                        ▼
                    ◇ S122
         IS DIFFERENCE
   YES   BETWEEN WITH RECORDING
         WITHIN ALLOWABLE
         RANGE?
                        │ NO
                        ▼
                    ◇ S123                          ┌──────────────────┐ S124
         IS AIR CONDITIONING          YES           │  ADJUST ROOM     │
         ADJUSTMENT POSSIBLE? ───────────────────►   │  TEMPERATURE     │
                        │ NO                         └──────────────────┘
                        ▼
       ┌──────────────────────────┐ S125
       │    CORRECT RECIPE         │
       └──────────────────────────┘
                        │
                        ▼
       ┌──────────────────────────┐ S126
       │    START COOKING          │
       └──────────────────────────┘
                        │
                        ▼
       ┌──────────────────────────┐ S127
       │ RECORD ENVIRONMENTAL      │
       │      TEMPERATURE          │
       └──────────────────────────┘
                        │
                        ▼
                    (  END  )
```

# FIG. 33

# FIG. 34

# FIG. 35

## FIG. 36

# FIG. 37

# FIG. 38

START OF PROCESSING AT
TIME OF RECORDING COOKING

ADJUST POSITIONAL RELATIONSHIP BETWEEN
FIXING PORTION AND POT SIDE SURFACE | S151

IS VALUE OF
LOAD SENSOR WITHIN
REFERENCE VALUE? | S152

NO

YES

RESET VALUE OF LOAD SENSOR | S153

START COOKING | S154

RECORD STRESS DURING STIRRING | S155

END

# FIG. 39

START OF PROCESSING AT
TIME OF REPRODUCTION COOKING

ADJUST POSITIONAL RELATIONSHIP BETWEEN
FIXING PORTION AND POT SIDE SURFACE — S161

IS VALUE OF
LOAD SENSOR WITHIN
REFERENCE VALUE? — S162

NO

YES

RESET VALUE OF LOAD SENSOR — S163

START COOKING — S164

PRESENT TEMPORAL CHANGE OF STRESS
DURING RECORDING — S165

END

## FIG. 40

EP 4 502 470 A1

## INTERNATIONAL SEARCH REPORT

| International application No. |
| --- |
| **PCT/JP2023/010532** |

### A. CLASSIFICATION OF SUBJECT MATTER

***F24C 7/04*** (2021.01)i; ***H05B 6/12*** (2006.01)i
FI:   F24C7/04 301A; H05B6/12 313

According to International Patent Classification (IPC) or to both national classification and IPC

### B. FIELDS SEARCHED

Minimum documentation searched (classification system followed by classification symbols)

F24C1/00-15/36; H05B6/12; A47J27/00-27/64; A47J43/00-44/02; G06Q50/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 11-187824 A (VICTOR CO OF JAPAN LTD) 13 July 1999 (1999-07-13) paragraphs [0008]-[0042], fig. 1-7 | 1-4, 15-16, 21-22 |
| Y | | 5-14, 17-20 |
| A | | 23-29 |
| Y | JP 2021-128045 A (PANASONIC INTELLECTUAL PROPERTY CORPORATION OF AMERICA) 02 September 2021 (2021-09-02) paragraphs [0030]-[0352], fig. 1-35 | 5-12, 19 |
| Y | JP 2021-64513 A (TANICA DENKI HANBAI KK) 22 April 2021 (2021-04-22) paragraphs [0022]-[0025] | 5-12, 19 |
| Y | JP 2019-20981 A (FUJITSU LTD) 07 February 2019 (2019-02-07) paragraphs [0057], [0082], [0087]-[0089], fig. 9A-9B | 5-12, 19 |
| Y | JP 2019-509454 A (MEYER INTELLECTUAL PROPERTIES LIMITED) 04 April 2019 (2019-04-04) fig. 6 | 12 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 May 2023** | **30 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/010532** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2006-329455 A (TOSHIBA CORP) 07 December 2006 (2006-12-07) paragraphs [0010]-[0066], fig. 1-21 | 23-25, 28-29 |
| Y | | 13, 26-27 |
| Y | JP 2007-222314 A (MIURA CO LTD) 06 September 2007 (2007-09-06) paragraphs [0030]-[0034] | 14 |
| Y | WO 2020/179407 A1 (SONY CORP) 10 September 2020 (2020-09-10) paragraphs [0004]-[0006], [0437]-[0447] | 17-18 |
| Y | JP 2005-038741 A (ZOJIRUSHI CORP) 10 February 2005 (2005-02-10) paragraphs [0025]-[0030], fig. 1 | 20 |
| Y | JP 2007-141471 A (AIGI SANGYO KK) 07 June 2007 (2007-06-07) paragraphs [0025], [0030]-[0033], fig. 4 | 20 |
| Y | US 2015/0371164 A1 (INTERNATIONAL BUSINESS MACHINES CORPORATION) 24 December 2015 (2015-12-24) paragraph [0034], fig. 4 | 26-27 |
| Y | WO 2021/220603 A1 (COOKPAD INC) 04 November 2021 (2021-11-04) paragraphs [0025]-[0027], fig. 2 | 26-27 |
| A | JP 2005-504259 A (ZHANG, Xiaolin) 10 February 2005 (2005-02-10) | 1-29 |

Form PCT/ISA/210 (second sheet) (January 2015)

## INTERNATIONAL SEARCH REPORT
### Information on patent family members

International application No.

**PCT/JP2023/010532**

| Patent document cited in search report | | | Publication date (day/month/year) | Patent family member(s) | Publication date (day/month/year) |
|---|---|---|---|---|---|
| JP | 11-187824 | A | 13 July 1999 | (Family: none) | |
| JP | 2021-128045 | A | 02 September 2021 | (Family: none) | |
| JP | 2021-64513 | A | 22 April 2021 | (Family: none) | |
| JP | 2019-20981 | A | 07 February 2019 | (Family: none) | |
| JP | 2019-509454 | A | 04 April 2019 | US 2017/0238751 A1 fig. 6<br>CA 3015304 A1<br>AU 2017220002 A<br>SG 11201806971Q A<br>EP 3416527 A1<br>KR 10-2019-0057202 A<br>WO 2017/143146 A1 | |
| JP | 2006-329455 | A | 07 December 2006 | (Family: none) | |
| JP | 2007-222314 | A | 06 September 2007 | (Family: none) | |
| WO | 2020/179407 | A1 | 10 September 2020 | US 2022/0091586 A1 paragraphs [0005]-[0007], [0518]-[0531] | |
| JP | 2005-038741 | A | 10 February 2005 | (Family: none) | |
| JP | 2007-141471 | A | 07 June 2007 | (Family: none) | |
| US | 2015/0371164 | A1 | 24 December 2015 | WO 2015/088978 A1 | |
| WO | 2021/220603 | A1 | 04 November 2021 | (Family: none) | |
| JP | 2005-504259 | A | 10 February 2005 | US 2004/0172380 A1<br>WO 2003/029959 A1<br>CN 1409212 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010192274 A
- JP 2021064513 A
- JP 2021168046 A

- JP 2022048036 A
- JP 2020161384 A
- WO 2020179407 A

**Non-patent literature cited in the description**

- Food Engineering Dictionary Useful for Food Production. 01 December 2020